(19) **Europäisches Patentamt**

**European Patent Office**

**Office européen des brevets**

(11) **EP 0 746 851 B1**

(12) **EUROPEAN PATENT SPECIFICATION**

(45) Date of publication and mention
of the grant of the patent:
**14.05.2003 Bulletin 2003/20**

(51) Int Cl.⁷: **G11B 15/18**, G11B 15/22,
H04N 7/08, H04N 7/087,
H04N 7/167, H04N 7/173,
H04N 5/78, H04N 5/50,
G04G 7/00

(21) Application number: **94906529.6**

(22) Date of filing: **05.01.1994**

(86) International application number:
**PCT/US94/00173**

(87) International publication number:
**WO 94/016441 (21.07.1994 Gazette 1994/17)**

(54) **ENHANCING OPERATIONS OF VIDEO TAPE CASSETTE PLAYERS**

VERBESSERUNG DER FUNKTIONEN VON VIDEORECORDERN

PERFECTIONNEMENT DU FONCTIONNEMENT DE LECTEURS DE CASSETTE VIDEO

(84) Designated Contracting States:
**BE DE DK ES FR GB IT NL**

(30) Priority: **05.01.1993 US 1125**
**08.02.1993 US 14541**

(43) Date of publication of application:
**11.12.1996 Bulletin 1996/50**

(73) Proprietor: **Index Systems, Inc.**
**Tortola, British Virgin Islands (VG)**

(72) Inventors:
• **Kwoh, Daniel S.**
**La Canada/Flintridge, California 91011 (US)**
• **Mankowitz, Roy J.**
**Encino, California 91316 (US)**
• **Yuen, Henry C.**
**Redondo Beach, California 90278 (US)**
• **Ngai, Hing Y.**
**Rancho Palas Verdes, California 90274 (US)**
• **Hindman, Carl**
**Rancho Palas Verde, California 90732 (US)**

(74) Representative:
**Ninnemann, Detlef, Dipl.-Ing. et al**
**Patentanwälte Maikowski & Ninnemann,**
**Postfach 15 09 20**
**10671 Berlin (DE)**

(56) References cited:
EP-A- 0 363 653        EP-A- 0 424 653
EP-A- 0 424 656        EP-A- 0 485 740
EP-A- 0 545 727        WO-A-92/04801
WO-A-93/04473          JP-A- 3 125 380
US-A- 4 338 644        US-A- 4 390 901
US-A- 4 426 684        US-A- 4 516 164
US-A- 4 635 121        US-A- 4 703 465
US-A- 4 706 121        US-A- 4 755 888
US-A- 4 890 171        US-A- 4 908 707
US-A- 4 908 859        US-A- 4 965 827
US-A- 4 977 455        US-A- 4 989 104
US-A- 4 993 003        US-A- 5 047 867
US-A- 5 161 019        US-A- 5 164 831
US-A- 5 172 363        US-A- 5 179 479
US-A- 5 200 823        US-A- 5 228 014

• "DAS VIDEO-ARCHIV IST EINGEBAUT"
FUNKSCHAU, vol. 63, no. 10, 3 May 1991, pages
54-56, XP000229384 MUNCHEN, DE
• "MEASURES RELATING TO AUDIO OR VIDEO
RECORDERS" RESEARCH DISCLOSURE, no.
335, 1 March 1992, page 201 XP000301101
EMSWORTH, GB

**Description**

**Field Of The Invention**

In one aspect, this invention is related to means and method for facilitating management, storage and retrieval of programs on a cassette of magnetic tape. In another aspect, this invention is related to maintaining current information about a tape in a magnetic tape cassette and more particularly to maintaining current information about such a tape using a magnetic tape reader/recorder, and magnetic tape cassettes therefor.

**Background Of The Invention**

Two general methods for long term mass storage of data are known; random access and sequential access. The random access method uses long playing (LP) record players, compact disc (CD) drives and video disc drives for consumer use, and hard disc drives, floppy disc drives and optical disc drives for use with computers. In all, information is accessed at random by moving a playing head directly over the desired playing area of the stored media.

A. Problems With Serial Storage Devices

In the sequential method, stored information can only be accessed sequentially. The sequential method uses audio tape drives, video tape drives and digital audio tape drives for general consumer use and digital tape drives and tape backup cassette drives for use with computers and analog tape drives for instrumentation purposes. All of these devices use magnetic tape as the stored media. The big advantage of tape drives is low cost compared with random access devices. The disadvantages and problems of using magnetic tape are three-fold.

1. To go to a particular location on tape, the tape must be either advanced or rewound in a serial or sequential manner. Unless forward or reverse operations can be performed at very high speed, this can be a time consuming process.
2. The exact contents and location of records on the tape are not known. Random access devices can record (usually at the outermost tracks) an index of the content at the beginning of the disc and anytime the index information needs to be accessed, the read or write head simply skips over to read the index. For magnetic tape, even if the index is recorded in a reserved area at the beginning of the tape, as is presently done in some video tape or computer tape backup systems, its usefulness is limited, due to the time required to rewind the tape all the way to the beginning, assuming the tape is not at the beginning when the need arises to search for the index. Owners of large numbers of tapes desire to place titles on the tapes to enable rapid identification of the program thereon. Usually titling is done by hand writing a title on a label on the tape or its box. However, the tape can become separated from the box, or the label may fall off. Some tape owners repeatedly record over the same tape and prefer not to use permanent labels. Computer tapes may contain hundreds of records or files and handwriting or updating the index onto the box is not practical.
3. The absolute current location of the tape is not known. Most tape drives have tape counters which only indicate relative location. For example, if a tape cassette is played and then removed from a tape drive without rewinding, the next time the cassette is inserted and played by a tape drive, the absolute location of the tape in the cassette will no longer be known. Attempts have been made to overcome this problem by writing absolute address marks onto the tape. For example, some recent video tapes use the VHS Address Search System (VASS) whereby absolute address marks are written at 1 minute intervals onto the control track of a VHS tape. In computer backup of hard discs by tape, the streaming mode is usually used where a constant stream of data blocks (usually 512 bytes) are written onto the tape, each block being usually preceded by one or two address bytes. Thus, absolute addressing is available but not yet universally used on tape.

Knowing the absolute address is important. For example, assume that there are 5 programs (or records) on a tape and each of their starting addresses is known and a user desires to go to the starting location of program 4. Without knowing the absolute address of where the tape is currently positioned, the user or the drive has no way of knowing whether to rewind or fast forward the tape to reach the desired record.

In order for tape drives to compete against random access devices it is important that these three problems be either overcome or ameliorated.

B. Providing Program Titles

Placing a descriptive title on the tape presents another problem. Video titling is usually known and recorded on a leader portion of the tape. Ordinarily, the title is computer-generated and recorded in a sequence of regular video frames, rather than on the control track. If multiple copies of the tape are made, the quality of the title drops off drastically. Also, the title cannot be conveniently edited without re-recording the sequence of frames. Prior art systems for applying such titles are either expensive or cumbersome. Professional video titling systems include the well-known Chyron system and many others. Typically these systems include a complete computer, a complex, high-resolution character generator, a special effects generator for making shadows, italics and other effects, and a video interface to generate a video signal. Such systems are too expensive and complicated for the home video market.

Some videocassette recorders (VCRs) and camcorders are equipped with simple character generators for displaying simple block letters and numbers, either superimposed over a recorded video signal or recorded and mixed with the picture signal. A typical camcorder application is adding characters representing the recording date and time to a video signal as it is being recorded, thereby adding a "date stamp." In VCRs, the character generator can be used to show programming information such as channel, date, and time on screen as the VCR is being programmed to record programs at a future date. However, currently there is no simple way to use the VCR character generator as a titling device.

In "Recommended Practice For Line 21 Data Services, Part Seven, Extended Data Service Packets", Draft EIA-608, October 12, 1992, there is suggestion of using VBI line 21, field 2 to send information such as program fide and type along with the broadcast program. Yet, the possible use of such information for facilitating operation of a videocassette recorder, such as providing a title for a recorded program, is never suggested.

C. Title Editing

Another problem with prior art tiding systems is data input and editing. With Chyron systems, a full-size typewriter-style keyboard is used which is inappropriate for home use and slow for poor typists. Editing of a title is impractical with most home-generated titles, because the title is recorded as a video image on the tape. Thus, the prior art fails to provide a convenient means for generating, storing, and editing video titles for use with sequentially-stored magnetic tape. Users of home video equipment would likewise appreciate a system using internal character-generator hardware and VCR remote controls, thereby precluding the need for complex or expensive hardware to generate tides.

The closest prior art is considered to be disclosed in " DAS VIDEO-ARCHIV IST EINGEBAUT", Funkschau, vol. 63, no.10, 3 May 1991 pages 54-56, XP000229384 München DE. This article describes a video recorder system that builds a directory with contents of a plurality of tapes in a RAM. Backing up the directory is not disclosed. EP-A 0 363 652 discloses a video recorder that builds a directory of an inserted tape. The directory of that tape is thereafter recorded on the tape.

## Summary of the Invention

The invention provides a method as defined in the appended claims.

## Brief Description of the Drawings

FIG. 1 is a block diagram illustrating an indexing video cassette recorder, using a hybrid indexing system that provides indexing of recorded programs for home recorded tapes, prerecorded tapes, and retroactively indexed tapes, and a standard video cassette format, and that has a directory controller, a bus interface, and an output interface.

FIG. 2 is a schematic conceptually illustrating a structure of data stored in the RAM of the directory controller of FIG. 1.

FIG. 3 is a schematic illustrating a conceptual structure of an in-use directory in the data structure of FIG. 2.

FIG. 4 is a graphical representation of the format of the information recorded on the magnetic tape in the cassette of FIG. 1 with markers and directories in the control track.

FIG. 5 is a graphical representation of the format of the information recorded on the magnetic tape in the cassette of FIG. 1 with markers in the control track and the directories in the fields of the video frames.

FIG. 6 is a block diagram illustrating the microprocessor controller of FIG. 1

FIG. 7 is a block diagram illustrating the microprocessor controller of FIG. 1 and its interfaces for implementing another specific implementation of the microprocessor controller 31.

FIG. 8 is a timing diagram showing the format of the line 21 field 2 video signal in the vertical blanking interval of a typical video signal.

FIG. 9 illustrates a VBI decoder for decoding both broadcast signals and recorded signals.

FIG. 10a is a timing diagram showing modification of the synchronization pulse recorded on the control track of a video tape for encoding a directory thereon.

FIG. 10b is a timing diagram showing the synchronization pulses recorded on the control track when a binary bit "0" is to be written at one time instant (one frame) and a binary bit "1" is written at another time instant (another frame).

FIG. 10e is a timing diagram showing the timing of the current of opposite polarity through the coil of the control head.

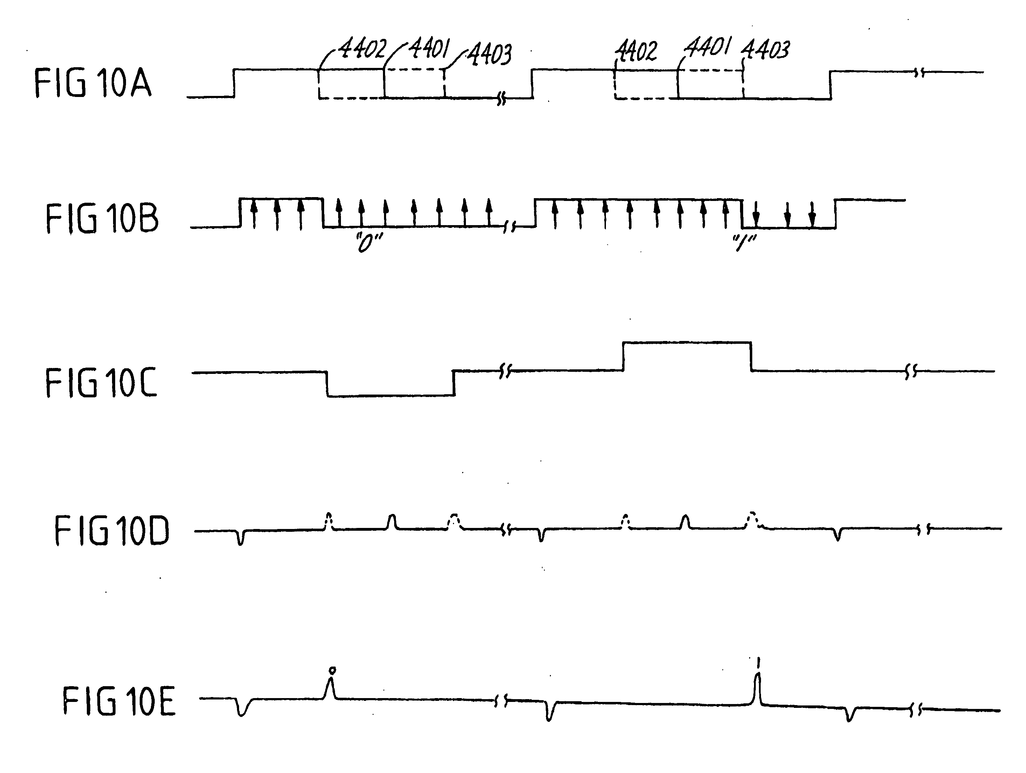

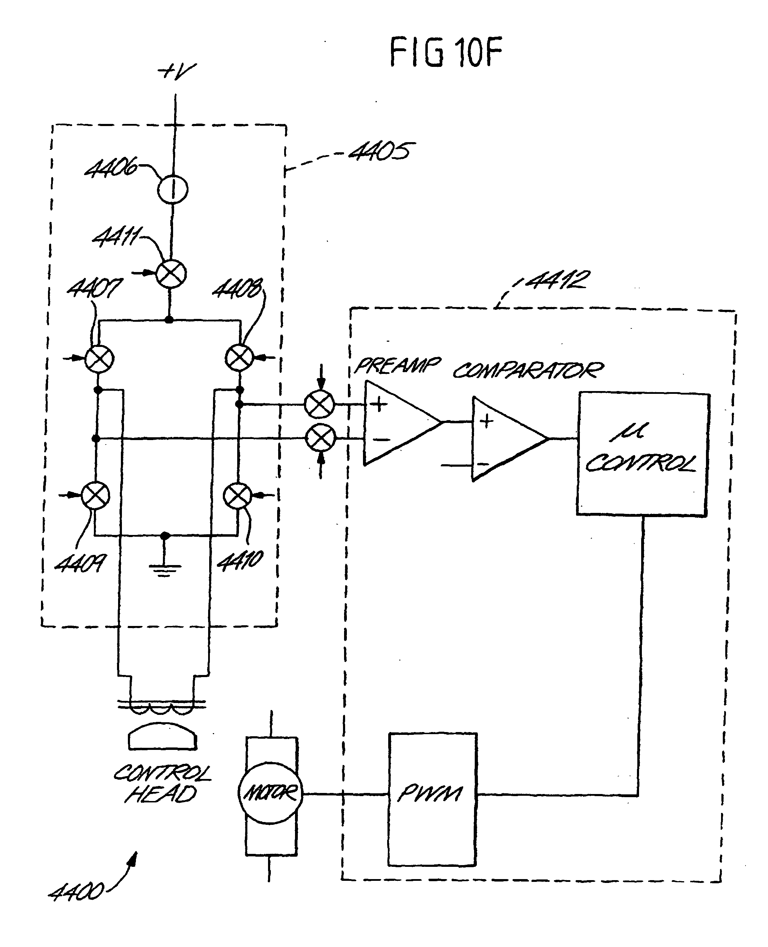

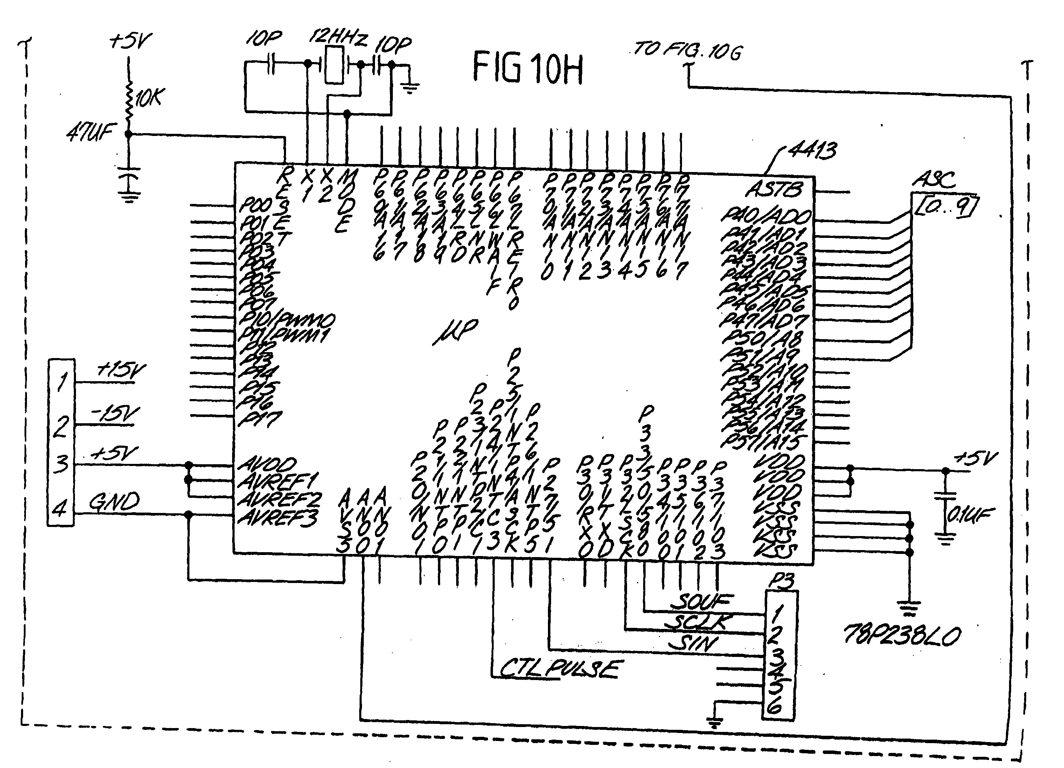

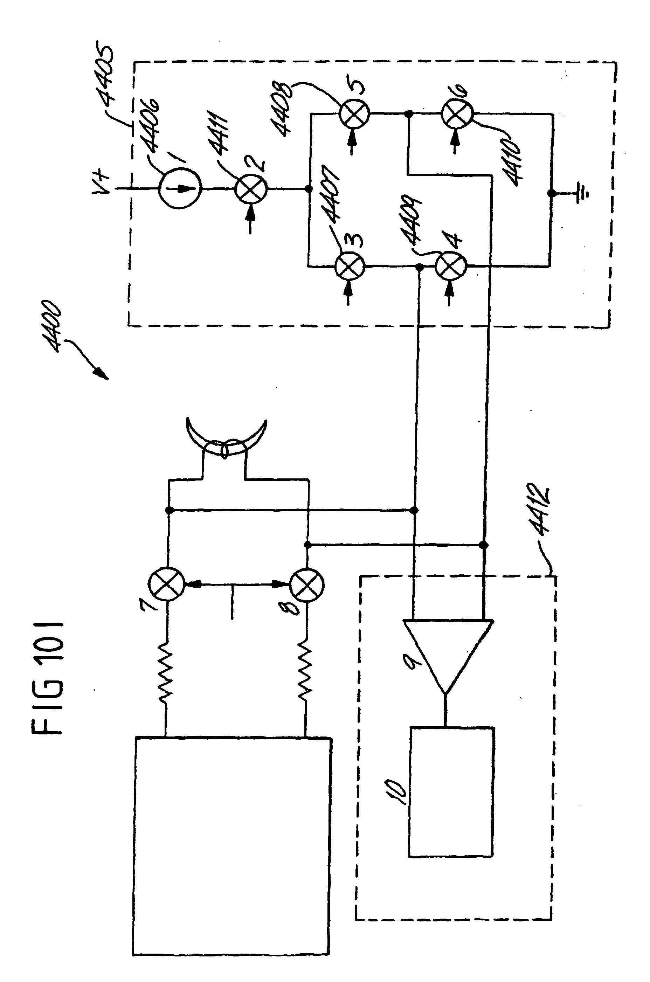

FIG. 10d is a timing diagram showing the head signals generated by the control pulse edge detector shown in FIG. 10f.

FIG. 10e is a timing diagram showing the head signals generated by the control pulse edge detector shown in FIG. 10f in response to the current flow shown in FIG. 10c.

FIG. 10f is a block diagram of a circuit 4400 for controlling the reading and writing of encoded data signals on the control track.

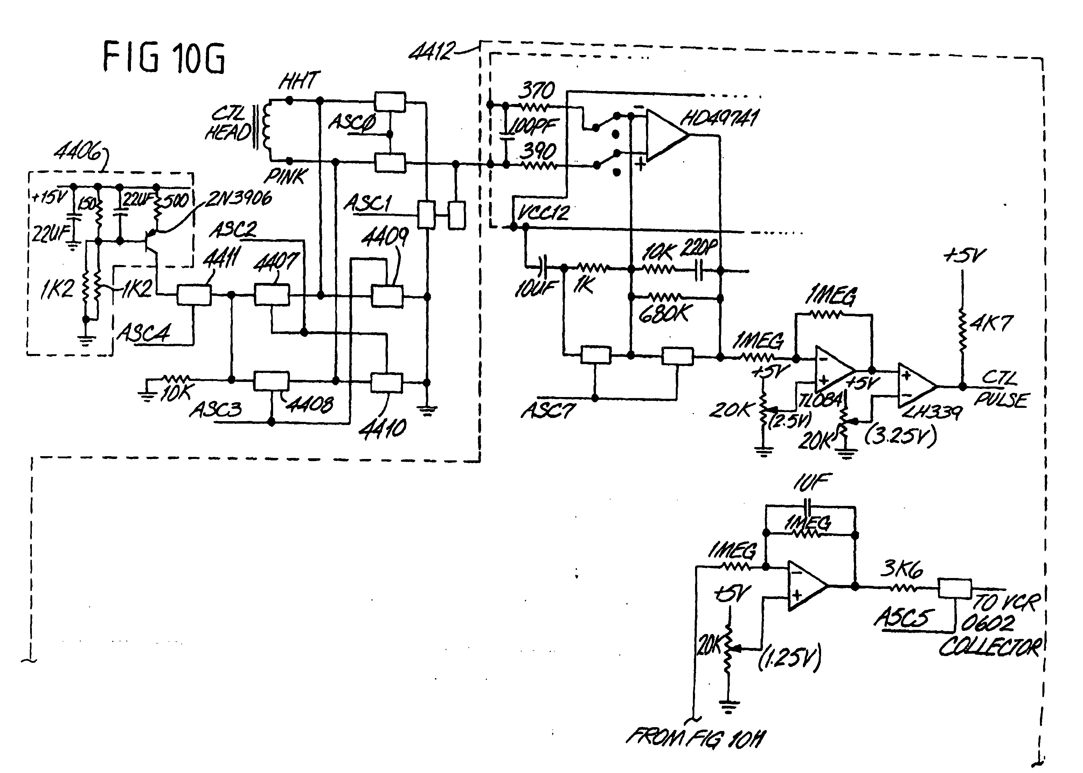

Figs. 10g-10h is a detailed schematic of the circuit of FIG. 10f.

FIG. 10i is a block diagram for an alternate embodiment of the circuit for encoding and decoding data on the control track shown in FIG. 10f.

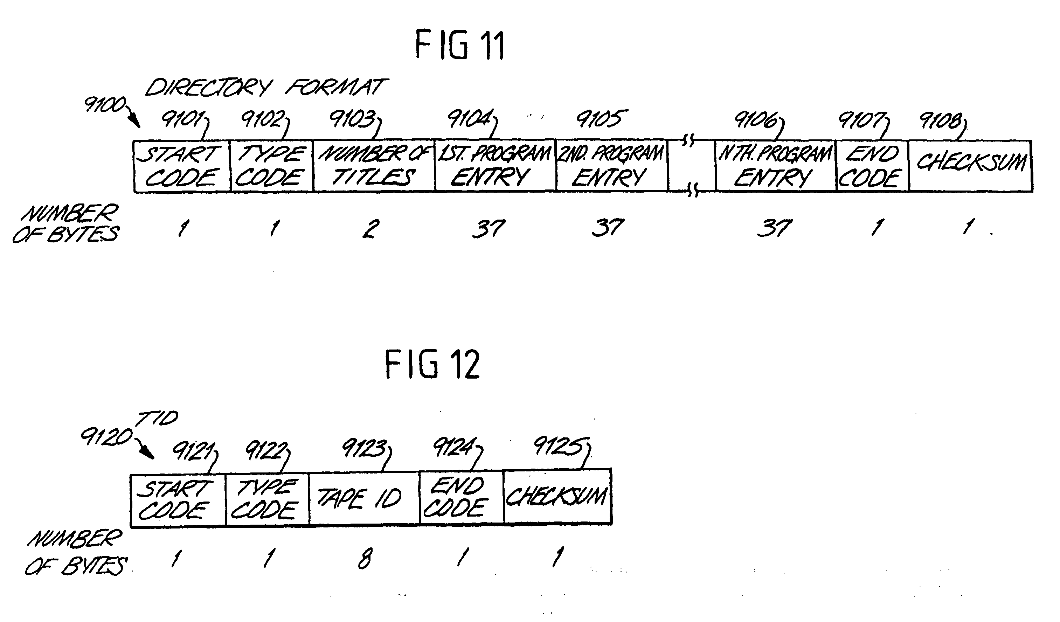

FIG. 11 is a schematic view showing the data format for the directory recorded on pre-recorded tapes.

FIG. 12 is a schematic view showing the data packet format for the tape identification number (TID).

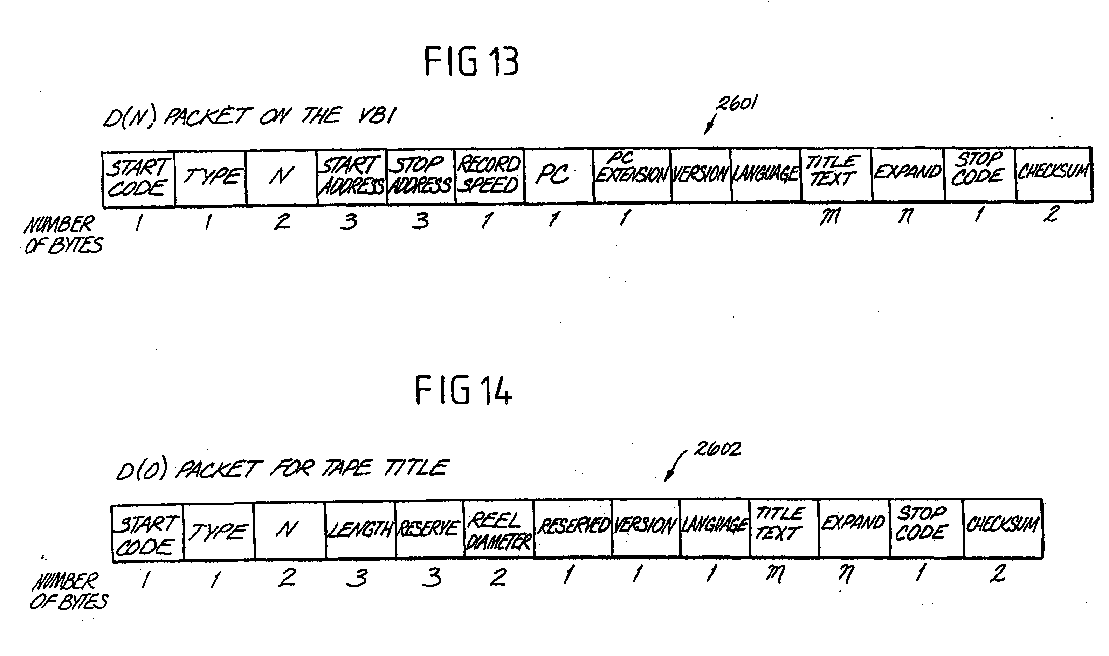

FIG. 13 is a schematic view showing the format for another embodiment of the directory packet recorded in the VBI for prerecorded tapes.

FIG. 14 is a schematic view showing the format for another embodiment of the directory packet D(0) for the tape title recorded in the VBI for prerecorded tapes.

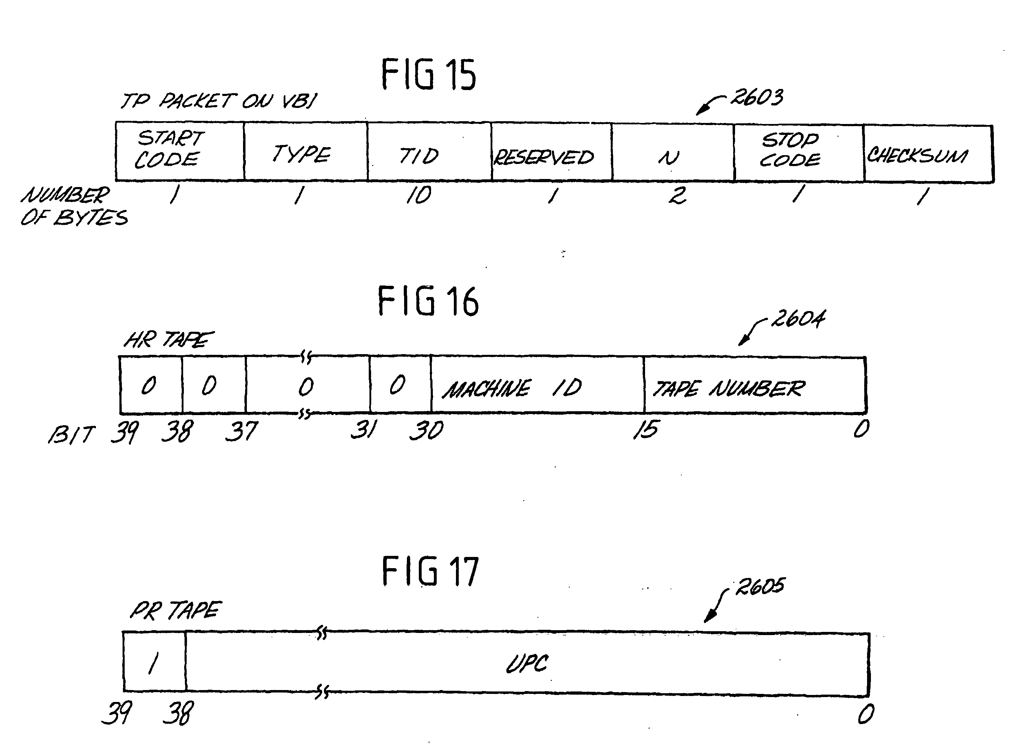

FIG. 15 is a schematic view showing the format for another embodiment of a TP packet recorded on the VBI for HR tapes and PR tapes.

FIG. 16 is a schematic diagram showing the format for another embodiment of a TID for an HR tape.

FIG. 17 is a schematic diagram showing the format for another embodiment of a TID for a PR tape.

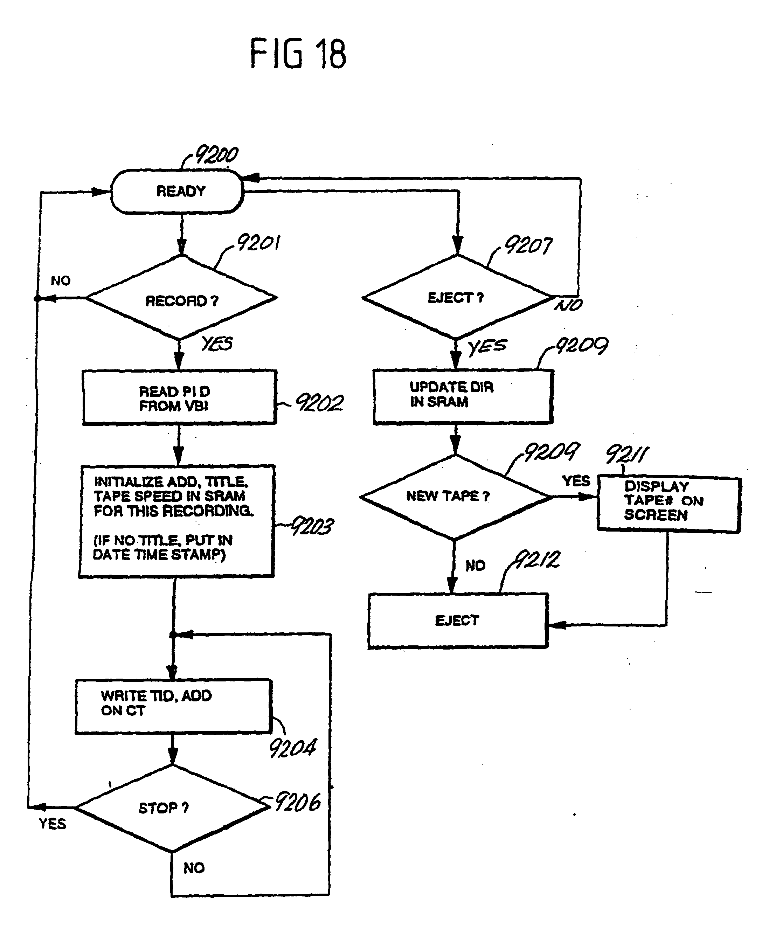

FIG. 18 is a flow chart showing the steps employed in the operation of an indexing VCR using a FMAS addressing system for writing a tape identification number, an address, and a directory to a home recorded tape (HR tape) during recording or ejection.

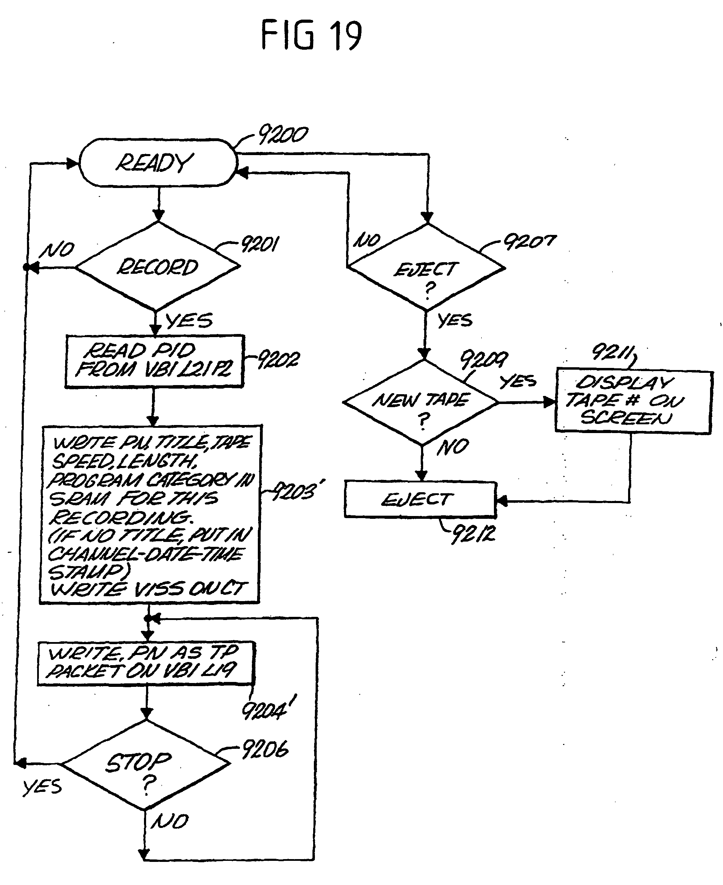

FIG. 19 is a flow chart showing the steps employed in the operation of an indexing VCR using a VISS PLUS TP addressing system of writing a tape identification and a program number to a home recorded tape (HR tape) during recording.

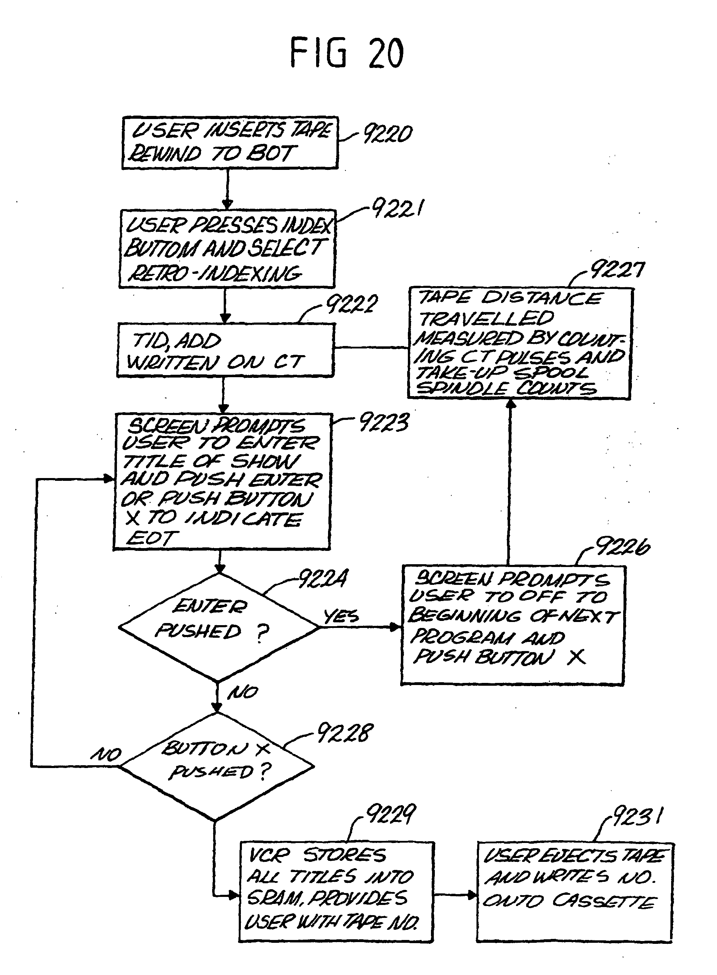

FIG. 20 is a flow chart showing the steps employed to write a tape identification, an absolute address and a directory to create a retroactively indexed tapes by an indexing VCR using a FMAS or LRAS addressing system.

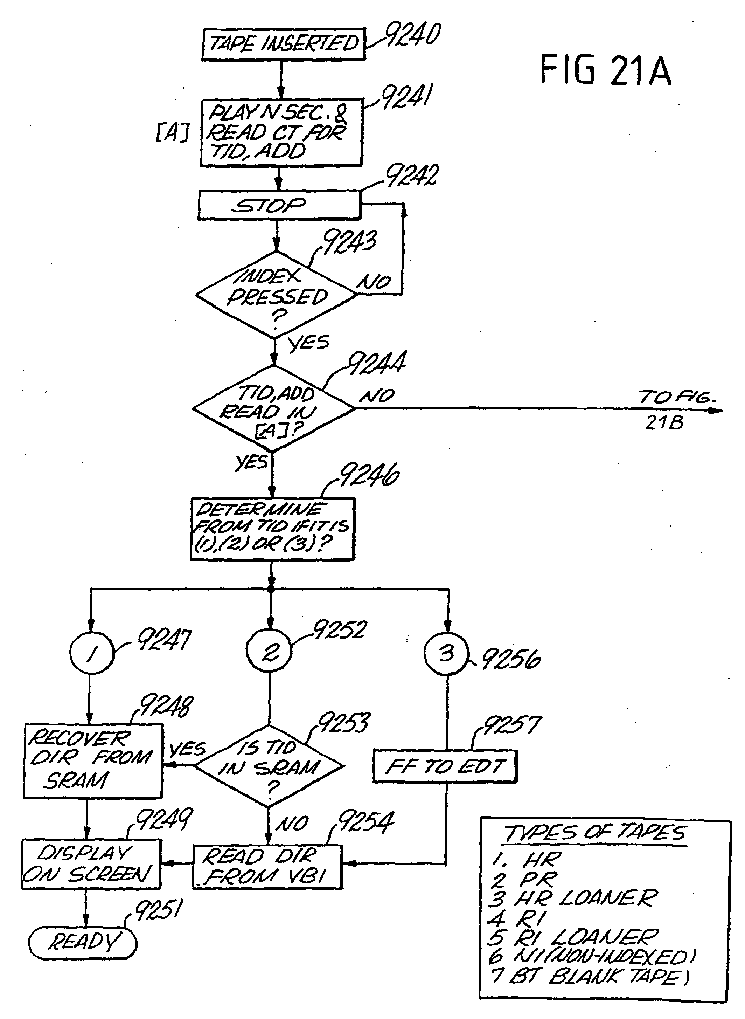

FIGS. 21a-21b are flow charts showing the steps employed in the operation of the indexing VCR using a FMAS addressing system when a tape is inserted therein.

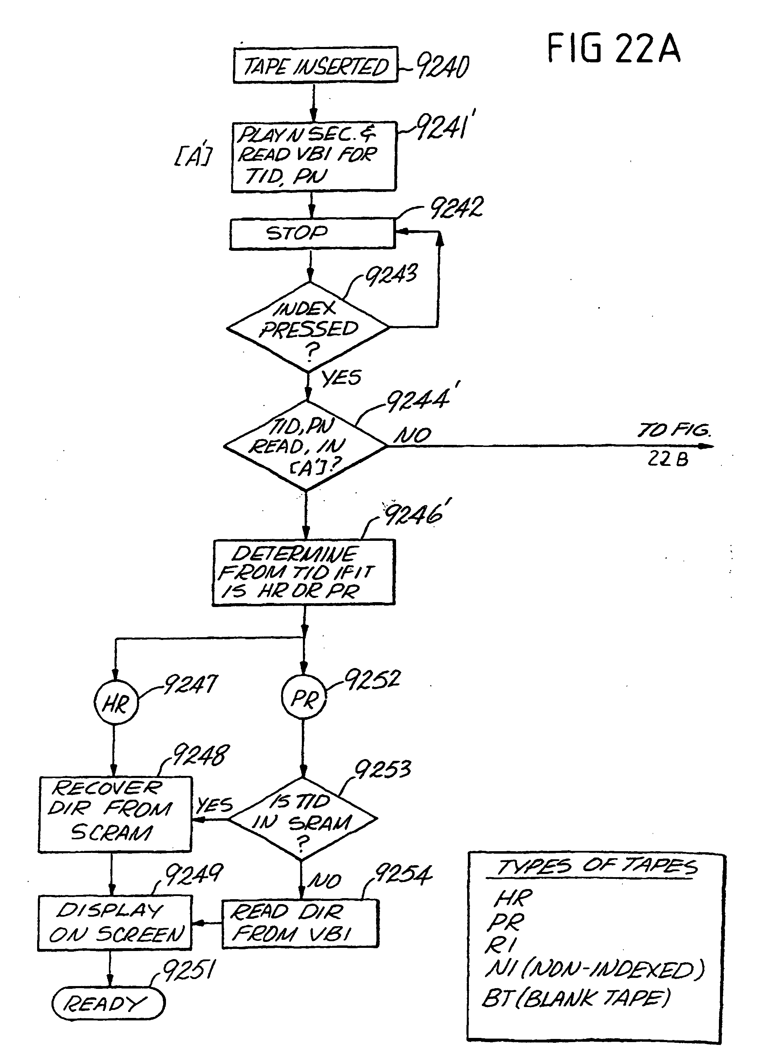

FIGS. 22a-22b are flow charts showing the steps employed in the operation of the indexing VCR, using the VISS PLUS TP addressing system, when a tape is inserted therein.

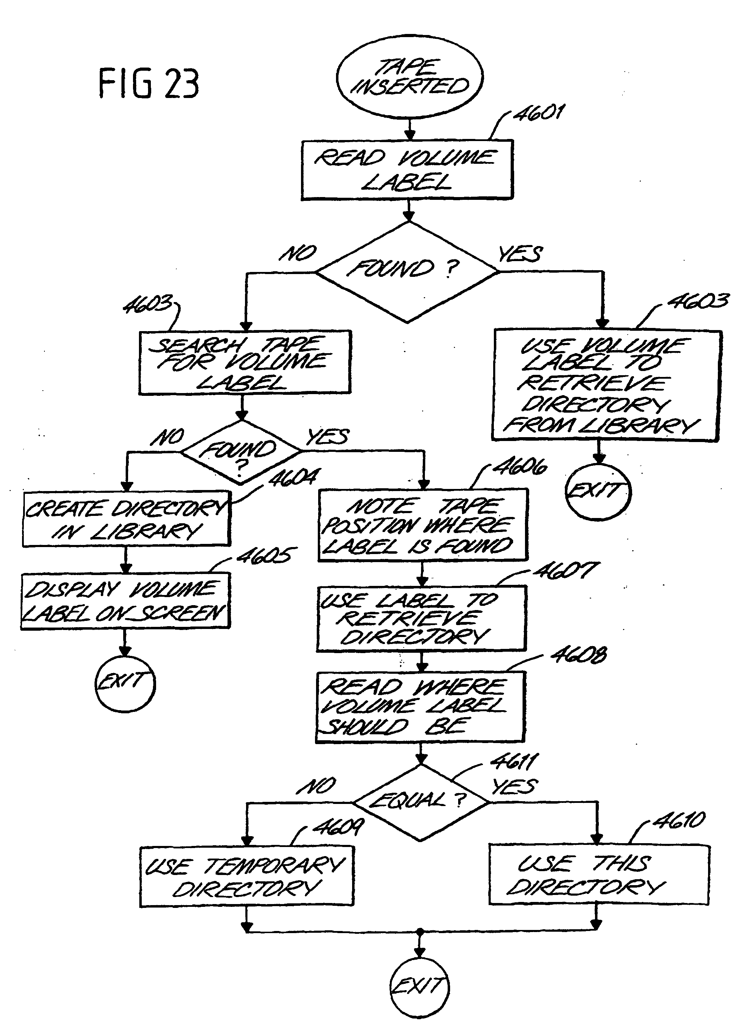

FIG. 23 is a flow chart showing the steps employed in storing a directory in a library.

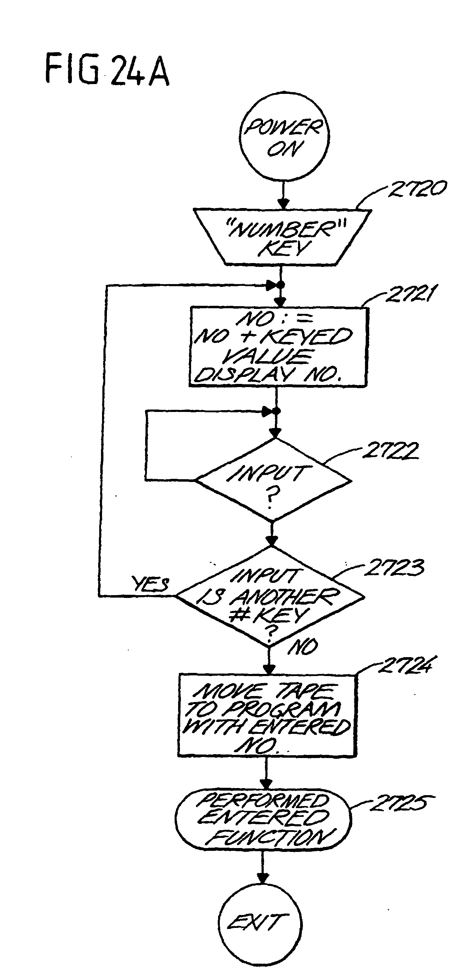

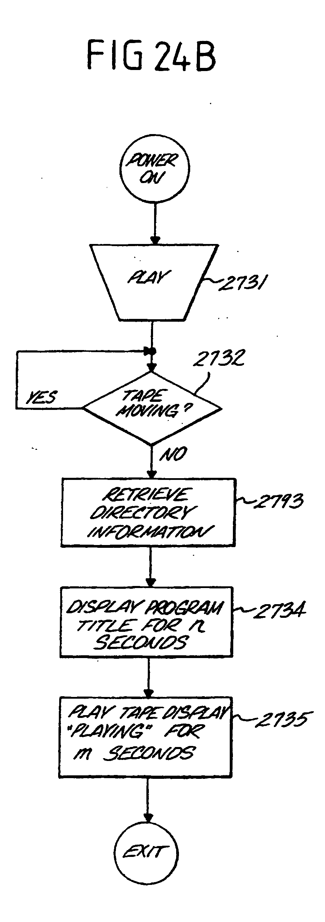

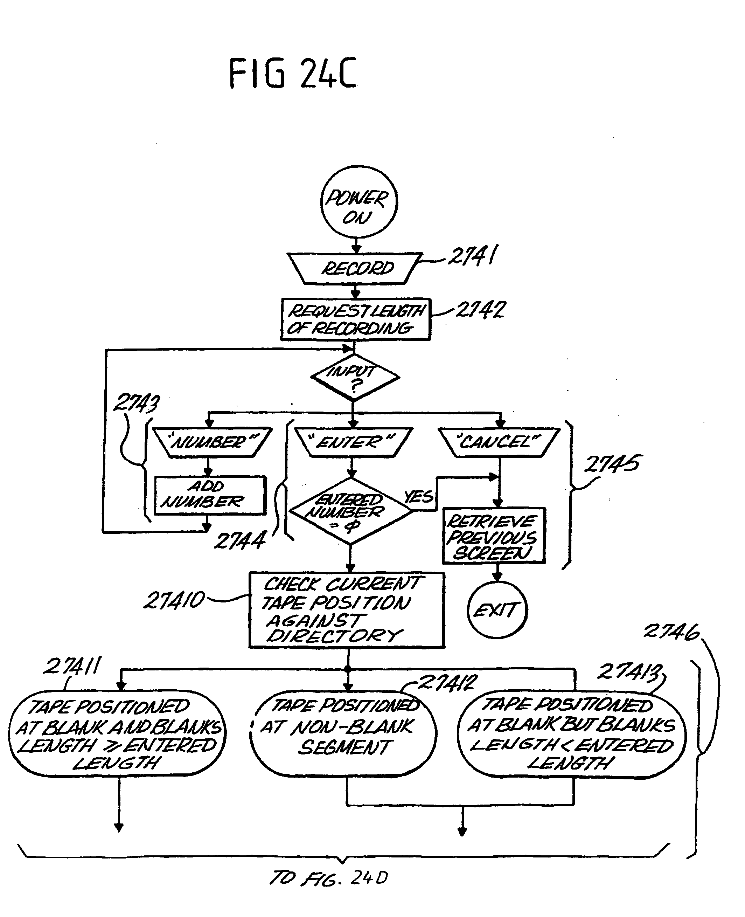

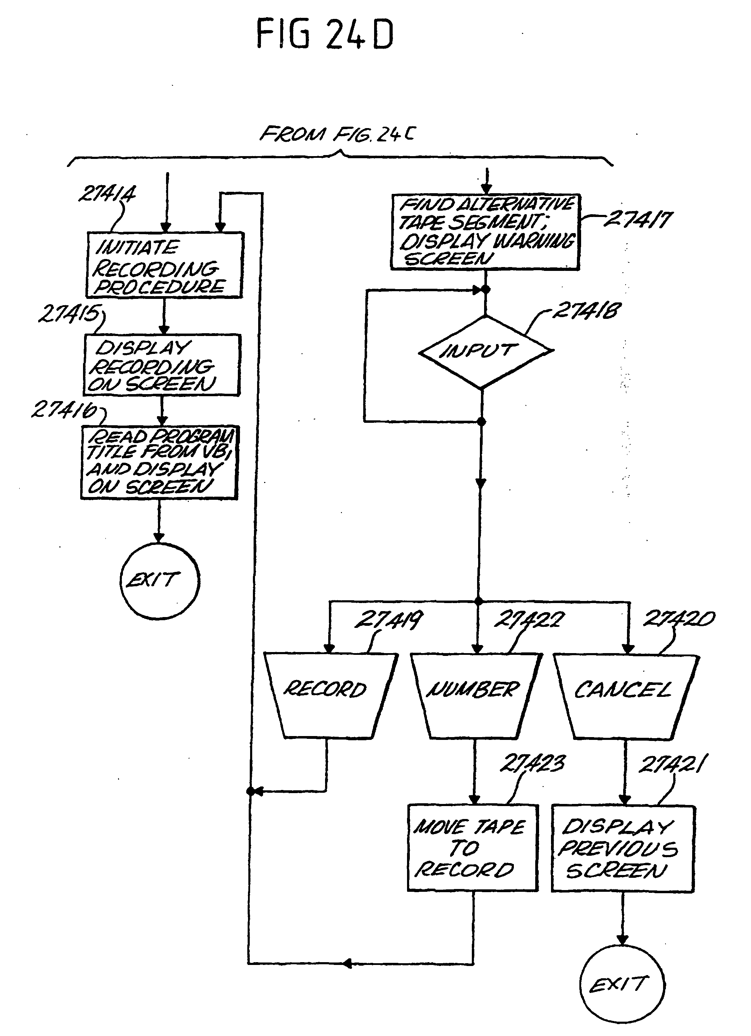

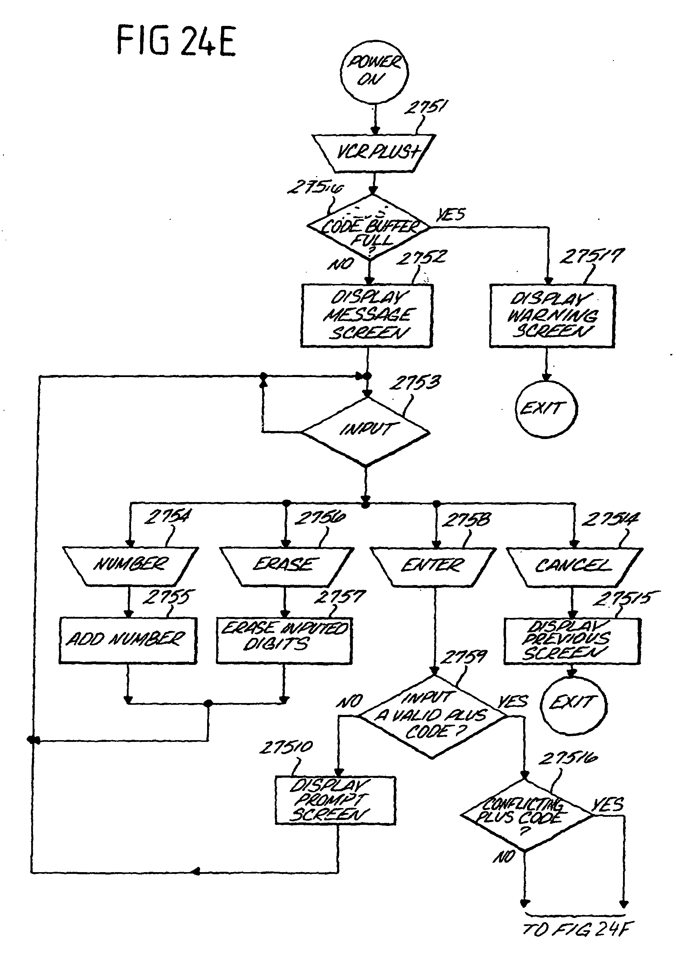

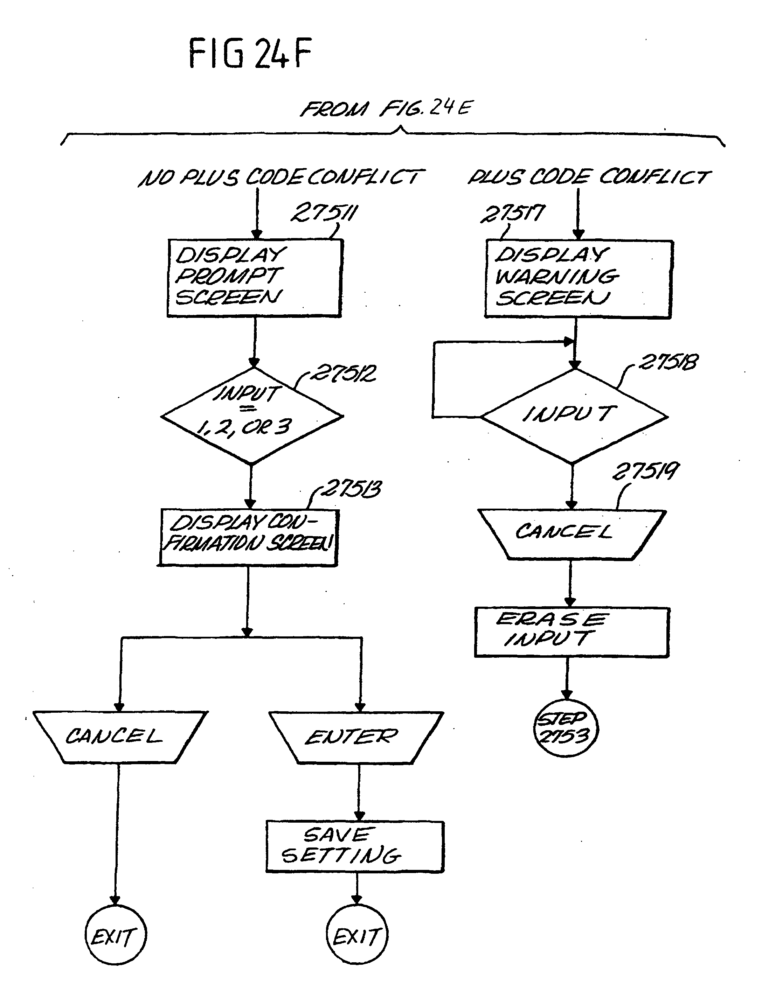

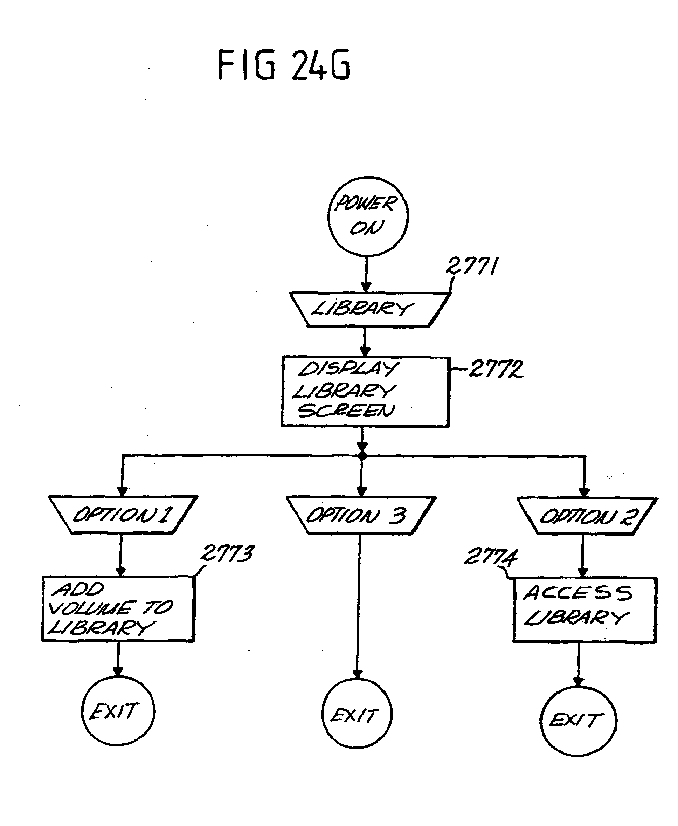

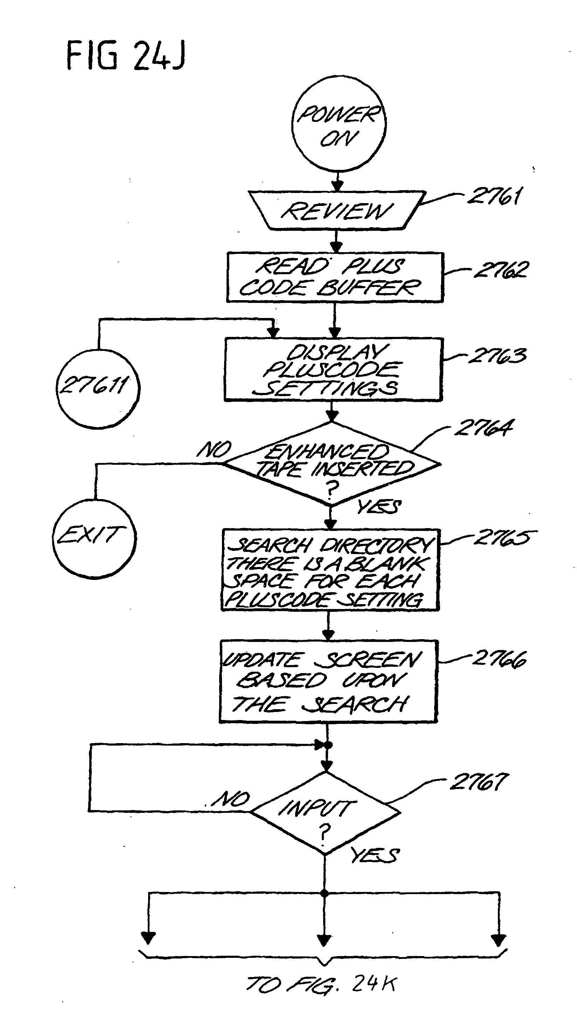

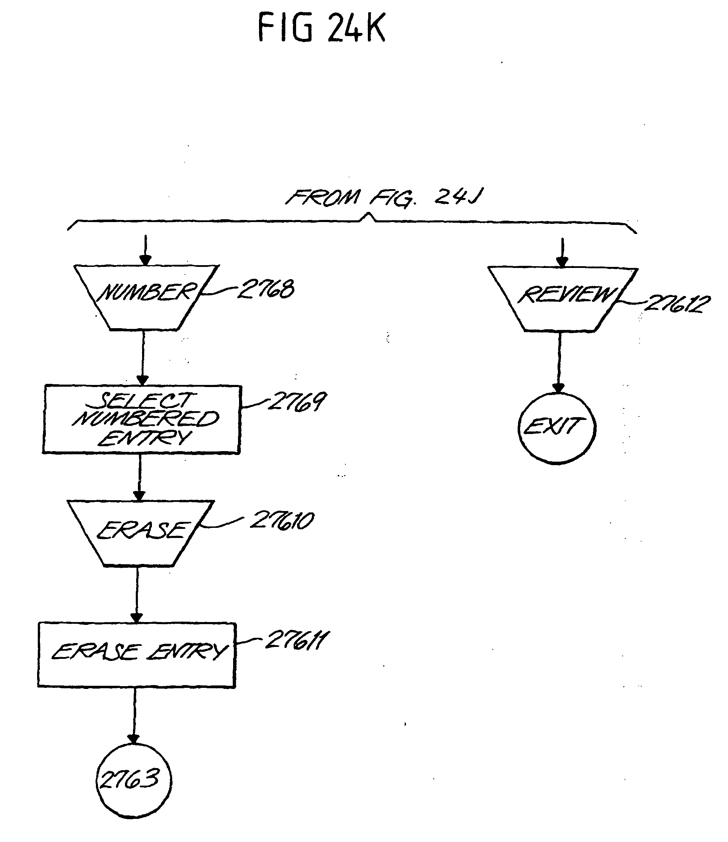

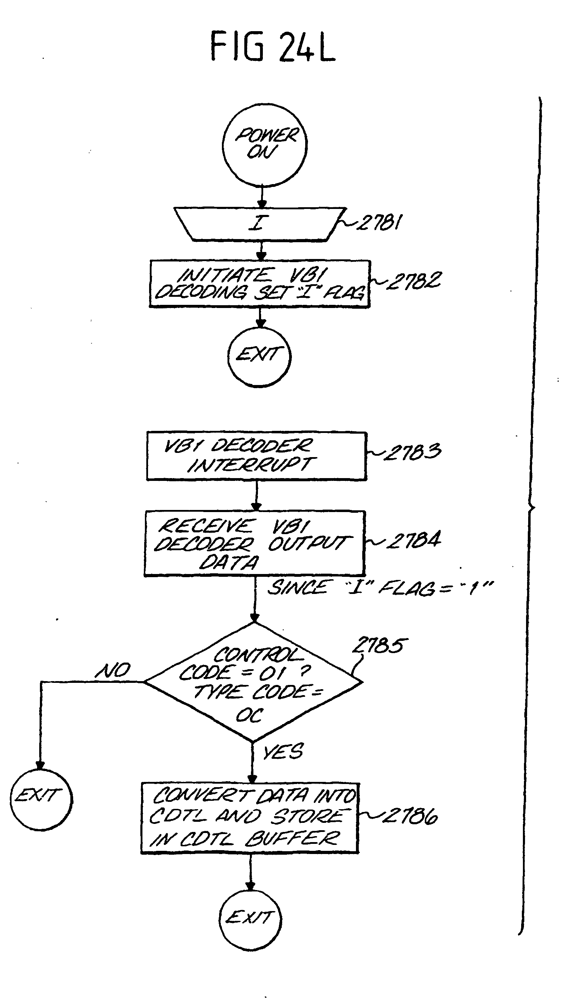

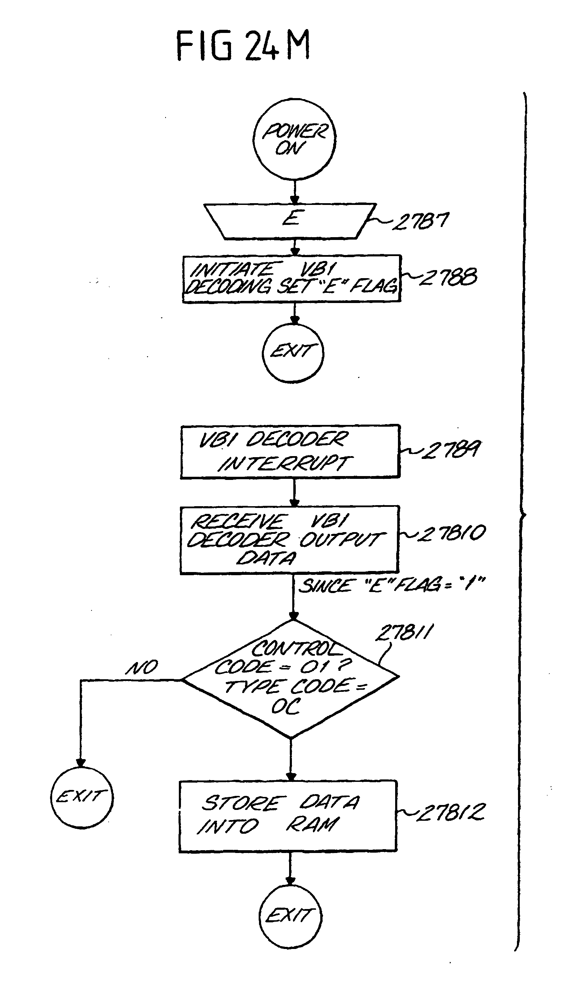

FIGs. 24a-24m are flow charts showing the steps performed by the controller when different keys are pressed.

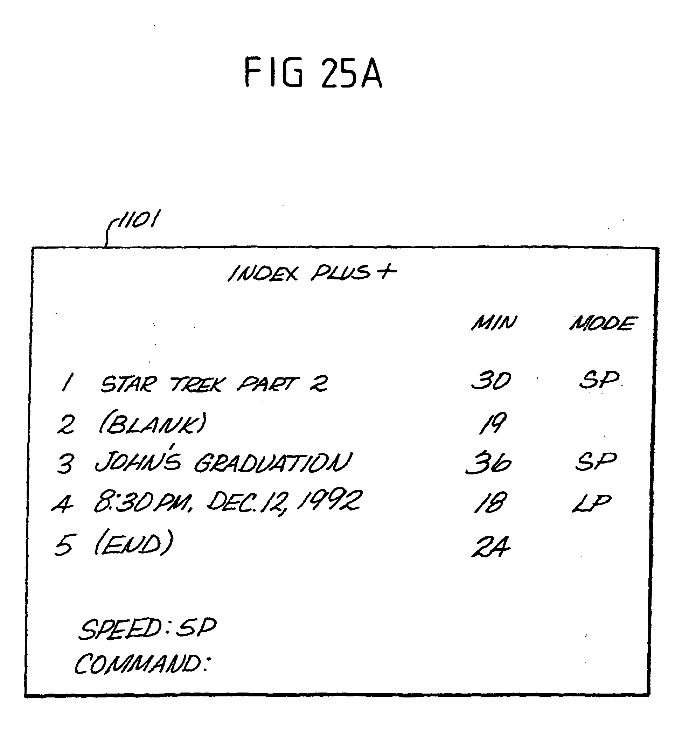

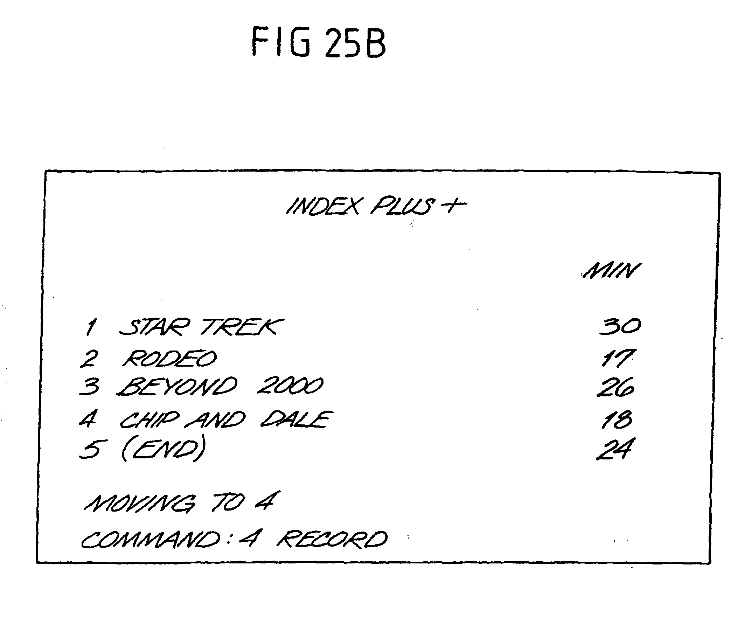

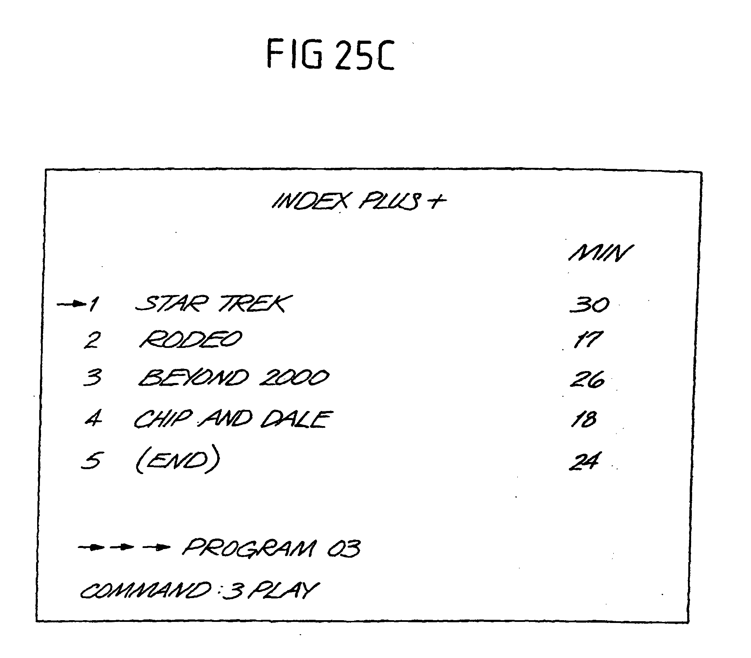

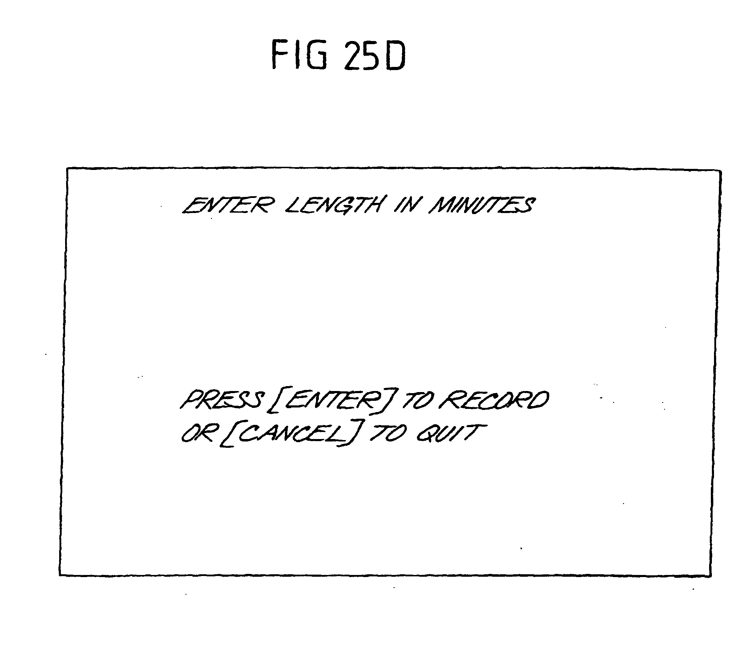

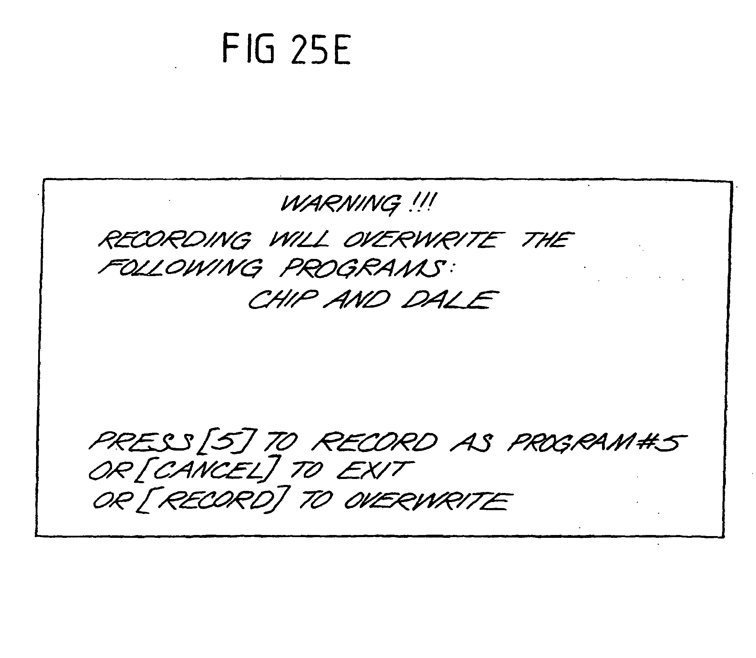

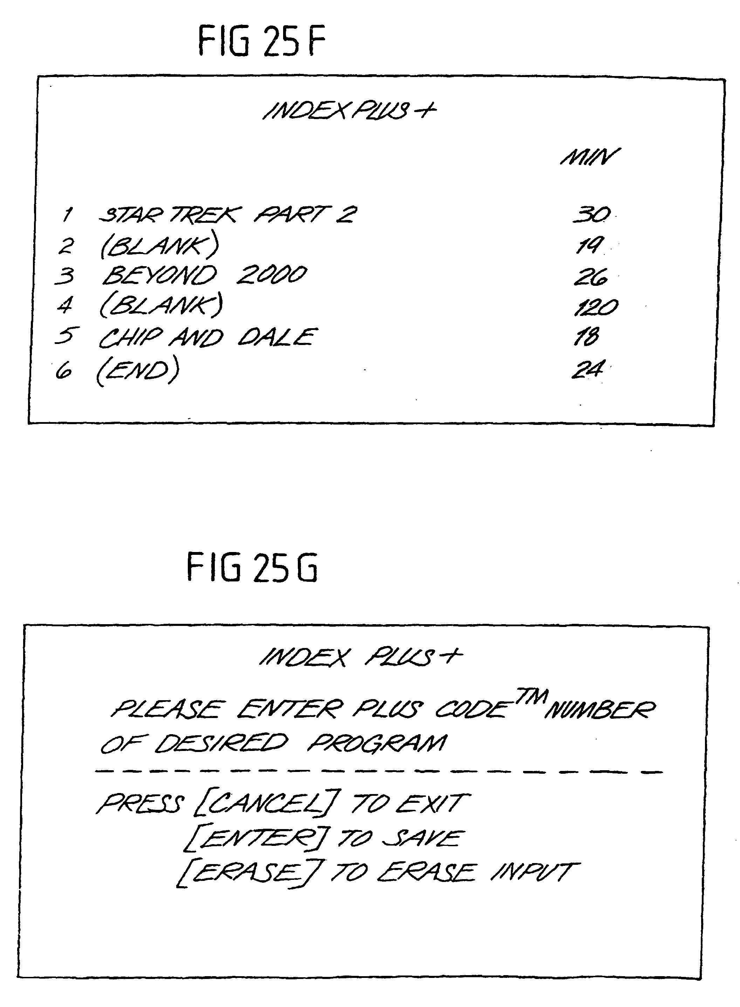

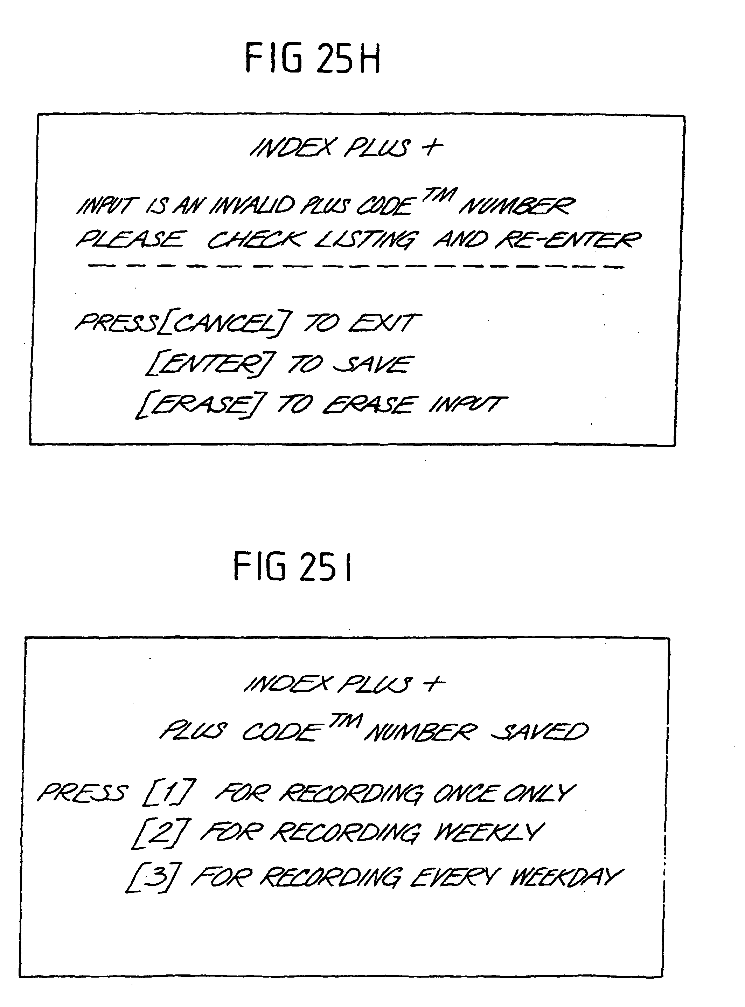

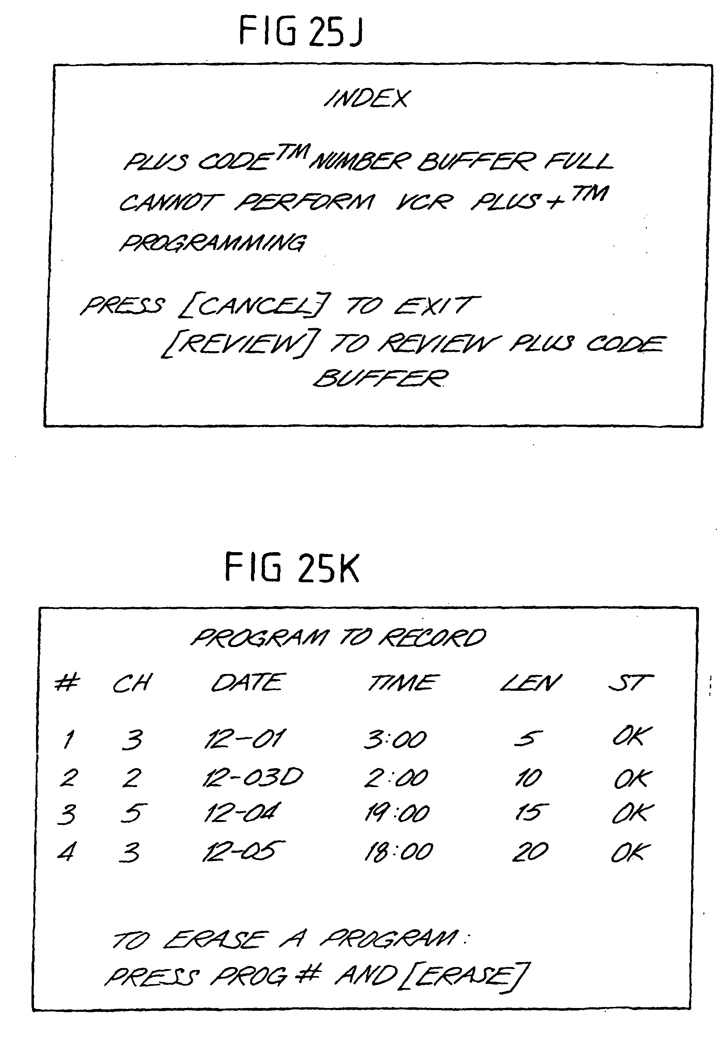

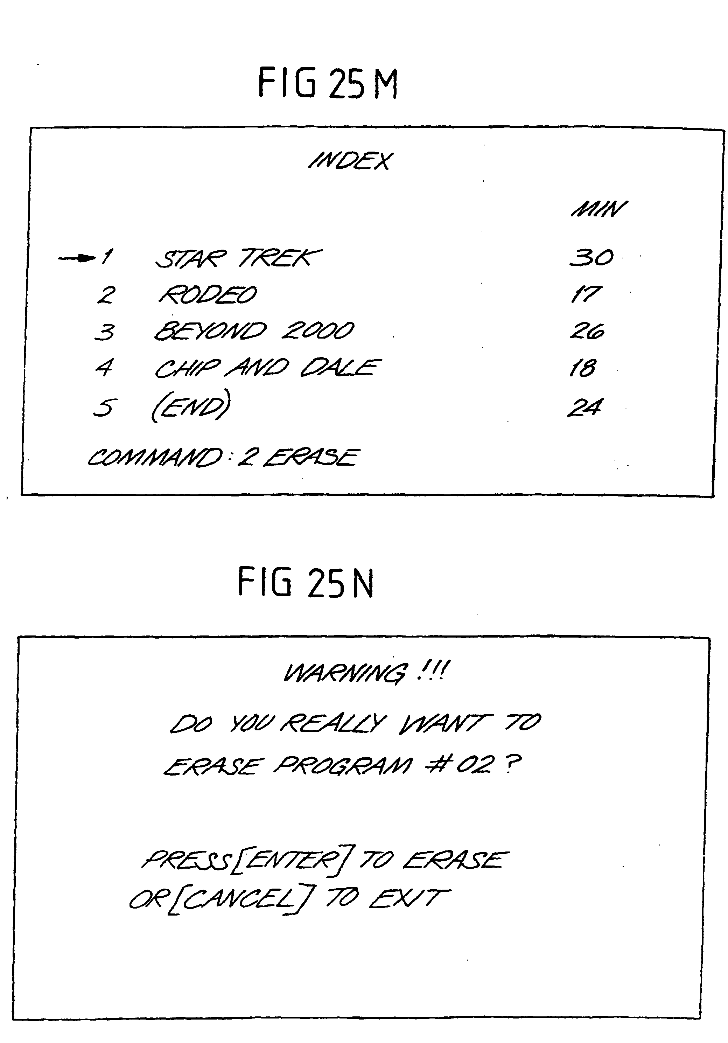

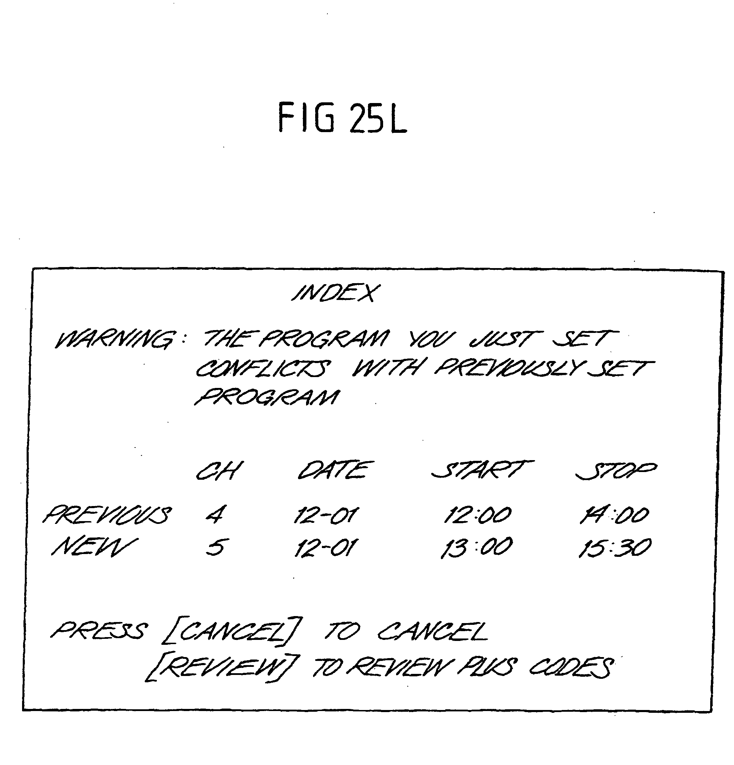

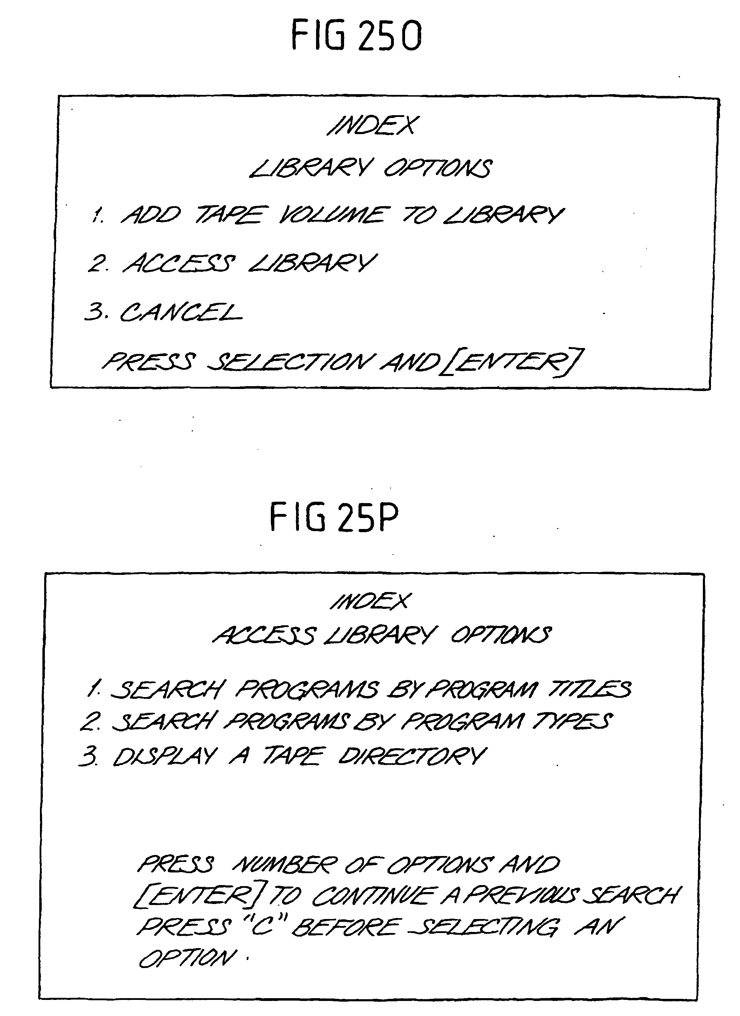

FIGs. 25a-25p illustrates the different screens displayed by the VCR.

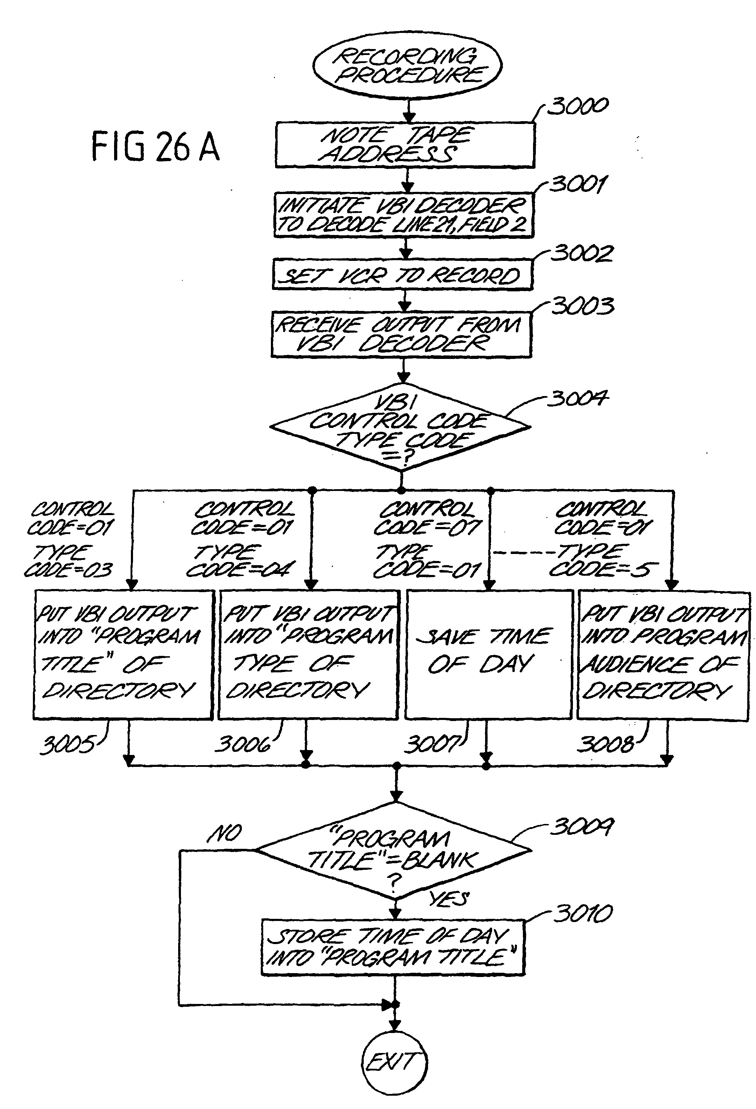

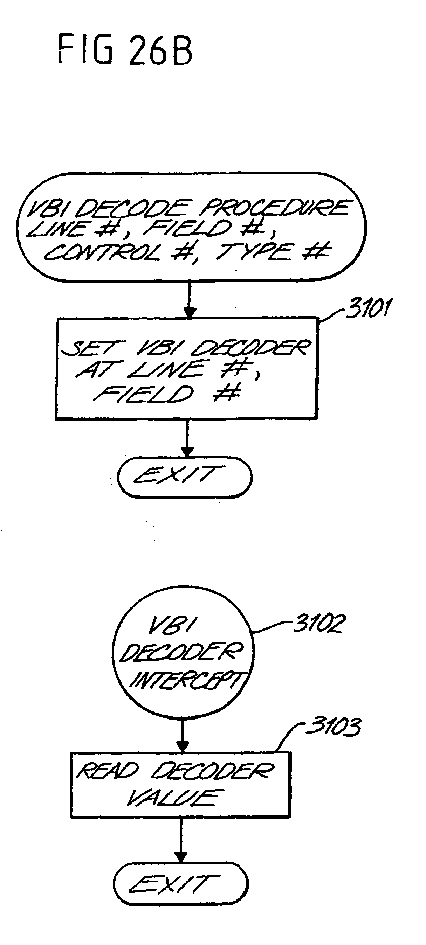

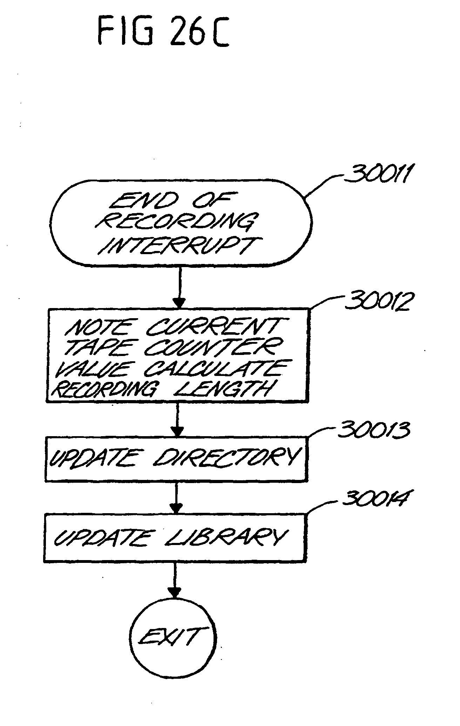

FIGs. 26a-26c illustrate the steps of different procedures performed by the VCR.

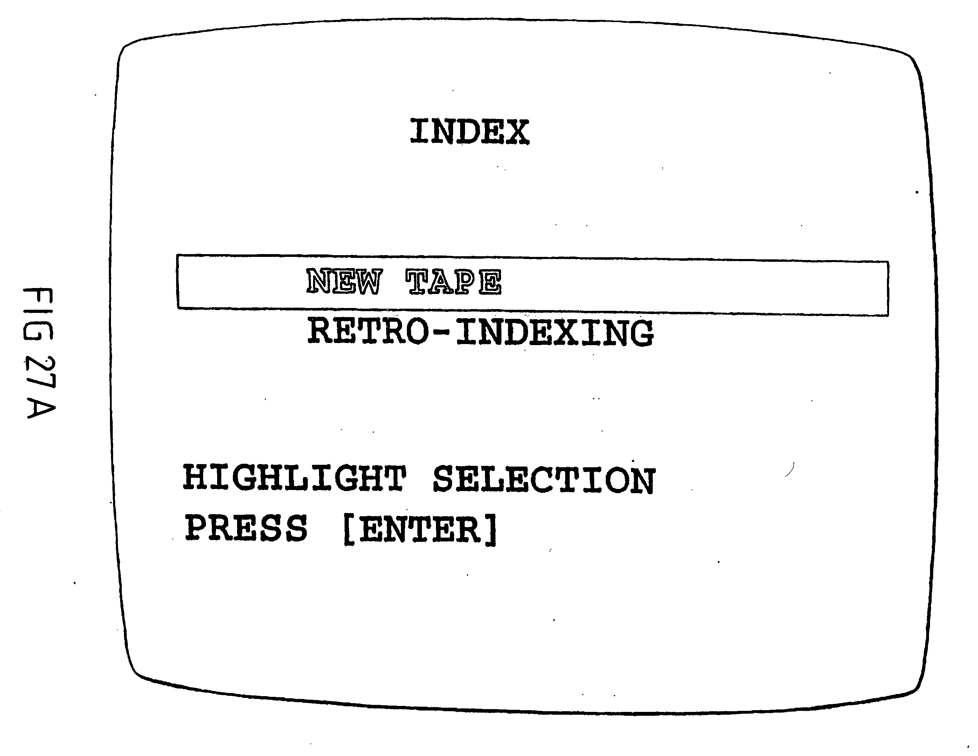

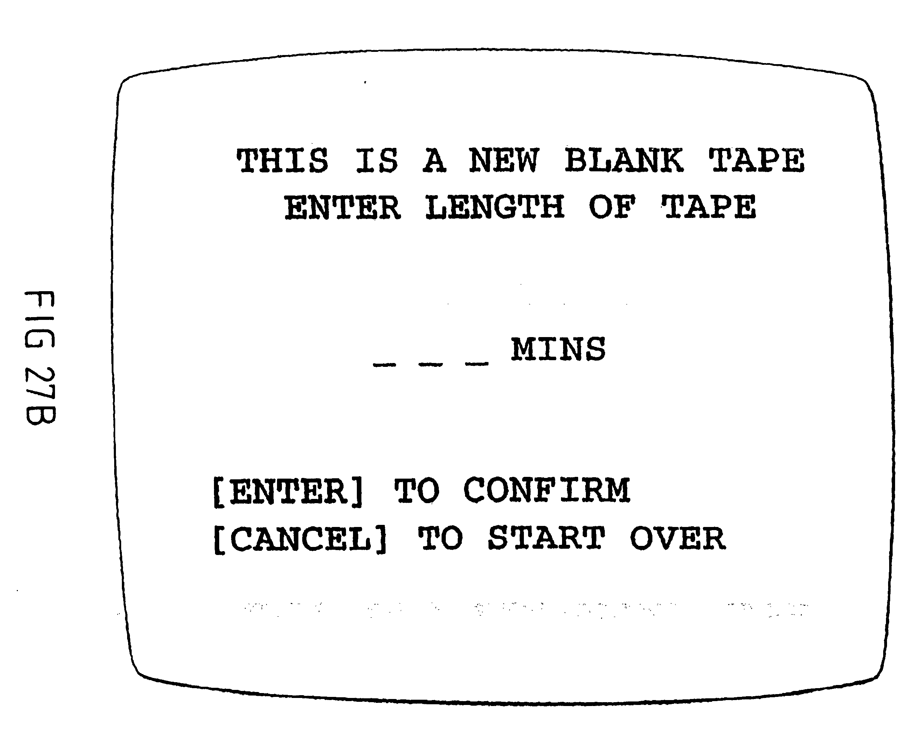

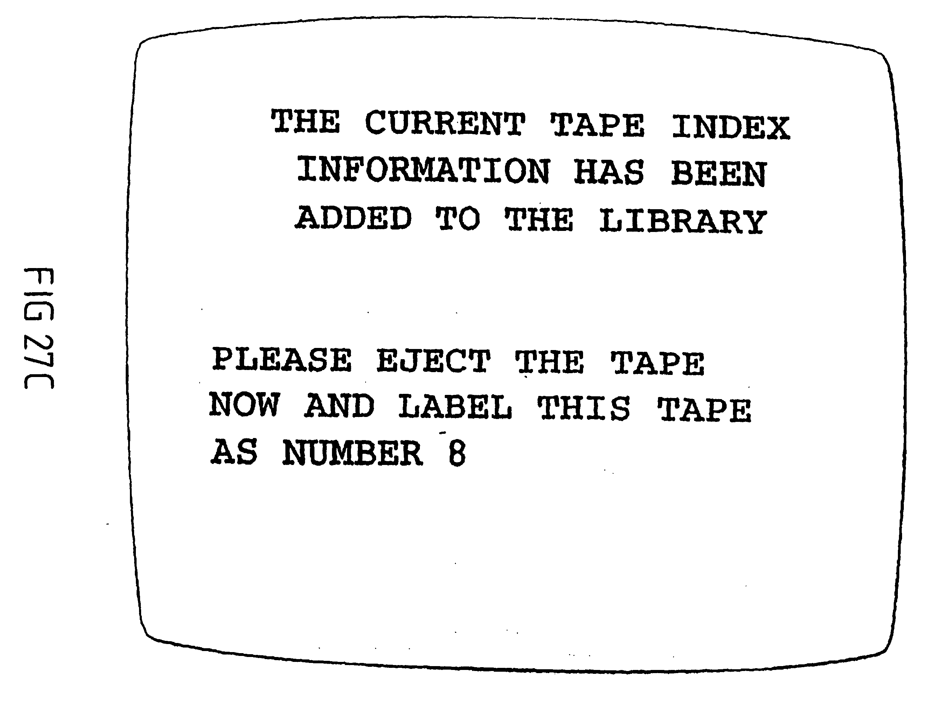

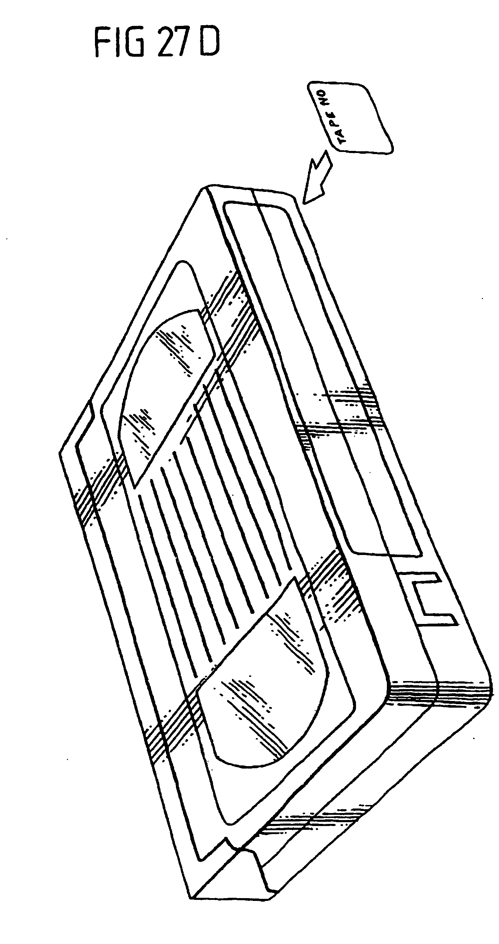

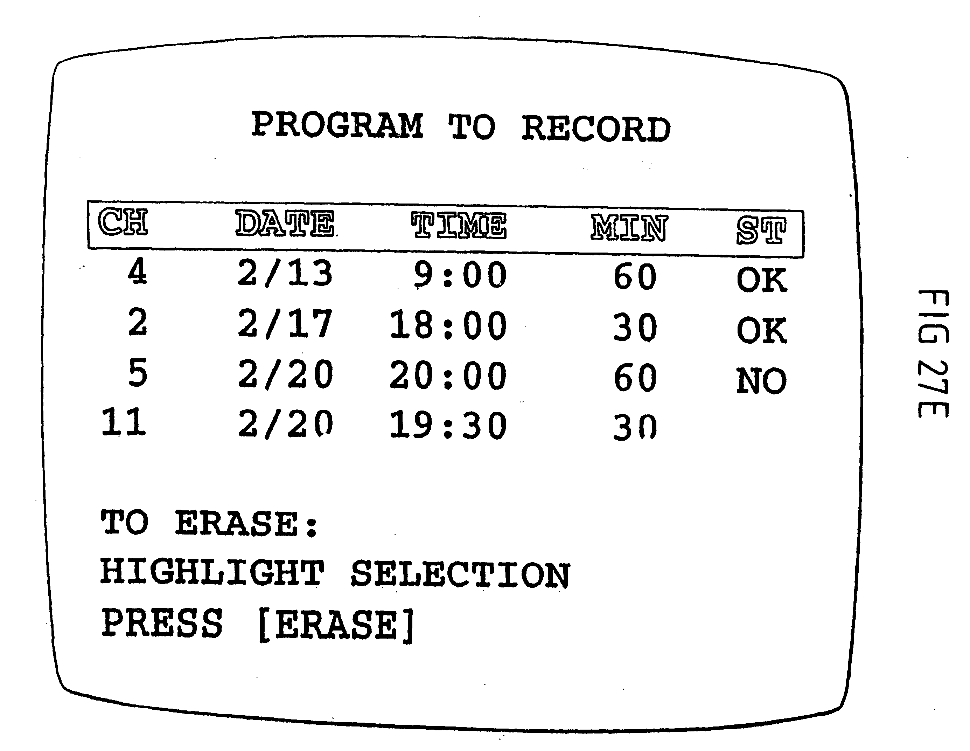

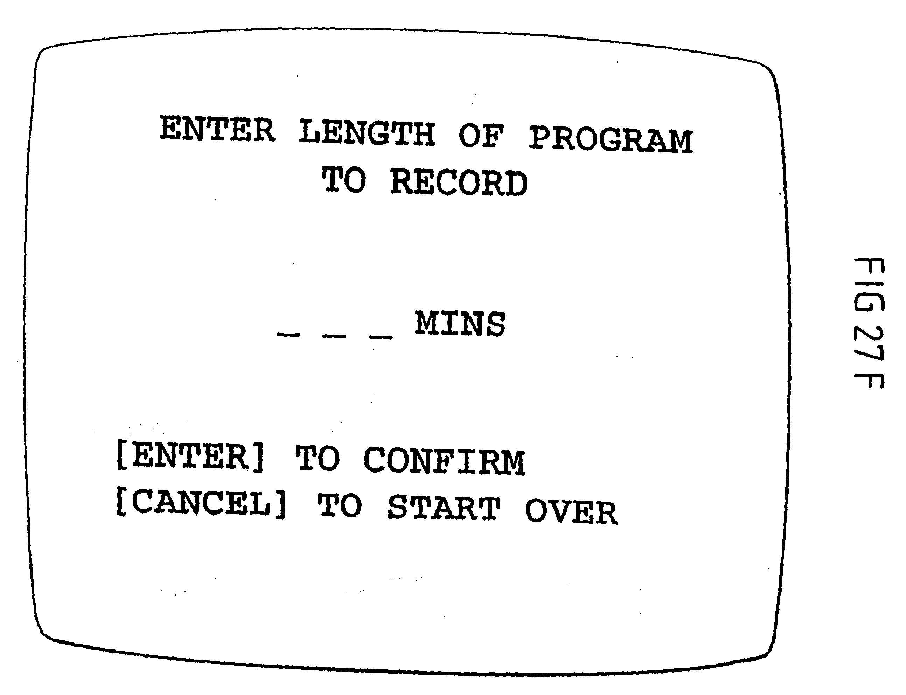

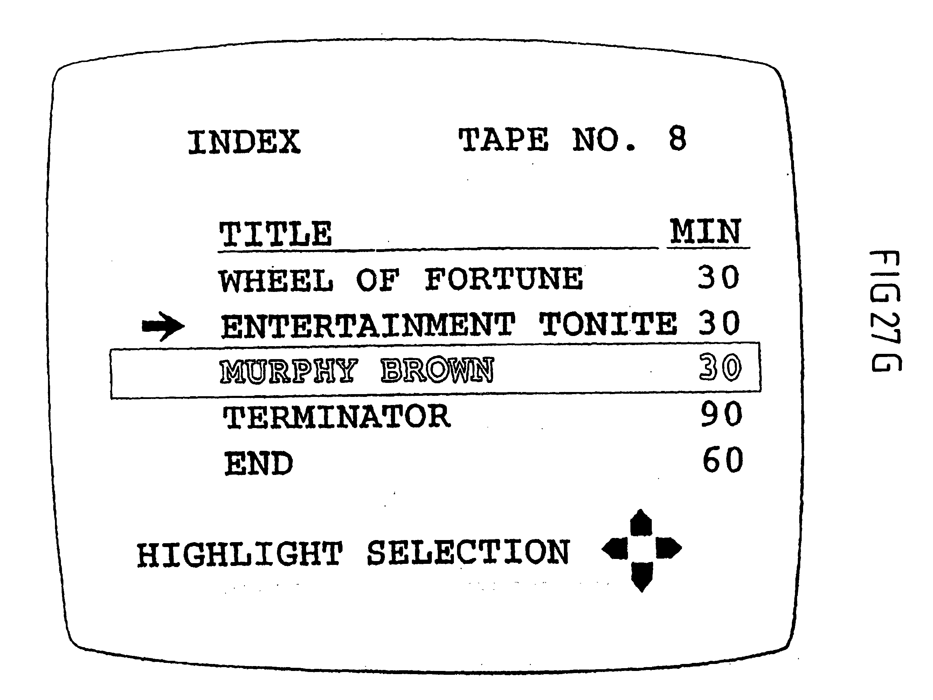

FIGs. 27a-271' are schematic views of displays for an indexing system.

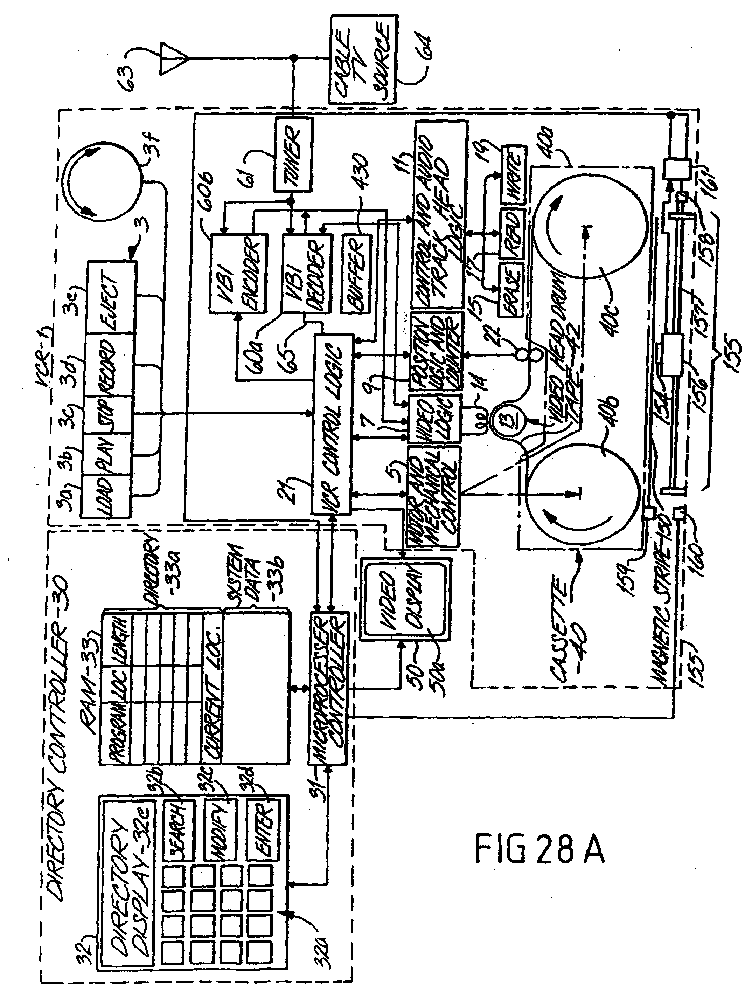

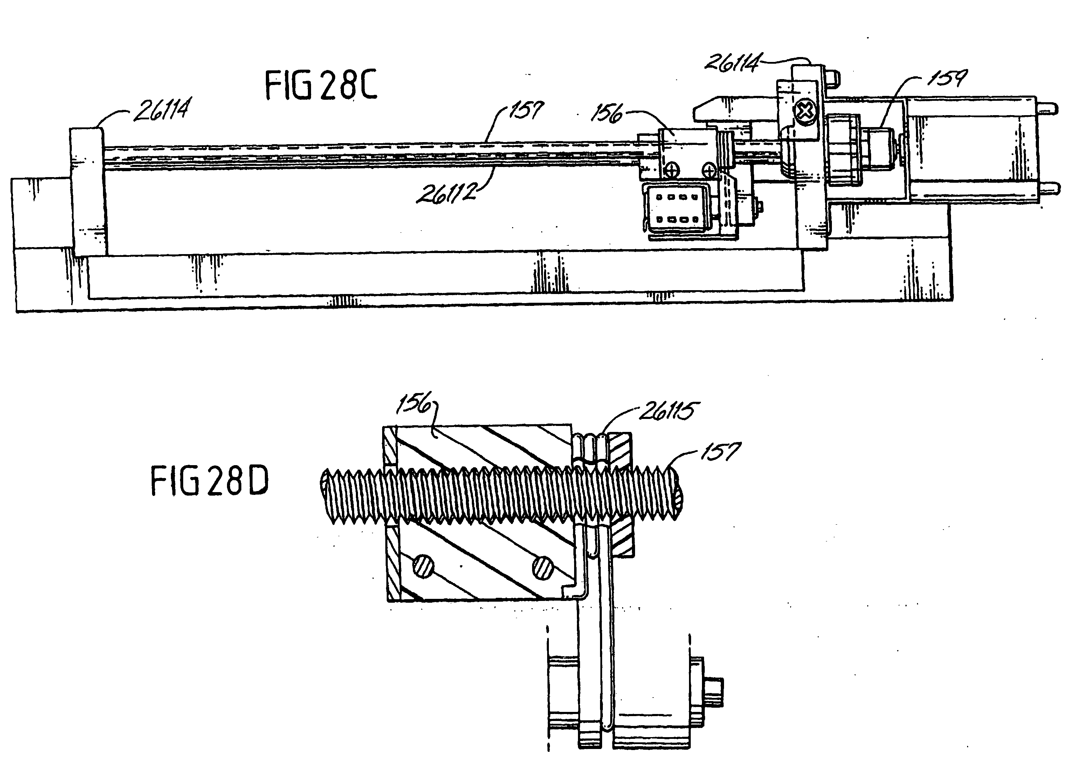

FIG. 28a is a block diagram of a video cassette recorder with a directory controller and a movable magnetic write and sensing system for information recorded on the back wall of the cassette and depicts an alternate embodiment.

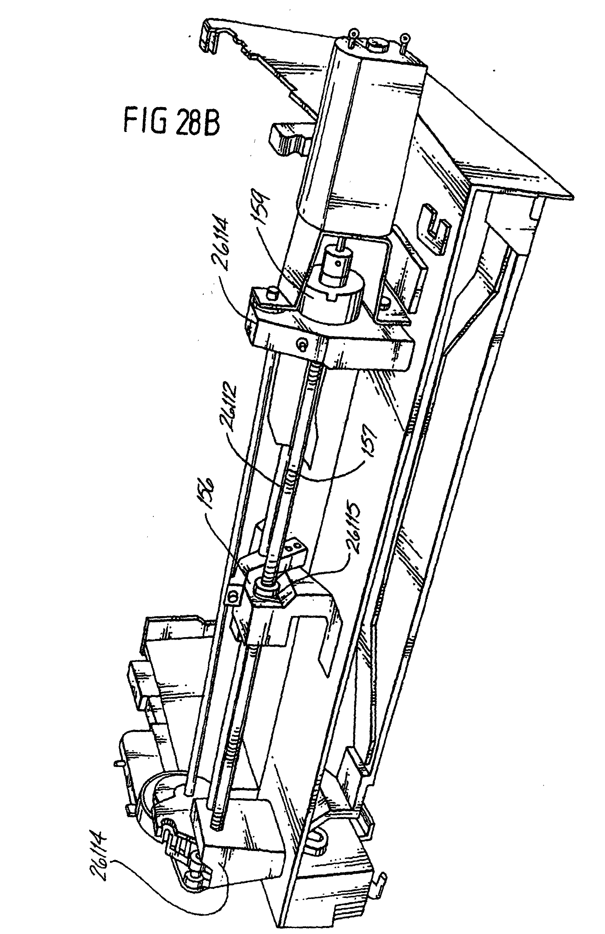

FIGs. 28b-28d illustrate the mechanical design of the movable head assembly of the system shown in FIG. 28a.

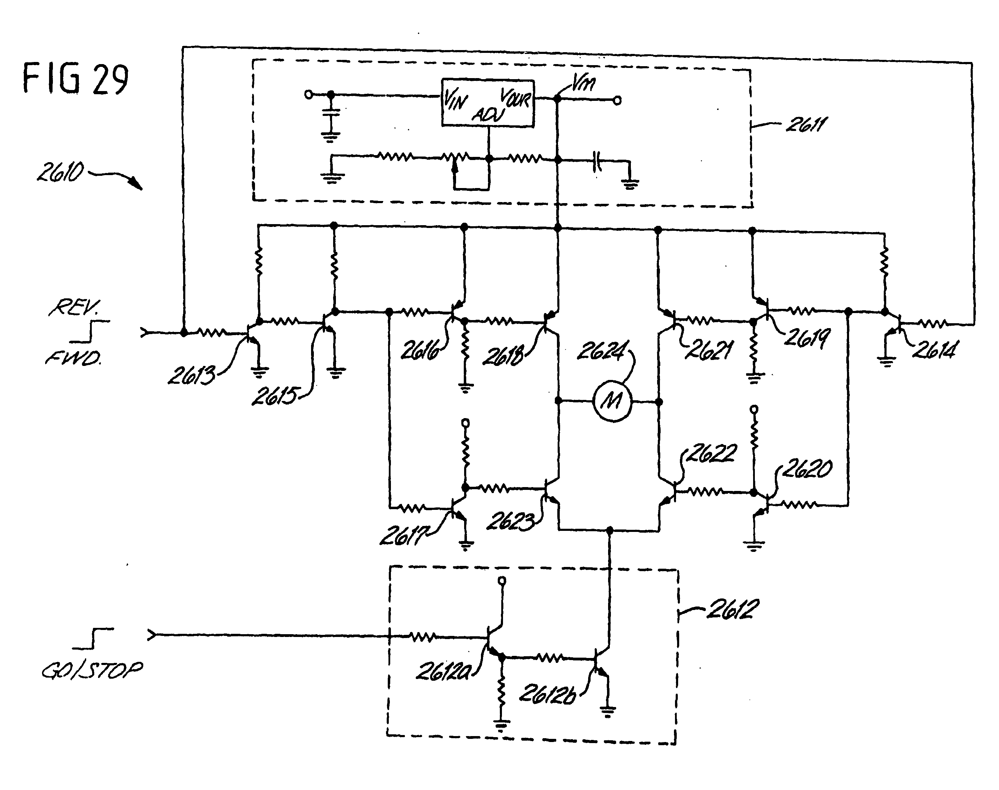

FIG. 29 is a schematic circuit diagram of a motor control circuit.

## Detailed Description

### The Indexing VCR

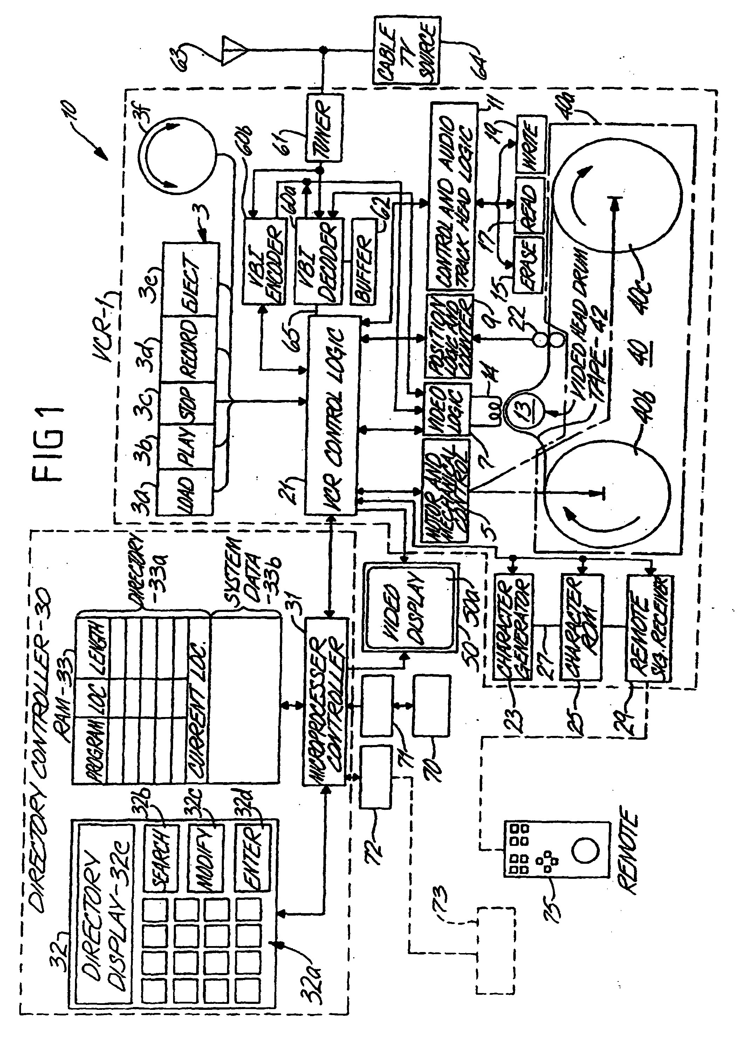

FIG. 1 is a block diagram of an indexing VCR system 10 including a video cassette reader/recorder (VCR) 1 with a conventional video tape cassette 40, a video display 50, and a directory controller 30. The VCR 1 is a conventional video reader/recorder device and uses any one of many different recording technologies such as BETA, VHS, super VHS, 8 mm, VHS-C or any other popular technologies. In particular, VHS-C indexed tapes can be played directly on a VHS indexing VCR with full index functioning. The cassette 40 is a conventional video cassette having a magnetic tape 42 packaged in a cartridge or cassette housing (hereafter called cassette). Even though the size and design of the housing is different for different types of recording technology, the basic information that goes on the tape itself is similar. The technology and operation of a VCR are well understood in the art.

The VCR 1 has a button control panel 3 with control buttons, including LOAD 3a, PLAY 3b, STOP 3c, RECORD 3d, and EJECT 3e, for controlling the operation of the VCR 1. The LOAD button 3a is optional and is not used on machines which load automatically. The VCR control logic circuit 21 receives control signals from the button control panel 3 and controls the overall operation of the VCR 1 by sending control signals to a motor and mechanical control logic circuit 5, a video logic circuit 7, a position logic and counter circuit 9, and a control and audio track head logic circuit 11 of the VCR 1, as well as to the video display 50 and the microprocessor controller 31 of the directory controller 30.

The motor and mechanical control logic circuit 5 controls loading and ejecting of the cassette 40 and also controls movement of the video tape 42 within the video cassette 40 during recording, reading (playback), fast forward, and rewind. The video logic circuit 7 controls the operation of a video read/write head drum 13 in reading from or recording video signals to the tape 42. The electrical signals are magnetically coupled between the video logic circuit 7 and the video head drum 13 using a winding 14. The position logic and counter circuit 9 monitors tape movement through a cassette tape movement sensor 22 and generates signals that represent tape position. The control and audio track head logic circuit 11 controls writing, reading, and erasing of signals on the control or audio track of the tape 42 through the write head 19, the read head 17, and the erase head 15.

The directory controller 30 includes a microprocessor controller 31, a random access memory (RAM) 33 and a directory input/output display and control panel 32. Preferably the microprocessor controller 31 comprises an integrated circuit microprocessor, a program store, such as a read-only-memory (ROM), for storing a control program to implement methods of the invention, and a clock for generating a clock signal for timing functions and providing the time. The time may be set using the directory input/output display and control panel 32 in a manner known in the art. Alternatively, the VCR 1 may maintain the time. The RAM 33 is a conventional random access semiconductor memory which interfaces directly with the microprocessor controller 31. The RAM 33 is preferably non-volatile. Alternatively, the RAM 33 is battery backed up. A portion of the RAM 33 shown as system data 33b, is also used for storing the system software of the microprocessor controller 31. The RAM 33 is also used for storing the program directory 33a. The size of the RAM 33 is at the discretion of the manufacturer. However, the RAM 33 preferably can store the directory of at least 100 tapes. Accordingly, the RAM 33 is preferably at least 128k bits. Data compression may be used for storing the directory in the RAM 33.

The directory input/output display and control panel 32 has an alphanumeric keyboard 32a and special function keys, such as a SEARCH key 32b for commanding searches for data in the directory 33a and on the tape 42, a MODIFY key 32c for modifying or deleting directory information in the RAM 33, and an ENTER key 32d for entering program directory information. Instead of providing special function keys, functions can also be initiated by entering predefined sequences of conventional keys on the alphanumeric keyboard 32a.

A display 32e is a conventional liquid crystal or other type display for displaying data being entered on the keyboard 32a, and to display the directory or other information stored in the RAM 33. Alternately, as discussed below, an on-screen display 50a can be used. The directory information stored in the RAM 33 is processed by the microprocessor controller 31.

The VCR 1 additionally comprises a character generator circuit 23 coupled to the VCR control logic circuit 21 and to a character generator read-only memory (ROM) 25. Character generators are well-known in the art. Typically, the character generator ROM 25 stores a data table representing pixel or bit patterns of a plurality of alphanumeric characters, such as the Roman alphabet and the Arabic numerals. Upon command by the VCR control logic circuit 21 and the character generator circuit 23, the data in the character generator ROM 25 is read and placed in an output signal to the video display at a position on the display determined by coordinates generated by the microprocessor controller 31. The end result is visual display of an alphanumeric character on the display screen. Character generators are well-known for channel display in television receivers, and for use in professional titling equipment.

The screen 50a is preferably 36 characters x 15 rows. As will be described below, a broadcaster preferably broadcasts auxiliary information in this format. For displays with a different format, the indexing VCR 10 reformats the information. For example, a VCR with a higher screen display density, such as 36 characters x 15 rows, may center the information in the 24 characters x 10 rows format. Alternatively, for a higher screen display density, the data may be broadcasted at the higher density. When there are more rows than can be displayed on one page, the indexing VCR 10 displays a message, such as "(MORE)," to inform the user that there is another page of information.

Commercially available decoder circuits well known in the art for decoding the dosed caption broadcasting system for the deaf can be optionally connected to the directory controller 30 for automatic generation of the program title for the directory of the program being recorded. Television broadcasts include titles and subtitles transmitted during the Vertical blanking interval (VBI) portion (described below) of the broadcast video signal, which can be decoded and displayed as text subtitles along with the video image by means of special decoding circuitry. Regular TV receivers do not decode nor process the signal, but with special decoder circuitry, the encoded text can be extracted and fed to the directory controller 30 for automatic generation of the title of the program being recorded. The extracted, decoded program title can be edited by a user or saved in the directory. Thus, the extracted program title can serve as an alternate data input source for the program directory, reducing the needed amount of user input. Other auxiliary information described below may also be broadcasted during the VBI.

Not only can the information (e.g. title, subtitle, program identification) transmitted during the VBI portion be displayed in real time or used to generate program title for the directory, it can be utilized to further facilitate operation of the VCR. For example, by monitoring the transmitted title, the VCR can automatically detect the end of a program and stop recording thereto. Also by monitoring the VBI portion used for transmitting the title, the VCR can filter out (in recording a program) segments that are unrelated to the program (e.g. commercials), by temporarily stopping the VCR if changes in the title portion are detected.

It is disclosed in the preceding paragraphs that the VBI data may be broadcast at a relatively high repetition rate prior to broadcast, enabling a suitable decoder to detect the data. In the system of FIG. 1, the decoder 60a can be designed to receive and store in buffer 62 the program identification information from line 21 of field 2 of each frame. Using suitable logic, the program title and other information can be stored automatically in the directory 33a, without user intervention.

Memory Structure

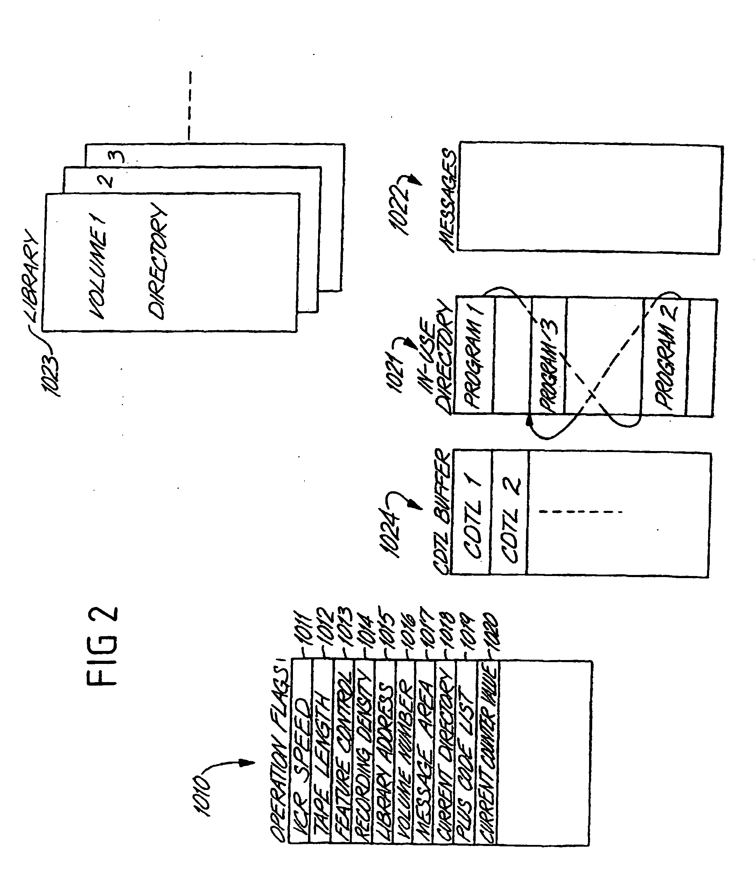

Now the memory structure of the RAM 33 is described by referring to FIG. 2 which is a schematic conceptually illustrating a typical structure of the data stored in the RAM 33 according to one embodiment of the present invention. The RAM 33 can be viewed conceptually as having an area 1010 for storing operation flags. These flags include a mode flag (MODEFLAG) 1011 for indicating the operation speed (e.g. SP, LP, or SLP) of the VCR 1 and which will be changed whenever the operation speed of the VCR 1 is changed. A tape length flag (TAPELNG) 1012 indicates the length (e.g. E-60, E-90, E-120) of an inserted tape 42. A second memory flag 1014 (SECMEM) stores access information of a secondary memory which may be provided on the cassette 40 for storing directory information. For example, if the secondary memory is a magnetic strip, SECMEM 1014 may store the recording density of a magnetic strip, or if the secondary memory is a semiconductor memory, SECMEM 1014 may store the access time and capacity thereof.

The flags also include a feature control field (FTCNTL) 1013 for specifying the VCR functions that are available to a user. In the simplest case, if a secondary memory is needed on the cassette for storing directory information, FTCNTL 1013 will be set in one way if an inserted cassette has the secondary memory and in another way if the inserted cassette has no secondary memory. FTCNTL 1013 may also specify other functions, and can be set by reading a code carried at a predetermined area of the cassette (e.g. on a magnetic strip on the cassette housing).

Area 1010 also stores a message pointer 1017 pointing to a message area 1022 which stores input and output messages; and a CDTL pointer 1019 pointing to a CDTL buffer 1024 which stores channel-date-time-length (CDTL) data of future recordings.

In a preferred embodiment, a library 1023 is also provided in the RAM 33. The library 1023 stores directories of tapes which users of the VCR 1 have archived. Each directory stored in the library contains substantially the same information as the in-use directory. If a library is present, a library pointer 1015 is provided for pointing to the library 1023.

A directory pointer 1018 is also provided for pointing to an in-use directory 1021 which stores the directory of the currently inserted tape. This directory pointer 1018 may actually point to a location in the library wherein the directory of the tape is located.

In addition, the area 1010 also stores a volume number field (VOLNO) 1016 which stores a counter value representing the number of tape directories already stored in the library 1023. Other flags may be added as needed.

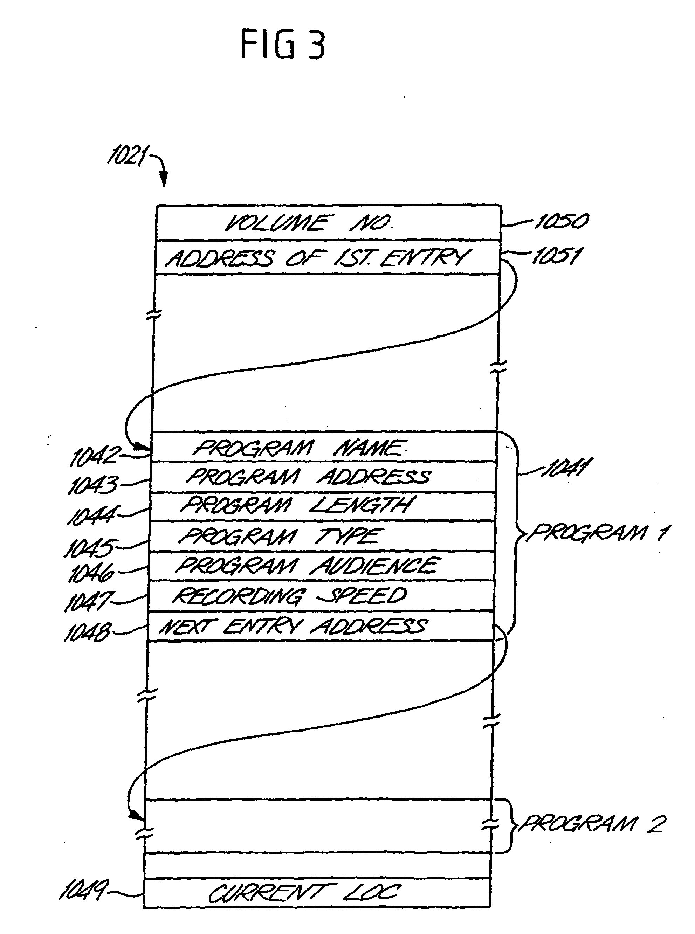

Referring to FIG. 3, which is a schematic illustrating a conceptual structure of the in-use directory 1021 in the data structure of FIG. 2, the in-use directory 1021 stores the directory of the cassette tape currently inserted into the VCR 1. For each program recorded on the cassette tape, a corresponding entry 1041 is set up in the in-use directory 1021. For purposes of illustration, FIG. 3 shows the entry 1041 only for program 1. However, each program similarly has an entry 1041. Each entry 1041 stores a title or program name (PROGRAM) 1042; a program address (LOC) 1043 which stores the absolute tape counter value of the beginning of the program; a program length value (LENGTH) 1044 which stores the length of the recorded program, represented as a function of the difference between its address from the address of the next program or record or a measure of time from a fixed reference point, such as the beginning of the tape; an optional program type field (TYPE) 1045 which stores the category of the recorded program; an optional program audience field (AUDIENCE) 1046 which stores the recommended audience of the program; and an optional recording speed (SPEED) 1047 which stores the speed at which the program is recorded.

A current tape location (CURRENT LOC) 1049 is also stored in the directory for indicating the absolute position from the beginning of the tape 42 in the cassette 40 where the valid directory is located, or the value of the tape counter when the tape is ejected. This field is used for setting the tape counter when the tape is reloaded into the VCR 1. The recording on the tape of the absolute tape position is described below.

A field 1051 is a pointer pointing to the address of the first entry of the directory 1021 represented in FIG. 3 by an arrow pointing to the program name (PROGRAM) 1042. Each entry also has a field 1048 storing the address of the next entry in the directory also represented in FIG. 3 by an arrow pointing to program 12. These fields provide a link from one entry to the next entry and are used for facilitating search, deletion, and addition of entries. In the preferred embodiment, the directory information is not stored on the tape 42, but is retrieved from the library 1023. In this embodiment, a volume label (VOLNO) 1050 is provided in the in-use directory 1021. This field is used for retrieving the directory information of the tape from a library 1023 stored in the RAM 33.

Each item in the directory can be modified through the use of the buttons on the keyboard 32a and the special function keys 32b, 32c, 32d of the directory controller 32, as will be described below.

## Tape Format

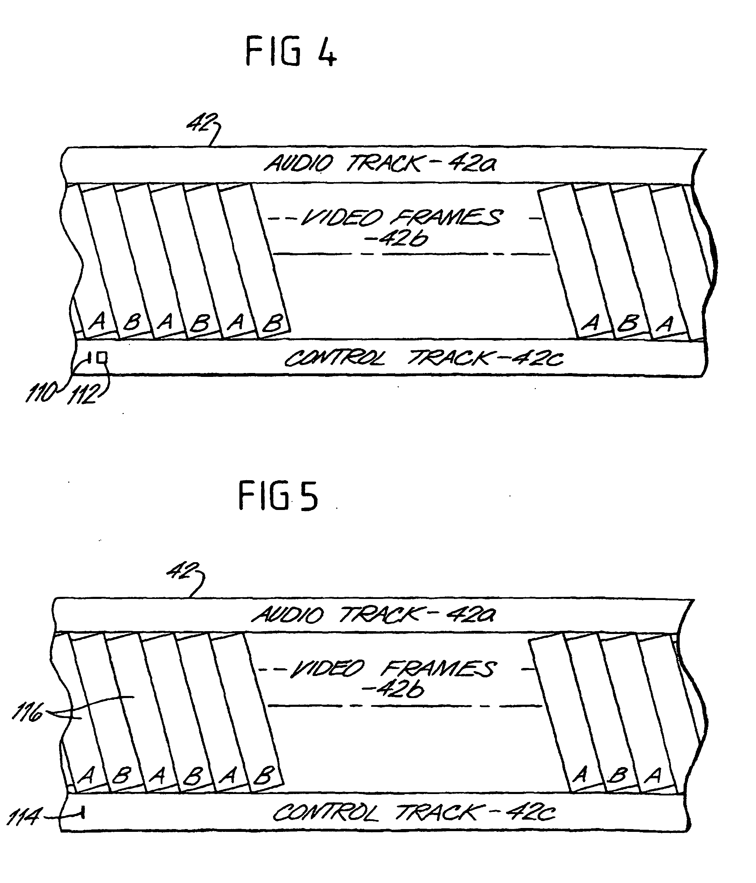

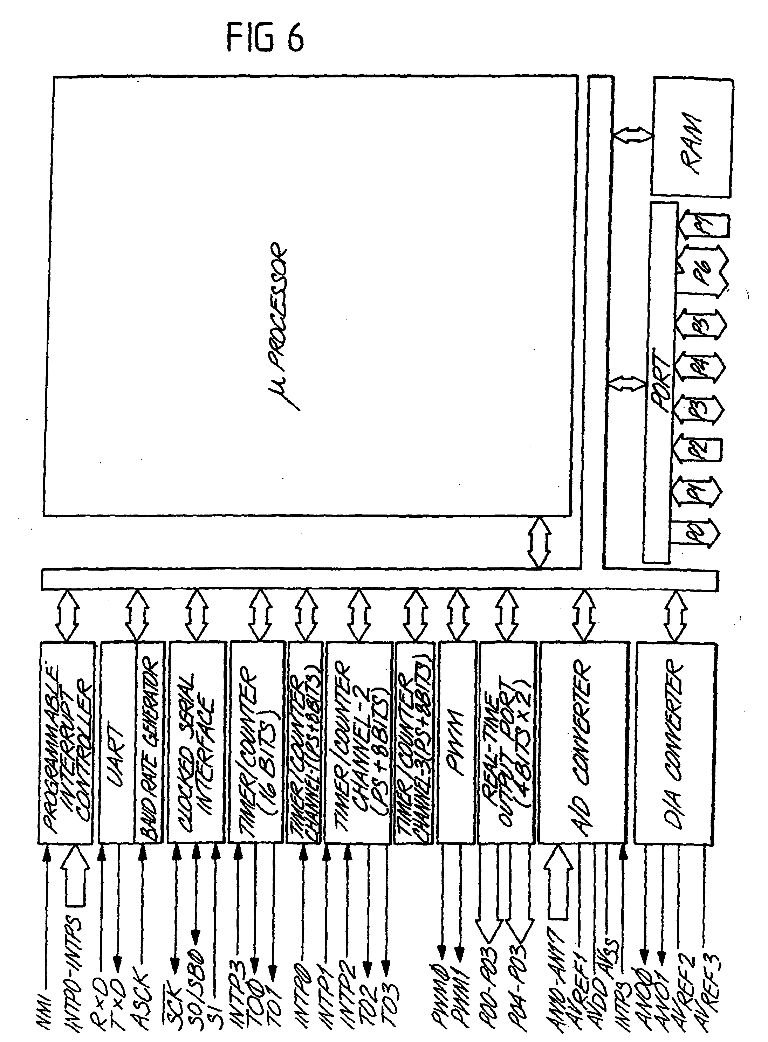

By way of background, the format of the tape 42 is now described. FIGs. 4 and 5 illustrate the information content of one example of video tape for both BETA and VHS format which both use the same general tape layout. The tape 42 is divided into three areas. A narrow strip running along the upper edge of the tape 42 is an audio track 42a which contains audio signals. A second narrow strip running along the bottom edge of the tape is a control track 42c which contains synchronization ("sync") control signals. The middle area 42b is for video signals which are recorded in pairs of parallel fields going up and down the width of the tape at a slight angle. The markers 110, 112, and 114 will be described below.

The video head drum 13 is fitted with two read/record heads 180 degrees apart, so that even numbered lines make up one field and odd numbered lines make up the other field. To reduce flicker on the video screen, these fields are projected onto the face of the cathode ray tube (CRT) screen 50a of the video display 50 at alternating intervals.

## Decoding VBI Information

Video images in cathode ray tube (CRT) type video devices (e.g. television) are generated by scanning a beam along a predefined pattern of lines across a screen. Each time all the lines are scanned, a frame is said to have been produced. Each video frame in the broadcast signal is divided into two fields, referred to as field 1 and field 2.

The VCR control logic circuit 21 scans the beam typically from the top, left hand corner and scans across the screen. After it finishes scanning one line, the beam returns to the left-hand side and repeats along another line which is parallel to but lower than the previous line. The scanning continues along the odd-numbered lines until the beam reaches the center of the bottom part of the screen. These odd-numbered lines form field 1.

From the bottom center of the screen, the beam returns to the top, where it starts scanning from substantially the center of the screen along the even-numbered lines which interlace the lines of field 1. The even-numbered lines form field 2. When the beam reaches the bottom, right-hand corner of the screen, a picture frame is formed. In the NTSC protocol widely used in North America, each field contains 262.5 horizontal lines and a pair of fields constitute a single 525 line video frame and creates one video picture at one instant in time on the video display 50.

During the time in which the beam returns from the bottom to the top of the screen, it carries no television signals because it does not produce any picture element on the screen. This time interval is generally known as the vertical blanking interval (VBI). Its duration is generally several times the time duration when the beam takes to scan across the screen. In other words, the length of the VBI is equal to the time for the beam to scan several lines. Thus, the VBI typically contains a plurality of lines and is identified by the field with which it is associated. Apparatus and methods using these techniques are well known in the art and therefore are not discussed in detail herein.

Since no image element is produced on a television screen during a vertical blanking interval, no information therefore needs to be carried by the broadcast signals. Thus, proposals have made to use the VBI for conveying auxiliary information from a television network or station to the audience. For example, Closed-Caption data associated with a television program are transmitted as encoded composite data signal during VBI line 21, field 1 of the standard NTSC video signal, at a rate of 480 bits per second. In the above-identified Draft EIA-608, information are sent in the VBI as packets. Currently, six classes of packets are proposed, including:

- a "Current" class for describing a program currently being transmitted;
- a "Future" class for describing a program to be transmitted later;
- a "Channel Information" class for describing non-program specific information about the transmitting channel;
- a "Miscellaneous" class for describing other information;
- a "Public Service" class for transmitting data or messages of a public service nature such as National Weather Service Warnings and messages; and
- a "Reserved" class reserved for future definition.

According to the E.I.A. proposal, a packet is preceded by a Start/Type character pair, followed by information/ informational characters pairs until all the informational characters in the packet have been sent.

Table I lists a subset of the control and type codes of various kinds of information to be broadcasted in the VBI according to the E.I.A. proposal. For example, to transmit the program identification number (scheduled start time) of a program, a control code of 01h, a type code of 01h and a packet of four characters (one character specifying the minute, one character specifying the hour, one character specifying the date and one character specifying the month) are sent. Similarly, to transmit the program name, a control code of 01h, a type code of 03h and a packet of between 2 to 32 characters are sent. As another example, the VBI may also be used to transmit a time-of-day value, by sending a control code of 07h, a type code of 01h and a packet of two characters.

TABLE I

| CONTROL CODE | TYPE CODE | |
|---|---|---|
| 01h<br>(CURRENT CLASS) | 01h<br>02h<br>03h<br>04h<br>05h<br>06h<br>07h<br>09h<br>0Ch<br>0Dh<br>10h-17h | PROGRAM IDENTIFICATION NUMBER (PROGRAM START TIME)<br>LENGTH/TIME-IN-SHOW<br>PROGRAM NAME<br>PROGRAM TYPE<br>PROGRAM AUDIENCE<br>AUDIO SERVICES<br>CAPTION SERVICES<br>ASPECT RATIO INFORMATION<br>COMPOSITE PACKET-1<br>COMPOSITE PACKET-2<br>PROGRAM DESCRIPTION YOU 1 TO YOU |
| 05h<br>(CHANNEL<br>INFORMATION CLASS) | 0 1h<br>02h | NETWORK NAME<br>CALL LETTERS (STATION ID)<br>AND NATIVE CHANNEL |
| 07h<br>(MISCELLANEOUS) | 01h<br>02h<br>03h | TIME OF DAY<br>IMPULSE ID<br>SUPPLEMENTAL DATA LOCATION |

Referring back to FIG. I, the microprocessor controller 31 controls the sequence and operation of the directory controller 30 and interfaces with the VCR control logic circuit 21 to implement the necessary functional capabilities for reading, updating and recording the directory. The microprocessor controller 31, according to a specific embodiment, is a microcomputer chip with part number of UPD78234 from NEC Corporation, a logical block diagram of which is illustrated in FIG. 6. This microcomputer chip preferably is a microprogrammed processor capable of accessing a data memory of up to one megabyte. A plurality of input/output ports, P0-P7, are provided for coupling to various components of the VCR 1, such as the motor and mechanical control logic circuit 5, the video logic circuit 7, the position logic and counter circuit 9, and the control and audio track head logic circuit 11. Asynchronous communication between the microcomputer chip and these components is achieved by the provision of a plurality of interrupt inputs INPT0-INPT5.

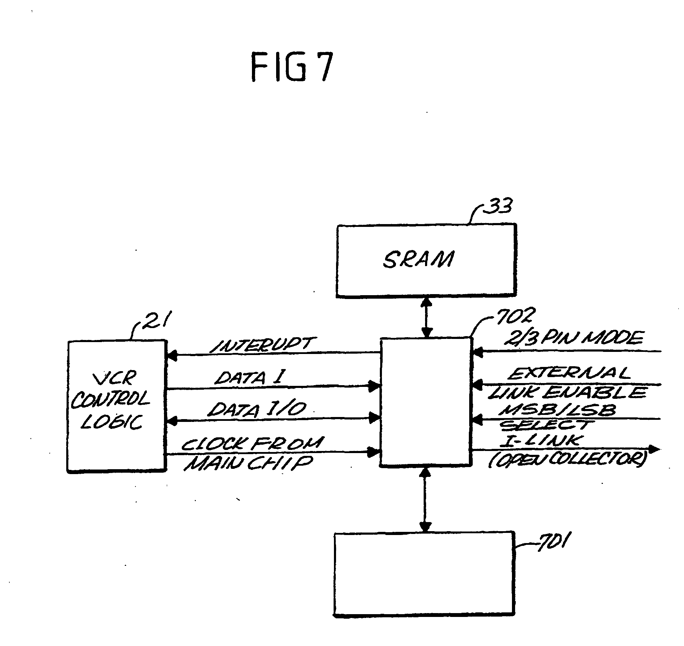

FIG. 7 shows a block diagram of another specific implementation of the microprocessor controller 31. A chip 701 performs the vertical and horizontal synchronization separation of the VBI lines. The chip 701 also slices and encodes the VBI lines. This chip performs the functions of the VBI encoder 60b, and the buffer 62 (see FIG. 1). A chip 702 controls the RAM 33 and performs error correction and decryption for some type of data coming from the chip 701. The chip 702 also provides an interface with the serial link (I-LINK) and an interface with the VCR control logic circuit 21. The chip 702 also controls the RAM 33. The microcontroller processor 31 in the indexing VCR 10 performs all indexing functions and human interface, interprets (e.g. tab, indent, screen format, attributes) and processes the auxiliary information display. The microcontroller also performs all normal indexing VCR 10 functions.

In this embodiment, the interface between the chip 702 and the VCR control logic circuit 21 is a clock serial bus via two or three I/O lines which is hardware selectable by the two/three pin mode input signal to the chip 702. The interrupt signal line allows the VCR control logic circuit 21 to monitor the status of the chip 702 by interrupt. In a two pin configuration, the data I/O signal line functions as a two way signal path between the VCR control logic circuit 21 and the chip 702. In the three pin configuration, the chip 702 provides data on a data output signal line. Also, in the three pin configuration, the VCR control logic circuit 21 sends data on the data NI" line to the chip 702. The external length enable signal enables the chip 702 to communicate with the external RAM 73. The MSB/LSB select signal sets the serial bus to MSB first.

Indexing Overview

The VCR uses the directory described above in FIGs. 2-3 to perform searches of the user's tape library to find the tape that a selected program is on. The directory of a particular tape may be searched using keywords, or title information to locate a program on the tape. The tape may then be advanced to the selected program. Indexing is used herein to describe these searches, the generation of these directories, and all related functions.

The indexing VCR 10 provides a hybrid method for indexing recorded programs, which are recorded on one of three types of tape: home recorded tapes, prerecorded tapes, and retroactively indexed tapes. A home recorded tape (HR tape) is a tape on which the user has made recordings from broadcast or cable by either real time recording, timer programming his VCR, or using a VCR PLUS+™ programming system. As will be described below, the index is created at the time of recording by the VCR. The second type of tape is a prerecorded tape (PR tape) that is a commercially purchased tape, such as a Raquel Welch work-out tape, a karaoke tape, songs, lectures or speeches, that contains many titles on it or may contain only one program. These tapes are not expected to be overwritten. The index is stored on the tape by the video publisher at the time of the recording. The third type of tape is a retroactively indexed tape (RI tape) which is a previously unindexed recorded tape on which the user retroactively adds an index. For this type of tape, the index is added by the VCR at the time of the retroactively indexing. For the HR tapes and the RI tapes which are both produced by the home VCR, the directories all reside in the RAM 33 of the indexing VCR 10.

As will be described in detail below, each tape has tape identification numbers (TID) written at some repetition rate along the whole tape on either a VBI line for HR tapes or on a control track 42c for RI tapes.

If the directory or directories are stored in the video fields, corruption of video signals with directory signals on selected video fields, such as a few odd fields spaced apart by a certain number of fields, has little noticeable visual degradation of the video picture. This is because the human brain retains a visual image for a brief period after the image is removed ("persistence of vision").

The TID's reference the tape to a corresponding directory stored in the RAM 33. When either a HR tape or a RI tape is inserted into the VCR, the VCR locates and reads the tape identification and then retrieves the corresponding directory from the RAM 33. This operation is preferably independent of the point of tape insertion to thereby effectively create a random access capability for selections on the tape. On the other hand, for PR tapes which are produced by the video publisher, the directory is stored on the tape preferably by writing it repeatedly on a VBI line. When the PR tape is inserted into an indexing VCR, the indexing VCR 10 independently of the point of tape insertion can quickly locate and read a copy of the directory from the VBI line. Thus, the PR tape can be read by random access also.

In one embodiment, RI tapes are created by only writing VISS marks on the control track and manually entering the program title information into the memory. Because this embodiment does not add TID information to the tape itself, the user must identify the tape to the indexing VCR. Once the tape is identified, the VCR operates as if the RI tape is an HR tape. Consequently, the tape becomes random access at this time and not when the tape is first inserted.

The VCR 1 includes a VBI encoder 60b coupled to the video logic circuit 7 whereby information, which receives digital data, such as tape label (e.g. a volume number), directory, and/or addresses, from the microprocessor controller 31 and encodes such data for recording into the VBI portion of the video signals which are to be recorded on the cassette tape 40. When line 21 field 2 is encountered, the digital data stored in the registers are output so that they can be written on the video track as described above.

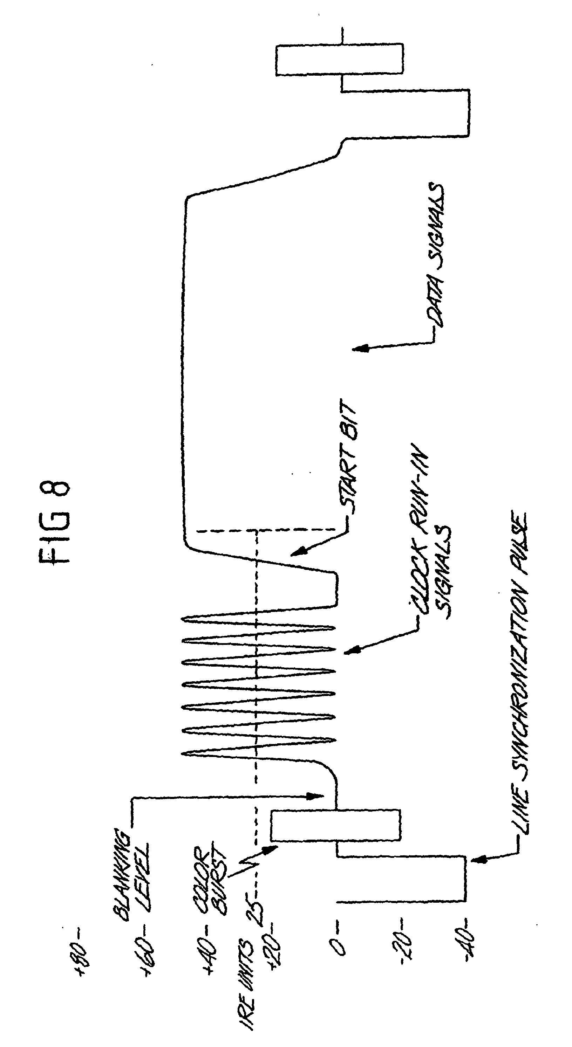

VBI encoder 60b can be implemented in a similar manner as one of those already existing in the art, e.g. encoders for encoding closed-caption data into the VBI portions of video signals. Such implementation is explained herein with reference to the timing diagram shown in FIG. 8.

FIG. 8 is a timing diagram showing the format of the line 21 field 2 video signals. The figure shows the signals being preceded by a line synchronization pulse, followed by color burst signals. The color burst signals are followed by a blanking level, 7 cycles of clock run-in signals and then the data signals.

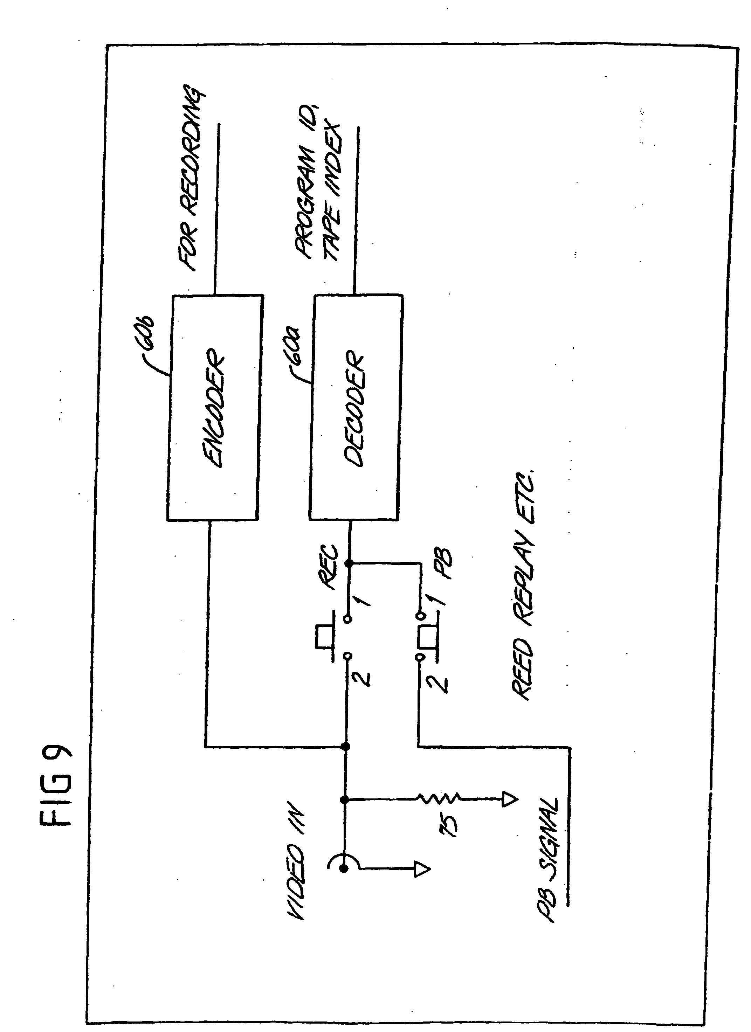

As illustrated in FIG. 9, the VBI decoder 60a can be used at different time durations to decode either the broadcast signals (Video In) from the tuner 61 or the recorded signals (PB Signal) read by the video logic circuit 7 from the tape 42. When the VCR 1 is recording a program, the VBI decoder 60a operates to decode information in the VBI of the broadcast signals. When the VCR 1 is playing back a program from the cassette tape 40, the VBI decoder 60a can operate to decode information stored in the VIII of the recorded signals (e.g. previously recorded directory information).

It needs to be noted that although the decoder 60a in the embodiment is used both for decoding broadcast signals and recorded signals, it will be understood that a separate decoder can be provided for each operation. Moreover, although the decoder 60a and the encoder 60b are shown and described as two units, they can be incorporated into a single semiconductor chip or implemented by discrete logic components. In the implementation of FIG. 7, the chip 701 performs the VBI signal processing.

Prerecorded Tape

As described above, prerecorded tapes (PR tape) are manufactured by a tape publisher and contain a plurality of different titled programs thereon. A program directory or directories containing information about the names and locations of each program or record on the tape is stored on the tape. In one of the specific embodiments, the label (e.g. a volume number or a name) for the tape is also recorded.

Either the video frames 42b or the control track 42c (see FIGs. 4-5) may be used for storing the program directory(s). In one embodiment, the program directory is stored, by the VCR control logic circuit 21 under control of the microprocessor controller 31, in the control track 42c and in another embodiment in odd and/or even numbered fields of spaced apart pairs of video fields, either as full video frame or in the VBI.

Using The Control Track

It is well understood that modern video recorders typically have a capstan for pulling the cassette tape past a rotating video head drum. The control track 42c on the tape is normally provided for recording a synchronization pulse for synchronizing the rotation of the capstan with the rotation of the video head drum. The synchronization pulse is conventionally a 30 Hz pulse, with only the leading edge being used for the synchronization. According to the present invention, directory information can be stored on the control track by modifying the control track pulse duty cycle so that the location of the flux reversal on a prerecorded video tape is modified so that these relative locations represent digital data.

FIG. 10a is a timing diagram showing the synchronization pulse recorded on the control track. FIG. 10d is a timing diagram showing the head signals generated by the control pulse edge detector shown in FIG. 10f. FIG. 10e is a timing diagram showing the head signals generated by the control pulse edge detector shown in FIG. 10f in response to the current flow shown in FIG. 10e. The negative going head signal shown in FIG. 10d corresponds to the leading edge of the control pulse shown in FIG. 10a which will not be modified during the encoding of data. In a standard video recorder, when no data is recorded, the falling edge of each pulse occurs at substantially the mid-point 4401 of a pulse interval. According to one implementation of the present invention, to encode one of the binary values (e.g. "0"), the falling edge is shifted forward (the corresponding positive going head signal shown in FIG. 10d is also shifted), e.g. to a time 44 or at about 37% of the pulse width 4402 from the rising edge. To encode another one of the binary values (e.g. "1"), the falling edge is shifted backward, e.g. to a time 4403 at about 63 % of the pulse width from the rising edge. Alternatively, the time of the pulse width may be other values, e.g., a "0" may be 30% and a "I" may be 70%. The position of the positive going head signal is shown in its modified location by the circuit 4400 to be described in connection with FIGs. 10f and 10g depending on the data that the signal represents.

Because the leading edge of the pulse in FIG. 10a or the corresponding negative going pulse in FIG. 10d is not rewritten, the timing between negative going pulses is uniformly spaced at the control track 30 Hz frequency. However, in areas where two separate recordings adjoin, this uniform timing may not be met and the written data may be in error. Thus, it may be necessary to use preambles and post-ambles to identify encoded data and either error detection codes such as cyclic redundancy codes or checksums to ensure data integrity. FIG. 10b is a timing diagram showing the synchronization pulses recorded on the control track when a binary bit "0" is to be written at one time instant (one frame) and a binary bit "1" is written at another time instant (another frame).

Normally, the synchronization pulses on a control track are recorded by saturated magnetization. To alter the timing of a falling edge, appropriate current must be applied to shift the magnetization at the altered portion of the track. To advance the falling edge, as when a "0" is to be written, a first current (e.g. negative) must be applied so as to cause the magnetization between time 4402 and time 4403 to be in one direction. To delay the falling edge, as when a "1" is to be written, a second current opposite in polarity to the first current (e.g. positive), must be applied so as to cause the magnetization between time 4402 and time 4403 to be in another direction.

FIG. 10f is a block diagram of a circuit 4400 for controlling the reading and writing of encoded data signals on the control track. Fig. 10g is a detailed schematic of the circuit 4400. The circuit 4400 comprises a current steering network 4405 which comprises a plurality of analog current switches controlled by a microprocessor 4413 (for clarity, control signals are not shown in FIG. 10f). The microprocessor 4413 is preferably a NEC 78238 microprocessor. By activating the appropriate switches, current may be driven through a control head in a desired direction and at a predetermined timing relation to the leading edge of the control pulse.

The current steering network 4405 has a current source 4406 which provides a constant current through a control switch 4411 into two current paths, a first path formed by current switches 4408 and 4410, and a second path formed by current switches 4407 and 4409. The control inputs of current switches 4408 and 4409 are coupled to a common control signal (ASC3). The control inputs of current switches 4407 and 4410 are coupled to another common control signal (ASC4). To write a "0" to the control track, current switches 4408 and 4409 are closed and current switches 4407 and 4410 are opened during the time duration between 4402 and 4403. As a result, a current passes from the current source 4406 through the current switch 4408 into the lower terminal of the control head, exits from the upper terminal of the control head and passes through the current switch 4409 to ground. To write a "1" to the control track, current switches 4407 and 4410 are closed and current switches 4408 and 4409 are opened during the time duration between 4402 and 4403. As a result, a current passes from the current source 4406 through the current switch 4407 to the upper terminal of the control head, exits from the lower terminal of the control head and passes through the current switch 4410 to ground.

By selectively controlling the closing and opening of the two pairs of current switches, current of opposite polarity can be caused to flow through the coil of the control head, as illustrated in FIG. 10c. The current changes the direction of magnetization of the control track, advancing the flux change in one instance and delaying the flux change in another instance, thereby recording encoded data onto the track. As described, information is encoded on the control track at one bit per frame as illustrated in FIG. 10e. In other embodiments, different duty cycles may be used to encode different values; for example, if 32 different duty cycle values are used, then 5 bits of information can be encoded into one frame.

Data written on the control track 42c are read by the control pulse edge detector circuit which comprises generally a preamplifier for amplifying the control pulse read from the tape and a comparator for generating a pulse corresponding to the logic level recorded on the tape 42. The edge of this logic pulse corresponds to the flux transitions on the tape.

The pulses on the control track 42c are used for controlling the motor speed controller. By monitoring the period of the control pulse using the microprocessor 4413 the tape speed is known. The microprocessor 4413 can then control the motor speed control circuit to keep the tape speed within a reasonable range during the time when control pulses are rewritten. To prevent sudden flux changes from adversely affecting the play/record serve amplifier, a pair of isolation switches are provided to isolate it from the rest of the circuit.

FIG. 10i is a block diagram for an alternate embodiment of the circuit for encoding and decoding data on the control track shown in FIG. 10f. This circuit operates in a manner similar to that of FIG. 10f.

## Writing on Control Track

In order to avoid disastrous result of leaving the current switches on while the tape is free running, a software write protect check is implemented. Writing is permitted only when a shorting bar is inserted between pins 32 and 33 of the microprocessor 4413.

The control pulse is fed to a pin 24 of the microprocessor 4413, and an interrupt INTP3 is conditioned to respond to the positive going edge of the signal. This triggers a capture register TMO internal to the microprocessor 4413. The first pass through of the routine is to note down the reading of the capture register. The second interrupt cycle, and all the subsequent ones, read the capture register and establish the length of the previous cycle by subtracting the last register content from the current register content. This value is used as the current cycle length, assuming that the speed can not vary so rapidly. By shifting this value 2 places to the right, the value is divided by 4. Since a 25 percent value is to be the threshold value in a timer TM1 internal to the microprocessor 4413, and the timer TM1 is fed by a 1/64 dock (CLK) instead of a 1/8 CLK as the capture register TMO, a further shift of 3 more places is done. This shifted value is then stored in a register _T25 in the microprocessor 4413. A further right shift of 1 place provides the 12.5 percent value (1/8 clock), which is then stored in a register _T12 in the microprocessor 4413. The values in the registers _T12 and _T25 are added together to generate a 37.5 percent value, which is stored in a register _T37 in the microprocessor 4413.

In between the interrupt responses and the above calculation are the turning off of the gain clamp switches and the turning off of the VCR amplifier switches. The microprocessor 4413 then looks the polarity of the data that is to be written. If it is a zero, the microprocessor 4413 then subtracts the value in the register T1 from the value in the register _T37, and loads the result into the compare register of timer TM1. The value in the register T1 is a constant representing the dead time used in performing the above calculations and the overhead of the interrupt. The microprocessor 4413 then waits for the timer TM1 to expire, and commands, using a signal ASC3, the current switches 4408 and 4409 to open and using current from the current source 4406, creates a flux reversal on the tape at this point. At the same time, the microprocessor 4413 reloads the timer TM1 with the value in the register _T37 after subtracting another empirical time constant T2 from it. When the timer TM1 expires, it then turns off the current, allowing the head inductance current to recover through a 10K resistor to ground. After a time of about 600 microseconds, the microprocessor 4413 turns off the steering switch 4405, turns on the VCR preamp switch, releases the gain clamp, clears the interrupt status of INTP3 caused by the switching currents, restores the registers, and exits the interrupt routine.

If the data to be written is a one, the process is similar except that instead of using the register _T37 to start the current, a register _T25 is used. Instead of providing the signal ASC3, a signal ASC2 is provided. The microprocessor 4413 uses the same register _T37 for the duration of the current. But because it starts the current earlier, it also finishes earlier. Therefore, a value T12 is added to the end of the cycle after the current steering switches are off before turning the VCR preamp back on.

In one specific embodiment where directory information is stored on the control track, the tape contains only one single valid directory and a plurality of obsolete directories corresponding to the number of times the tape has been played and ejected from the VCR 1. The valid directory is distinguished from the obsolete directories by a marker system to be described later.

In another embodiment, each time the directory is read into the local RAM memory, the directory is erased from the tape. During the process of tape ejection from the VCR 1, the updated directory is rewritten onto the tape at the place of ejection such that only one directory is maintained on the tape. The disadvantage of this embodiment is the added hardware and time required to selectively erase the directory without disrupting the control or video signals.

Directory

For HR and RI tapes, the directories are stored in the RAM 33 and referenced either by the TIDs which are written repeatedly on line 19 of the VBI for HR tapes or by a tape number inputted by the user, which the indexing VCR 10 uses to cross reference to a TID for RI tapes. For PR tapes, the directory is written repeatedly, preferably as often as space allows, on line 20 of both fields of the VBI. Alternatively, the directory is written repeatedly on a line pointed to by a pointer in line 21, field 2. As a default, if the indexing VCR 10 cannot find a pointer in line 21, it looks for the directory in line 20. The recording format is per the E.I.A. specifications on Extended Data Services. The directory is stored as D(N) data packets, defined below in conjunction with FIG. 13, which contains all the information that relates to a program entry in the directory. Alternatively, the D(N) packet may be written in two or more lines to speed up the read process. Also, the D(N) packet may be written at a faster rate, such as two to four times faster, than the E.I.A. specification. The D(N) data packet contains a program entry where N ranges from 1 to the maximum program numbers in the directory. For PR tapes, the TID and the program number are repeatedly written on both fields of line 19 of the VBI.

For RI tapes, the RAM 33 is capable of storing the program number and up to 32 characters per title.

When a PR tape is inserted into an indexing VCR 10, the indexing VCR 10 reads the VBI line 19 to quickly determine the TID and program number and then stops. When the user presses the Index button, the indexing VCR 10 determines from the TID that the tape is not a HR tape. The indexing VCR 10 then goes into PLAY mode and reads the directory from VBI line 20 and displays it on-screen.

**Automatic Back-up of the Library in the RAM 33**

As noted above, the library is stored in a nonvolatile memory or a battery backed-up RAM 33. Although lithium batteries have a 5-7 year shelf life, this life may be shortened by power outages. In addition, catastrophic chip failures may occur. Consequently, the indexing VCR 10 periodically displays a prompt to the user to back-up the library by downloading the contents from the RAM 33 through the serial port to a magnetic tape, floppy disk or external memory device. Even with this prompt, some users are likely to not back-up the library. In addition, if a low battery warning is provided, the user may also ignore this warning. When the failure occurs, the user will have experienced a catastrophic loss of his entire library when the battery has been drained or the memory chip has failed. The library may be recreated as each tape is played for the first time after the loss in the indexing VCR 10. However, this approach is time consuming and limits the user's ability to perform search functions of the tape library.

The indexing VCR 10 may automatically provide back-up by writing the directory onto a tape while it is making another recording. In particular, the indexing VCR 10 may write the whole library onto a predetermined VBI line. For example, a 250k bit library may be backed-up during one recording, e.g., assuming 16 bits per line and 1 line per field at 60 fields per second, it takes 273 seconds to complete this library back-up. Because most recordings are at least half an hour long, the backing-up is completed before the recording has been completed. A nonvolatile memory, such as an EEPROM, may be included as part or separate to the microprocessor controller 31 in the indexing VCR 10 for storing the location of the library copy, the TID, and the program number or address of the tape on which the directory is recorded. As a back-up to the tape being either defective or recorded over in a non-indexing VCR 10, the locations of the latest three copies of the library can be stored in the EEPROM. Upon the occurrence of a battery failure or a RAM chip failure, after the indexing VCR 10 is repaired, the indexing VCR 10 can display a prompt on screen to request the user to insert the tape containing the latest copy of the library by displaying the tape number corresponding to that tape. Upon insertion of the tape, the indexing VCR 10 verifies the TID of the tape and is able to advance or rewind to the location of the directory using the read program number and the destination program number read the EEPROM. As the tape is being read, the indexing VCR 10 uploads the library packet into the RAM 33.

Data Formats

For the data packets described below in conjunction with FIGs. 11-17, a byte refers to a seven bit data symbol plus an eighth bit which is reserved for a parity bit.

FIG. 11 is a schematic view showing the data format for the directory recorded on prerecorded tapes. A data packet 9100 begins with a start code 9101 having a length of one byte. The start code 9101 preferably has a value of 01 hex. A type code 9102 follows the start code 9101. The type code has a length of one byte. The type code 9102 preferably has a value 0X01. The next two bytes are a number of titles symbol 9103. The number of titles symbol 9103 represents the binary number coded in seven bit ASCII for the number of titles in the directory. In the preferred embodiment, only ASCII symbols '0'-'9' and 'A'-'Z' are used. For example the ASCII string 'IF' represents the number 1FX. Since two ASCII characters are used, the largest number of titles is FF hex (256). Following the number of titles symbol 9103, a first program entry 9104, a second program entry 9105, and an Nth program 9106 contain the information related to N programs (FIG. 11 shows only the first, second and Nth program entries for simplicity and clarity). Each program entry is a fixed length and contains a group of 37 byte long symbols. The first four bytes represent the binary address coded in seven bit ASCII, in a manner similar to that described above, for the number of titles symbol 9103. For example, the ASCII characters string "3F1A" represents the address of 3F1A hex. Since four ASCII characters are used, the largest number is FFFF hex (65535). The fifth byte of the program entry represents the recording mode. A value 0X00 is the Standard Play (SP) mode, a value 0X01 is the Long Play (LP) mode, a value 0X10 is the Super Long Play (SLP) mode, and the values 0X11-OX7F are reserved. The remaining 32 bytes of the program entry represent the program title code. The program title code is preferably coded in seven bit ASCII. An end code 9107 having a 1 byte long symbol follows the Nth program entry 9106. The end code 9107 preferably has a value 03 hex. The data packet 9100 ends with a checksum 9108 that is one byte long symbol. The checksum 9108 makes the modulo 128 sum of the whole data packet equal to zero, i.e., modulo 128 (start code 9101 + type code 9102 + number of titles 9103 + program entries 9104, 9105, 9106 + end code 9107 + checksum 9108) equals zero. For prerecorded tapes, the directory is repeated as often as space allows in the VBI. Typically this means once every few seconds.

FIG. 12 is a schematic view showing the data packet format for the tape identification number (TID). For PR tapes, the tape I.D. is written repeatedly on one line of the VBI. For HR and RI tapes, the TID is written on the control track after the address mark at the beginning of each program and at the end of the last program. For HR tapes, the TID is also repeated as often as possible on the tape preferably once every few seconds. For RI tapes, during the first pass of re-indexing, these are no other TIDS. During the next play of the tape, additional TIDS are inserted as often as possible, preferably on the order of once every few seconds. In addition, the TIDS are interleaved with an address packet. As will be described below, the TID is a 48 bit number for HR and RI tapes. This number is composed of a header, a random machine identification number, and a tape number. Consequently, the danger of tapes having the same identification will be minimized. For PR tapes, the TID corresponds to the UPC code of the tape (a 12 digit number). This way city libraries, tape rental or retail stores can all adopt the TID of the indexing system.

A TID data packet 9120 is twelve bytes long. For the TID data packet, a byte refers to a seven bit data symbol plus an eighth bit which is reserved for a parity bit. The data packet 9120 begins with a start code 9121 having a length of one byte. The start code 9121 preferably has a value 01 hex. Following the start code 9121, a type code 9122 having a one byte long symbol and preferably has a value 0X04. A tape I.D. 9123 follows the type code 9122 and is eight bytes long. As noted above, the tape I.D. 9123 is determined differently for the type of tape. For a PR tape, the tape I.D. 9123 is a twelve digit UPC code which is a 48 bit number with most significant bit (MSB) of less than 0F0 hex. For HR and RI tapes, the tape identification 9123 is composed of three parts. The first part is an eight bit header in the MSB which is equal to 0FF hex. The next 24 bits are an identification generated by a random number sequence to generate a high probability of uniqueness for each VCR. The 24 bit machine I.D. is created as a random number which is seeded by some condition that will most likely be different between users. In a first implementation the 24 bits is broken into two twelve bit numbers. At the first power up of the VCR, the counter is initialized with counting pulses of less than .25 milliseconds duration. The counter is stopped by the user's first and second key pressing on the remote controller. These two twelve bit random numbers are then combined to form the machine identification. Because the counter is very fast and the key pressed by the user is very random, the machine identification should be sufficiently random so that two VCR's will have a chance of approximately one out of sixteen million to have identical machine I. D.'s. A 16 bit tape number follows the machine I.D. which allows for 65536 tapes in one VCR. An end code 9124 follows the tape I.D. 9123 and is one byte long. The end code 9124 preferably has a value of 03 hex. A checksum 9125 follows the end code 9124 and is one byte long. The checksum 9125 makes the modulo 128 sum of the whole directory packet zero, i.e., modulo 128 of (start code 9121 + type code 9122 + tape I.D. 9123 + end code 9124 + checksum 9125) equals zero.

In an alternate embodiment, the machine identification portion of the 48 bits of the tape I.D. 9123 may be the Julien day, hour, and minute when the VCR is first put into use.

## Second Embodiment of Data Format

FIG. 13 is a schematic view showing the format for the directory packet recorded in the VBI for prerecorded tapes. The directory preferably provides up to 32 characters per table. A D(N) packet 2601 has the following symbols: start code, type, N, start address, stop address, record speed, program category, version, language, title text, expand byte, stop code and checksum. Table VII shows the length in bytes and the value for each symbol. The N symbol represents the program number in the directory when N is greater than 0. Each byte is a coded text number from 30 hex to 3F hex which equates to 0 hex to F hex (when N equals 0, the packet described below in conjunction with FIG. 14 is used to represent the title of the tape). The start address symbol represents the number of minutes measured in the SLP mode from the beginning of the tape to the beginning of the program. The stop address symbol represents the number of minutes measured in the SLP mode from the beginning of the tape to the end of the program. Each byte of the start address and stop address symbols is a coded hexadecimal number from 30 hex to 3F hex which form a number having the largest possible value of FFF hex. A record speed symbol defines the recording speed of the program. The recording speed symbol represents the optimal tape speed at which the indexing VCR 10 should record the program. For example, a super long play speed may be transmitted for programs, such as sports or nature programs, where the user may want to use the freeze frame feature. As another example, a standard play speed may be transmitted for recording long programs so as to conserve tape. If the recording speed is defined to be blank, the length is defined based on SLP for better resolution. An "undefined" recording speed is used when the recording speed changes during a program. Undefined values are reserved for further expansion. A program category (PC) symbol is defined per the E.I.A. definition. The version symbol identifies the version of the program titled format. For versions other than 20 hex, the indexing VCR 10 ignores the following bytes up to a terminator code (which is preferably 1E hex) and displays the titled text as a blank line. A language symbol represents different languages. The title text symbol has a length of M bytes where M is a variable even number, preferably not greater than 40, including the 1E hex terminator code. The title text symbol represents the program title in ASCII and is terminated by the character 1E hex. If the character number is odd, one more null character is added before the terminator code. In addition, an attribute character can be added to the title text to enhance the indexing display. The attribute character starts with a value of ID hex which is followed by a character in the range 20 hex to 7F hex. Attribute codes are defined below. The expand byte symbol has a length of N bytes where N is a variable even number from 0 to 6. The expand bytes are used for expansion code for the indexing VCR 10. The checksum symbol is defined as the modulo 128 sum of the packet from the start code to the stop code. As will be described below, the D(N) data packet 2601 is encrypted and must be decrypted by an algorithm in the microprocessor controller 31 (FIG. 1) or the chip 702 (FIG. 7) in the indexing VCR 10.

## Table VII

| Symbol | Length (Bytes) | Value |
|---|---|---|
| Start Code | 1 | 07 hex |
| Type | 1 | 7E hex |
| N | 3 | Each byte coded hex number. 30 – 3F hex |
| Start Address | 3 | Each byte coded hex number. 30 3F hex |
| Stop Address | 3 | Each byte coded hex number. |

| Symbol | Length (Bytes) | Value |
| --- | --- | --- |
| Record Speed | 1 | 30 - 3F hex<br>20 hex: LP<br>21 hex: SP<br>22 hex: SLP<br>23 hex: blank<br>24 hex: undefined<br>Others: Reserved |
| Program category (PC) | 1 | Per E.I.A. definition. |
| PC Extension | 1 | 20 hex: non-broadcast indexed material.<br>21 hex: video magazine.<br>22 hex: sales catalog.<br>23 hex: classified ads.<br>24 hex: 7F hex: reserved. |
| Version | 1 | 20hex: first version |
| Language English | 1 | 20 hex to 7F hex, 20 hex: |
| Title text Hex | m | Terminator code: 1E |
| Expand Byten byte | | Even number 0 to 6; each 20 hex - 7F hex. |
| Stop Code | 1 | OF hex. |
| Checksum | 2 | 00 hex - 7F hex |

FIG. 14 is a schematic view showing the format for the directory packet D(0) for the tape title recorded in the VBI for prerecorded tapes. A D(0) data packet 2602 has the following symbols in order: start code, type, N, length, reserve, reel diameter, reserved, version, language, title text, expand byte, stop code and checksum.

Table VIII shows the length in bytes and the value of each symbol. The D(0) data packet 2602 is predefined as the tape parameter packet for both HR and PR tapes. The length symbol indicates the length of the tape in minutes at the SLP speed. Each byte is a coded hexadecimal number which provides a value in the range of 000 hex to FFF hex. The reel diameter symbol indicates the physical diameter of the tape reel in millimeters. The version symbol indicates the version of the tape title format. For versions other than 20 hex (the first version), the indexing VCR 10 ignores the following bytes up to the terminator code contained within the title text symbol and displays the text title as blank line. The language symbol represents the different languages around the world. Other values for the language symbol may be defined by the manufacturer of the indexing VCR 10. The length of the title text is in bytes where M is a variable even number including the terminator code. The title text symbol represents the tape title in ASCII and is terminated by the character 1E hex. If the character number is odd, one null character is added before the terminator code IE hex. An attribute character can be added to the text at a later stage. The expand byte symbol has a length of N bytes where N is a variable odd number ranging from zero to five. The value of the check sum is the modulo 128 sum of the packet from the start code to the stop code.

Table VIII

| Symbol | Length (Bytes) | Value |
| --- | --- | --- |
| Start Code | 1 | 07 hex |
| Type | 1 | 7E hex |
| N | 3 | Byte 1,2,3:30 hex, 30 hex, 30 hex |
| Length | 3 | Each byte coded hex number 03 hex to 3F hex |
| Reserve | 3 | 30 hex, 30 hex, 30 hex |
| Reel Diameter | 2 | Each byte coded hex number, 30 hex - 3F hex |

Table VIII   (continued)

| Symbol | Length (Bytes) | Value |
|---|---|---|
| Reserved | 1 | 30 hex. |
| Version | 1 | 20 hex: first version |
| Language | 1 | 20 hex to 7F hex, 20 hex: English |
| Title text | m | Terminator code: 1E hex |
| Expand Byte | n | Odd number 0 to 5; each byte 20 hex -7F hex. |
| Stop Code | 1 | 0F hex. |
| Checksum | 2 | 00 hex - 7F hex |

FIG. 15 is a schematic view showing the format for a TP packet recorded on the VBI for HR tapes and PR tapes. A TP packet 2603 contains both the TID 2604 and the program number. The TP packet has the following symbols: start code, type, TID, reserved, N, stop code and check sum.

Table IX shows the length in bytes and the value for each symbol. The TID symbol contains 10 bytes where each byte represents 4 bits, as will be described for the TID described in FIG. 16 for an HR tape and in FIG. 17 for a PR tape. The N symbol is defined to be the program number with each byte representing four bits for a total length of twelve bits. For communication between the indexing VCR 10 and the external device 73, the 12 bit item N may be used for other purposes. The checksum is the modulo 128 sum of the packet from the start code to the stop code.

TP Packet on VBI

Table IX

| Symbol | Length (Bytes) | Value |
|---|---|---|
| Start code | 1 | 07 hex |
| Type | 1 | 7D hex |
| TID | 10 | Each byte is coded hex number 30 hex - 3F hex |
| Reserved | 1 | 30 hex |
| N | 3 | Each byte is coded hex number 30 hex - 3F hex |
| Stop Code | 1 | 0F hex |
| Checksum | 2 | 00-7F hex |

FIG. 16 is a schematic diagram showing the TID for an HR tape. The T1D 2604 is a 5 byte number. Bit 39 and bits 38-31 are 0. Bits 30-16 are the machine ID. Bits 15-0 are the tape number. As described above, the 15 bit machine ID is a random number generated by the indexing VCR 10 at its first power up. This provides a 1 in 32,768 probability that two indexing VCRs have identical machine IDs. A 16 bit tape number allows each indexing VCR 10 to have 65,536 tapes stored in the RAM 33. Alternatively, the tape number may be composed of a different number of bits.

FIG. 17 is a schematic diagram showing the TID for a PR tape. As with the TID for an HR tape, the TID for a PR tape is a 5 byte number. Bit 39 is one, bits 38-0 are the eleven digit UPC number represented in binary form without the parity digit. By using the UPC number, businesses, such as libraries, tape rental stores, and retail outlets, can adopt the TID. Accordingly, usage of PR tapes can be monitored and analyzed. When the TID is stored into the RAM 33, 5 bytes is preferred. However, if only 4 bytes are recorded, bits 0-30 and bit 39 are stored in the RAM 33.

Operation

FIG. 18 is a flow chart showing the steps employed in the operation of an indexing VCR using a FMAS addressing system for writing a tape identification number, an address, and a directory to a home recorded tape (HR tape) during recording or ejection. When a tape is in the VCR and the directory controller 30 knows the present tape identification number and the current address, the VCR is ready for recording on the tape or ejecting the tape (step 9200). The microprocessor controller 31 reads the TID and the address from the control track 42c. For existing HR tapes, the TID and address are read from the control track 42c. For a new blank tape, the microprocessor controller 31 assigns a TID to the tape and resets the address to zero. The microprocessor controller 31 waits for either a record signal or an eject command. If a record signal is received (step 9201), the microprocessor controller 31 reads the program identification number from the VBI of the signal that is to be recorded (step 9202). It is assumed that the microprocessor controller 31 has already retrieved the directory for the inserted tape if the inserted tape is an existing HR tape. For a new blank tape, the microprocessor controller 31 creates a new directory in the RAM 33. For this recording, the microprocessor controller 31 initializes the address, the title and the tape speed in the RAM 33. If no title is read from the VBI (step 9202), the microprocessor controller 31 uses a date time stamp as the title (Step 9203). The microprocessor controller 31 then commands the VCR control logic circuit 21 and subsequently the control and audio track head logic circuit 11 to write the TID and the address on the control track 42c. (Step 9204) The microprocessor controller 31 continues to write the date and address on the control track 42c until a command to stop recording is received. (Step 9206) The microprocessor control 31 then returns to a ready state where it awaits a further command at step 9200.

On the other hand, if a command to eject the tape is received (Step 9207), the microprocessor controller 31 updates the directory that is stored in the RAM 33, including the current tape location (current LOC) flag 1049 (See FIG. 3) which indicates the absolute address of the location of the tape when the tape is ejected referenced to the beginning of the tape. If the tape is a new blank tape (Step 9209), the microprocessor controller 31 displays on the video display 50a the tape number of the tape, so that the user can then mark the housing of the cassette 40 with this new number for subsequent identification. The VCR control logic circuit 21 then commands the motor and mechanical control circuit 5 to eject the tape (Step 9212).

FIG. 19 is a flow chart showing the steps employed in the operation of an indexing VCR using a VISS PLUS TP addressing system of writing a tape identification and a program number to a home recorded tape (HR tape) during recording. Like steps to FIG. 18 have like numbers. When a tape is in the VCR and the directory controller 30 knows the present tape identification and the current program number, the indexing VCR 10 is ready for recording on the tape or ejecting the tape (step 9200). The microprocessor controller 31 reads the TID and the program number from the VBI. For a new blank tape, the microprocessor controller 31 assigns a TID to the tape and resets the program number to one. The microprocessor controller 31 waits for either a record signal or an eject command.

When a record signal is received (step 9201), the microprocessor controller 31 reads the program identification (Program I.D.) from line 21, field 2 of the VBI of the signal that is to be recorded (step 9202). It is assumed that the microprocessor controller 31 has already retrieved the directory for the inserted tape if the inserted tape is an existing HR tape. For a new blank tape, the microprocessor controller 31 creates a new directory in the RAM 33. For this recording, the microprocessor controller 31 initializes the program number (and address in VCRs having an absolute address system), the title, the tape speed, length, and the program category in the RAM 33. If no title is read from the VBI (step 9202), the microprocessor controller 31 uses a date-time stamp as the title. (Step 9203') The microprocessor 31 then commands the VCR control logic circuit 21 and subsequently the control and audio track head logic circuit 11 to continuously write the TID and the program number as a TP data packet on line 19 of the VBI (Step 9204'), until a command to stop recording is received. (Step 9206) The microprocessor control 31 then returns to a ready state where it awaits a further command at step 9200.

On the other hand, when a command to eject the tape is received (Step 9207), if the tape is a new blank tape (Step 9209), the microprocessor controller 31 displays on the video display 50a the tape number of the tape, so that the user can then mark the housing of the cassette 40 with this new number for subsequent identification. The VCR control logic circuit 21 then commands the motor and mechanical control circuit 5 to eject the tape (Step 9212).

After the indexing VCR 10 has started a recording, it reads line 21 field 2 to find the title of the show and write it into the directory in the RAM 33. If the clock of the indexing VCR 10 has not been set correctly or if the program starts slightly later than scheduled, the retrieved title may be that of the previous program. In one embodiment, the indexing VCR 10 waits a predetermined time, such as 30 seconds, after the recording starts before reading and storing the title. On the other hand, for the recording of broadcasted video magazines, the indexing VCR 10 may read and store the title right after receiving the VM packet, because the VM packet and the new section title are synchronized.

Retroactively Indexing A Previously Recorded Tape

FIG. 20 is a flow chart showing the steps employed to write a tape identification, an absolute address and a directory to create a retroactively indexed tapes by an indexing VCR using a FMAS or LRAS addressing system. As described above, the retroactively indexed (RI) tape has a preexisting plurality of programs recorded thereon. A user who has a VCR or camcorder before owning an indexing VCR also has an existing collection of video tapes. The user may want to retroactively create an index of each tape to be able to utilize the indexing capabilities of the indexing VCR. Thus, in the preferred embodiment, the directory is created and stored in the RAM 33, and the TID and the absolute addresses are stored on the control track 42C of the RI tape.

The user inserts the un-indexed recorded tape (this tape is to become a retroactively indexed tape) into the VCR 1 and rewinds the tape to the beginning of the tape (BOT) (step 9220). The user then presses the index button on the remote controller 75 or 1300 and selects retro-indexing from the menu display on the screen 50a (step 9221).

Alternatively, the remote controller 1300 may have a retroactively indexed button. Upon that selection, the microprocessor controller 31 then writes a TID and an absolute address on the control track 42C (step 9222). The TID is randomly created in the manner described above in FIG. 12. The microprocessor controller 31 then displays on the display 50a a prompt to the user to enter the title of the first program or show on the tape and to press the ENTER button on the remote controller 1300 or alternatively to push button X to indicate that it is at the end of the tape (EOT) (step 9223). Button X may be any button on the remote controller 1300 that is not used for entering a title, for example the VCR Plus+™ button. Alternatively, the title of programs may be entered after all programs have been numbered. If the ENTER button has been pushed (step 9224), the microprocessor controller 31 then prompts the user on the video display 50 to fast forward (FF) the tape to the beginning of the next program and push button X (step 9226). The microprocessor controller 31 using the monitored signals from the tape movement sensor 22 and processed by the position logic and counter circuit 9 to calculate the tape distance traveled measured by counting the control track pulses and take-up spool spindle counts as described below (step 9227). Tape distance measuring methods are described below. The microprocessor controller 31 then repeats the process of writing the TID and the address on the control track 42C at step 9222 and prompts the user to enter the title of the show at step 9223. At subsequent passes through step 9222, the address now written on the control track 42C is the address calculated from the tape distance that has been traveled during the fast forward to the program at step 9227.

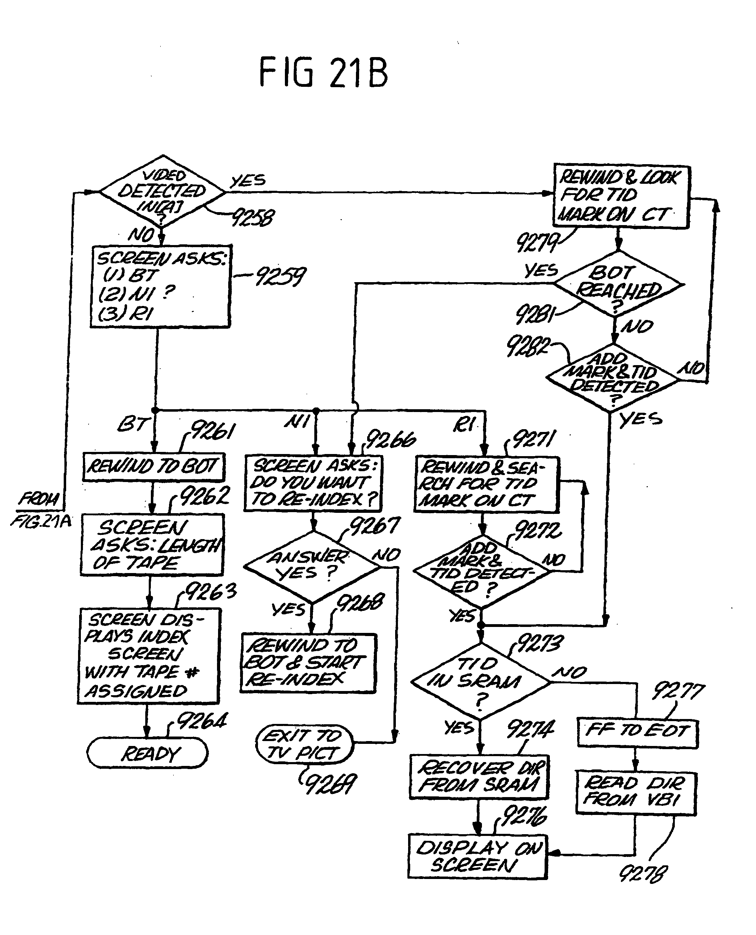

When button X has been pushed to indicate the end of tape (step 9228), the microprocessor controller 31 stores all the titles entered by the user at step 9223 into the RAM 33 in a memory location corresponding to the tape identification number (step 9229). The microprocessor controller 31 also displays the tape number to the user at step 9229 so that when the user ejects the tape he may write the tape number onto the cassette housing (step 9231). The tape has now been retroactively indexed so that the control track 42C contains the TID and address information and the directory information is stored in the RAM 33 of the VCR 1. The operation of the VCR when an RI tape is inserted therein is described below in connection with FIG. 21.

In an alternate embodiment to FIG. 20, at step 9222, the microprocessor controller 31 writes a VISS mark on the control track of the tape. In addition, a program number, such as 1 for the first program, 2 for the second program, and so forth, and a TID number are also written on the control track. The VISS marks are used for addressing when the tape is later played in the VCR. When the tape is inserted into the indexing VCR 10, the VCR reads the TID from the control track 42e. The microprocessor controller 31 then reads the directory associated with the tape from the RAM 33. Now knowing that the tape is a retroactively indexed tape, the microprocessor controller 31 searches the control track 42c for the VISS mark.

In embodiments where the TID is stored in the VBI for PR and HR tapes, when the RI tape is inserted into the VCR, the microprocessor controller 31 tries to read a TID from the VBI. After failing to find a TID in the VBI, the microprocessor controller 31 knows the tape is not a PR or a HR tape, and searches the control track for a VISS mark. When a VISS mark is found, the microprocessor controller 31 reads the TID recorded with the VISS mark and then retrieves the associated directory from the RAM 33.

Alternate Embodiment for Retroactively indexing An Old Tape

In an alternate embodiment to FIG. 20 for indexing VCRs using the VISS+TP addressing system, at step 9222 the microprocessor controller 31 writes a VISS mark on the control track 42c of the tape. The microprocessor controller 31 also generates a program number as described above in conjunction with FIG. 16. The microprocessor controller 31 prompts the user to enter the title of the show and to fast forward to the next program as shown in steps 9223, 9224, 9226, and 9228. In a system without absolute addressing, step 9227 is not performed. However, in systems with absolute addressing (VISS +TP+AA), the microprocessor controller 31 calculates an absolute address at step 9227. After the user has indicated that the last program has been entered at step 9229, the microprocessor controller 31 stores all titles, program numbers and the ejection program number into the RAM 33 and provides the user with a tape number for marking the cassette housing.

When this tape is later inserted into the indexing VCR 10, the microprocessor controller 31 attempts to find a TID in the VBI and when it is unable to find it, it displays a prompt to the user to enter the tape number. From this tape number, the microprocessor controller 31 reconstructs the TID and recovers the directory as well as the ejection program number from the RAM 33. Using the ejection program number as the current program number, the indexing VCR 10 is able to perform the indexing functions.

If the tape has been played in a non-indexing VCR since being indexed, the ejection program number will be different than the tape program number. In systems with absolute addresses, the indexing VCR 10 is able to recalculate its program number by using the detected address to determine its location from the directory, using the recalibration method described below in conjunction with 22s. 34a-22b.

Operation of Identifying Tape and Recovering Directory

FIGS. 21a-21b are flow charts showing the steps employed in the operation of the indexing VCR using a FMAS addressing system when a tape is inserted therein. When a tape is inserted into the VCR (step 9240), the microprocessor controller 31 commands the VCR control logic circuit 21 to play the tape for N seconds and read the control track for the TID and an address (step 9241: this step is referred to as step [A] in subsequent steps of FIGS. 21a-21b). N is preferably between 3 to 5 seconds. After reading a TID and an address from the tape, the microprocessor controller 31 commands the VCR control logic circuit 21 to stop the playing of the tape (step 9242). The microprocessor controller 31 waits until the INDEX button on the remote controller is pressed (step 9243). When the INDEX button is pressed, if a TID and an address were read at step 9241 (step 9244), the microprocessor controller 31 determines from the TID whether the tape is a (1) home recorded tape (HR), a (2) prerecorded tape (PR), or a (3) home recorded (HR) loaner (step 9246).

If at step 9246 the tape is a HR tape (step 9247), the microprocessor controller 31 recovers the directory 33a corresponding to the tape with that TID from the RAM 33 (step 9248). The microprocessor controller 31 then displays the recovered directory on the video display 58a (step 9249) and then enters a ready mode (step 9251). The ready mode is a mode in which the microprocessor controller 31 knows the current address and the TID.

If at step 9246 it is determined that the tape is a prerecorded tape (step 9252), the microprocessor controller 31 reads the directory to determine if the TID is stored in the RAM 33 (step 9253). If it is in the RAM 33, the microprocessor controller 31 recovers the directory from RAM 33 as described above in step 9248. On the other hand, if the TID is not in the RAM 33, the microprocessor controller 31 commands the VCR control logic circuit 21 to play the tape so that the microprocessor controller 31 can read the directory from the VBI on the tape (step 9254) and then displays the read directory on the screen at step 9249.

On the other hand, if the tape is determined to be a home recorded loaner tape (an HR tape that is indexed on a first indexing VCR that is played in a second indexed VCR that is not interconnected to the first VCR) at step 9246 (step 9256) the microprocessor controller 31 commands the VCR to fast forward (FF) to the end of tape (EOT) (step 9257) to read the directory from the VBI at step 9254.

However, if at step 9244 the VCR had not read a TID and address at step 9241, and referring now to FIG. 21b, the microprocessor controller 31 determines whether video was detected at step 9241 (step 9258). If no video was detected, the microprocessor controller 31 displays on the screen a query as to whether the tape is a blank tape, (BT), a non-indexed tape (NI), or a retroactively indexed tape (RI) (step 9259). If at step 9259 the tape is a blank tape, the microprocessor controller 31 commands the VCR control logic circuit 21 to rewind the tape to the beginning of tape (BOT) (step 9261) and display on the screen 50a a question asking the user to enter the length of the tape (step 9262). Alternatively, the microprocessor controller 31 may automatically determine the length of the tape using one of the length determination methods described below. The microprocessor controller 31 generates a new tape identification number for the blank tape and displays an index screen with the assigned TID (step 9263). The microprocessor controller 31 then enters a ready mode (step 9264).

On the other hand, if at step 9259 the tape is a non-indexed tape, the microprocessor controller 31 displays on the screen 50a the question "Do you want to re-index?" (step 9266). If the user answers yes (Step 9267), the microprocessor controller 31 commands the VCR to rewind the tape to the beginning of the tape and start re-indexing the tape as described above in FIG. 20. (Step 9268) If, however, the user does not want to re-index the tape, (Step 9267) the microprocessor controller 31 removes the screen and commands the VCR control logic circuit 21 to display the TV picture read from the videotape. (Step 9269)

If, however, the tape is a retroactively indexed tape at step 9259, the microprocessor controller 31 commands the VCR to rewind the tape and search for a TID mark on the control track. (Step 9271) The rewind and search continues until an address and TID are detected (Step 9272). The microprocessor controller 31 then searches the RAM 33 for a program with the detected TID, and if the microprocessor controller finds the TID in the RAM 33. (Step 9273), the controller 31 recovers the directory of the tapes associated with the TID on the RAM 33 (Step 9274) and displays the recovered directory on the screen 50a (Step 9276). On the other hand, if the microprocessor controller 31 does not find the TID in the RAM (Step 9273), it commands the VCR to fast forward to the end of tape (Step 9277) to read the directory from the VBI. (Step 9278) The read directory is then displayed on the screen at step 9276.

If video is detected at step 9241, the microprocessor controller 31 proceeds from step 9258 described above, to command the VCR to rewind the tape and look for a TID mark on the control track 42c (Step 9279) If the beginning of the tape is reached (Step 9281), the microprocessor controller 31 proceeds to treat the tape as a non-indexed tape at step 9266 described above. However, if the beginning of the tape has not been reached the VCR continues to rewind until an address mark and TID is detected in the control track 42c (Step 9282) and the microprocessor controller 31 determines whether to recover the directory from the RAM 33 or the VBI at step 9273 described above.

FIGS. 22a-22b are flow charts showing the steps employed in the operation of the indexing VCR, using the VISS PLUS TP addressing system, when a tape is inserted therein. Like steps to FIGs. 21a-21b have like numbers.

When a tape is inserted into the VCR (step 9240), the microprocessor controller 31 commands the VCR control logic circuit 21 to play the tape for N seconds and read the VBI for a TID and program number (step 9241': this step is referred to as step [A] in subsequent steps of FIGS. 22a-22b). The time N is preferably between 2 to 5 seconds. In an indexing VCR using a VISS PLUS TP addressing system and an absolute addressing system, the VCR also determines the absolute address. After reading a TID and program number from the tape, the indexing VCR 10 stops playing the tape (step 9242). After waiting for the INDEX button on the remote controller to be pressed (step 9243), if a TID and a program number were read at step 9241', the microprocessor controller 31 determines from the TID whether the tape is a home recorded tape (HR) or a prerecorded tape (PR) (step 9246'). The microprocessor controller 31 then operates as in FIGs. 21a-21b as described above for steps 9247 through 9254.

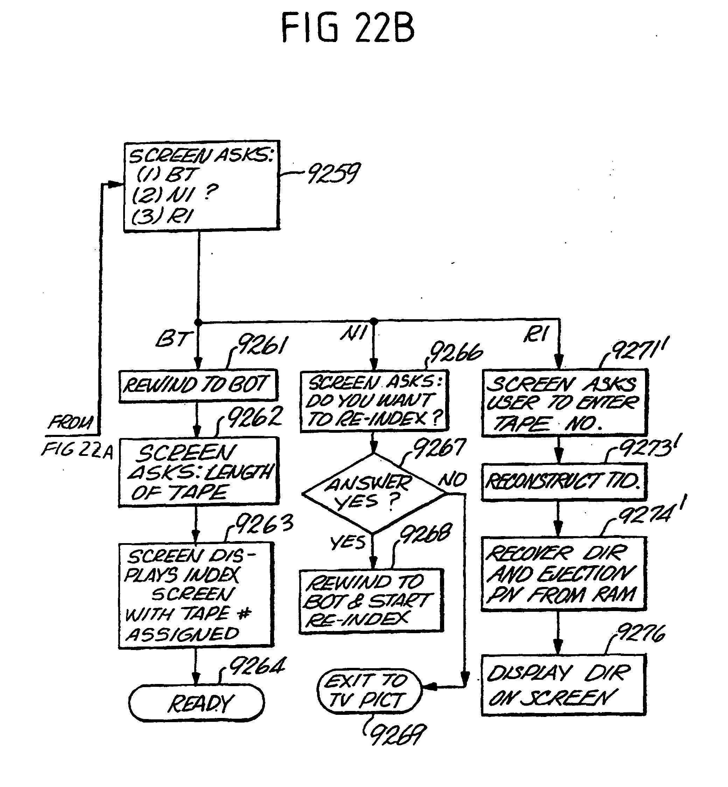

On the other hand, if at step 9244' the indexing VCR 10 had not read a TID and program number at step 9241', and referring now to FIG. 22b, the microprocessor controller 31 displays on the screen a query as to whether the tape is a blank tape, (BT), a non-indexed tape (NI), or a retroactively indexed tape (RI) (step 9259). If at step 9259 the tape is a blank tape, the microprocessor controller 31 operates as in FIGs. 21a-21b as described above for steps 9261 through 9264. On the other hand, if at stop 9259 the tape is a non-indexed tape, the microprocessor controller 31 operates as in FIGs. 21a-21b as described above for steps 9266 through 9269.

If, however, the tape is a retroactively indexed tape at step 9259, the microprocessor controller 31 displays on the screen 50a a prompt to the user to enter the tape number of the inserted tape (step 9271'). From this number, the microprocessor controller 31 reconstructs the TID of the tape (step 9273') and recovers from the RAM 33 the directory of the tape associated with the TID (Step 9274') and displays the recovered directory on the screen 50a (Step 9276).

RECOVERING AND DISPLAYING OF DIRECTORY ON-SCREEN

The general preference is that, when a tape is inserted into the indexing VCR 10, the directory is displayed on the screen as soon as possible after the user presses the Index button. However, several methods exist for displaying the directory.

In the first embodiment, the TID, program number, and directory are automatically read when the tape is inserted. In this method, when the tape is inserted, even without the Index button being pressed, the indexing VCR 10 automatically reads the TID and program number from line 19 of the VBI. After determining the type of tape, the indexing VCR 10 then recovers the directory from either the RAM 33 (for HR tapes) or line 20 of the VBI (for PR tapes). The indexing VCR 10 is then in a ready state for any user command. When the user presses the Index button at any later time, the indexing VCR 10 displays the directory on screen instantaneously. However, if the user requests non-indexing functions right after he inserts the tape, the indexing VCR 10 will not be ready until after the indexing VCR 10 has read the TID, address and directory.

In the second embodiment, the TID and program number are automatically read at tape insertion and the directory is read when the Index button is pressed. In this method, after the indexing VCR 10 reads the TID and program number at tape insertion, the indexing VCR 10 is then ready for user commands. When the user presses the Index button, the indexing VCR 10 recovers, having previously identified the type of tape, the directory from the RAM 33 or the VBI. By reaching the ready state sooner, the user is able to control the indexing VCR 10 sooner.

In an alternate embodiment to the second embodiment, the indexing VCR 10 reads and displays a portion of the directory, e.g., the first page, after the Index button is pushed. This takes less time than reading the entire directory. As the user is reading the displayed directory, the indexing VCR 10 recovers the remainder of the directory. Alternatively, the indexing VCR 10 recovers the remainder of the directory only in response to a user command, such as next page.

In the third embodiment, the indexing VCR 10 takes no action upon tape insertion. After the tape is inserted, the indexing VCR 10 is ready for user commands. When the user presses the index button, the indexing VCR 10 reads the TID, program number, and directory.

Directory In VCR RAM .

As described above, a library memory (LIBMEM) can be set up in the VCR, either as part of the RAM or separate from the RAM. In a specific embodiment, instead of storing directory information on a secondary memory (e. g. magnetic strip or semiconductor) or on the control track or video track of the tape, they are stored in the library memory LIBMEM.

In accordance with this specific embodiment, each tape for which a directory is stored in the LIBMEM is assigned a volume label (e.g. a volume number). When the tape is inserted into the VCR, the volume label is used to access the corresponding directory from the library.

It is anticipated that a tape, for which a directory is created in the LIBMEM of one machine, may be transported to another VCR. Such transportation poses several problems. First, if a machine wherein the above-described functions are not implemented, the tape position may be disturbed so that when the tape is returned, the current tape position is incorrect and the value of VOLNO as wall as the value of the tape reel counter at the eject point are lost. Second, even if the machine to which the tape is transported is capable of providing the above described functions, it may not have stored the directory of the tape.

According to the above implementation, a counter, VOLCNTR, is kept in a non-volatile memory. The counter provides a count of the number of tapes of which a corresponding directory is already kept in the LIBMEM (hereinafter called an "indexed tape"). The value VOLNO 1016 (see FIG. 2) of VOLCNTR can therefore be used for assigning a unique volume number to an unindexed tape (i.e. one which does not have a directory stored in the LIBMEM).

Refer to the flow chart shown in FIG. 23. When a tape 40 is inserted into the VCR 1, the microprocessor controller 31 checks whether the tape is indexed by reading the tape, at the point of insertion, for a volume number (step 4601). If a volume number is present, the tape is an indexed tape and the volume is used to retrieve a directory from the library (step 4602).

If a volume number is not present, the tape is searched for a volume number (step 4603). If a volume number is not found, the microprocessor controller 31 creates a directory for the tape in the library (step 4604). The creation includes the steps of retrieving the value of VOLCNTR from the memory, assigning that value to the tape (the VOLCNTR is also updated) and based upon the value of VOLNO allocating a space in the library to the tape. The space may be allocated based upon the value of VOLNO, such as by using the formula:

$$ADDR(new\ directory) = BASE + VOLNO * volsize$$

That is, the address of the directory for the inserted tape is equal to a base number (which may be equal to the starting address of LIBMEM plus a constant) plus VOLNO times the size of a directory.

The value of VOLNO is also displayed on a screen (step 4605). Preferably, numbered stickers are provided by the cassette manufactures and packaged with a new cassette. The user can then use the appropriate sticker(s) to label the cassette and/or its case or jacket.

Although not performed in this implementation, the microprocessor controller 31 may also write the value of VOLNO at this step to a predefined position of the tape (e.g. the beginning), using one of the methods described above. For example, the value of VOLNO may be written on a predefined location (such as the beginning) of the control track, or in a predefined VBI portion. It needs to be pointed out that if VOLNO is written on the." control track, existing sensing and electronic components can be used in reading its value and it can be accessed at fast forward or rewind speed, whereas if VOLNO is written on the VBI of the video track, a VBI encoder, such as the one disclosed above, is required and the value of VOLNO can be accessed only at PLAY speed.

Instead of writing it at the beginning of the tape, the value of VOLNO is written when the tape is ejected. When the tape is ejected: the value of VOLNO is written and the tape is rewound to the original stopping point (the "eject point"). The address of the eject point (e.g. the tape reel counter value) is also stored in a predefined field in the corresponding directory.

If a VOLNO is found on the tape, the tape position where the volume label is found is noted (step 4606). The volume label is then used to retrieve a directory from the memory (step 4607). The tape is then rewound to the beginning and the tape counter is reset. From the directory, the tape counter value of where the VOLNO should be found is also noted (step 4608). If these numbers match the tape position as noted in step 4606 (step 4611), the directory is assumed to be the right directory and the directory is used (step 4610). If the two numbers do not match, a directory is created in a temporary memory space; and when the tape is ejected, this directory will be deleted (i.e. not stored into the library) (step 4609).

In the above described embodiment, the contents of LIBMEM and VOLCNTR must not be lost due to a power failure of the VCR. In one implementation, the memory space of LIBMEM and VOLCNTR is provided by non-volatile memory devices such as electrically erasable programmable read only memory (EEPROM). In another implementation, battery backup is provided for the memory which form the two memory spaces. In another implementation, the directory of a tape is written back to the tape itself (either on the control track or in the VBI portion of the video track) at the point of ejection, so that the directory can be used, if necessary for recovery. In still another implementation, the content store in LIBMEM is periodically backed up to a "directory backup tape", which can then be used to recover the library after a power failure.

In another implementation, if the VCR fails to read the VOLNO when a tape is inserted, the microprocessor controller 31 sends a message to the screen to prompt the user for the value of VOLNO. The user can enter the VOLNO based upon the value shown on the sticker carried on the cassette housing. Based upon the inputted value of the VOLNO, the directory of the tape is accessed.

Library

In the specific embodiment of the present invention, a user is given the option to create a library of the directories for a set of selected tapes. Storage space is created in the RAM 33 for storing the library. The storage space of the library is divided into more than one group of entries, each for storing the directory of a tape (or a volume). A volume ID of the corresponding tape is stored in a predetermined location of each entry.

The library option is initiated when the "LIBRARY" key is pressed. The key can be pressed at anytime, such as when the user is recording a broadcast program or watching a recorded program from a cassette. Moreover, the key can be pressed when there is no cassette in the VCR.

Refer to FIG. 24g, when the microprocessor controller 31 is interrupted by the LIBRARY key (step 2771), it displays a screen such as FIG. 25o to prompt the user to enter one of two options (step 2772). Option 1 is an option to add a tape directory into the library, it can be selected only when a enhanced cassette is loaded in the VCR (step 2773). Option 2 is an option which allows the user to access content of the library and is typically selected by the user to search for a special program or a special type of program (step 2774).

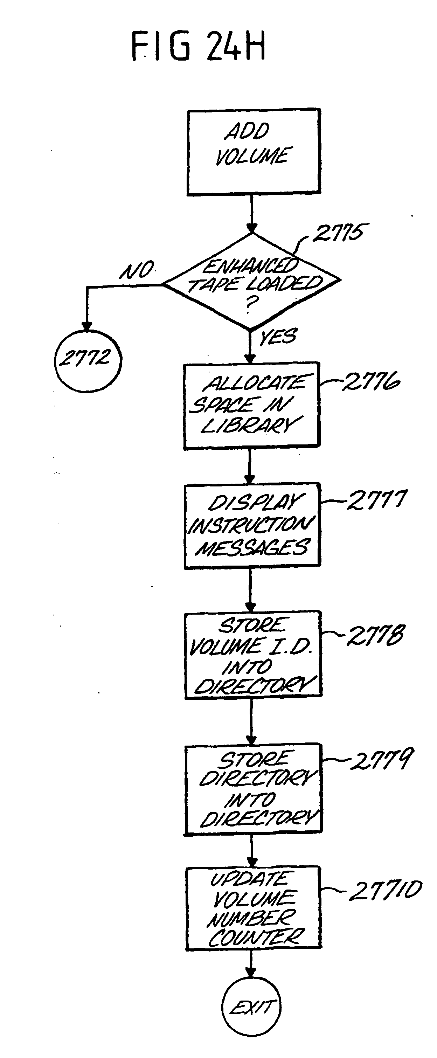

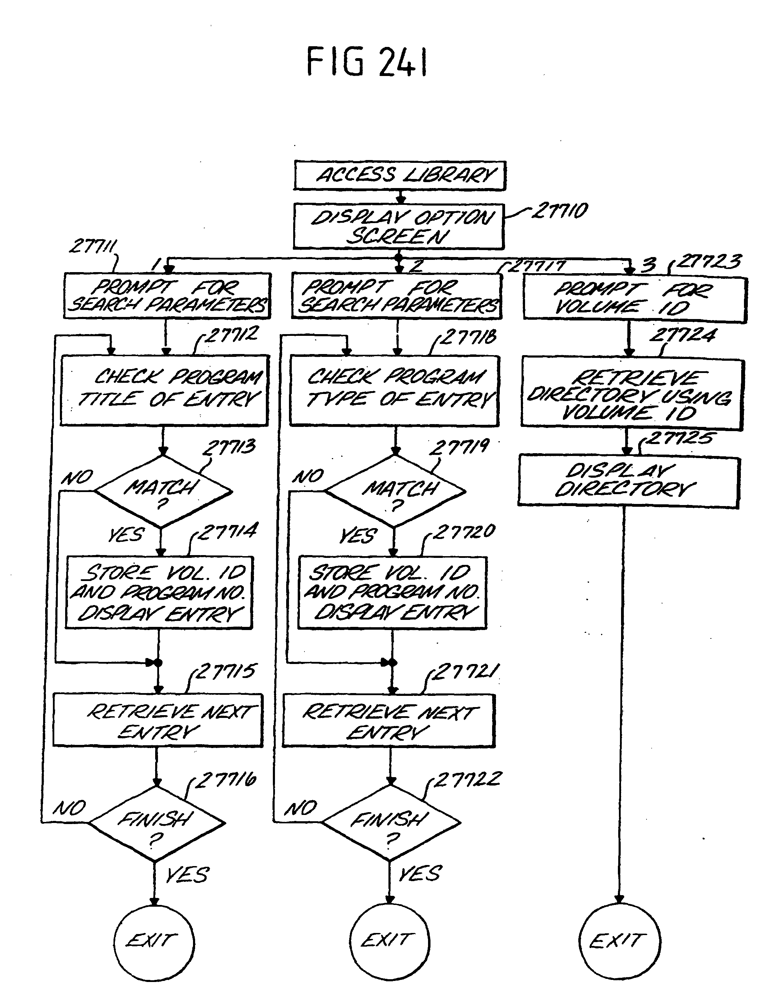

With reference to FIG. 24h. When Option 1 is selected, the microprocessor controller 31 detects whether a cassette is loaded in the VCR (step 2775). If no cassette is loaded, the microprocessor controller 31 displays a message, such as:

"THIS OPTION NEEDS AN INDEXED TAPE"

on the screen and returns to step 2772 of FIG. 24g. If an enhanced cassette is loaded in the VCR, the microprocessor controller 31 will allocate space in the library area for adding the directory (step 2776). In one implementation, the microprocessor controller 31 then prompts the user to enter an volume label. In a preferred implementation, a Volume Number Counter 1016 is kept in the RAM 33, (e.g. inside the operation flags area). This counter 1016 stores the next volume number to be assigned to a newly-added tape. When execution of the add" option begins, the microprocessor controller 31 takes the next volume number (assuming for purposes of illustration that it is 59) from the Volume Number Counter and assigns this volume number to the tape. Advantageously, if the library is implemented in such a way that each directory has a fixed amount of memory space, the volume number of a tape can be used as index to address the corresponding directory from the library.

In step 2777, the assigned volume number is displayed on the screen, accompanied by a message such as:

"THE VOLUME NUMBER ASSIGNED TO THIS TAPE IS 59"

"PLEASE AFFIX LABEL TO CASSETTE WITH THIS NUMBER"

For convenience, numbered stickers are provided from cassette manufactures and packaged with a new cassette. The user can then use the appropriate sticker(s) to label the cassette and/or its case.

The microprocessor controller 31 then stores the assigned volume number into a predetermined location (VOL ID) of the cassette's directory (step 2778). The VOL ID field in a directory can be used as an indication to the microprocessor controller 31 that such directory is stored in the library, so that the library can be updated if the directory is changed (e.g. when a recording is performed). The microprocessor controller 31 then writes the directory into the allocated library area (step 2779) and increments the volume number counter as the directory is successfully added to the library.

When Option 2 is selected at step 2774 and referring now to FIG. 24i, a screen such as FIG. 25p is displayed (step 27710). The user is given three options. Under the first option of FIG. 25p, the user can search for programs with specific program titles or subtitles (for example, programs which have a title containing the word "Yankee" or which has a letter "Z", "CA", etc.) (step 27711). Under the second option of FIG. 25p, the user can search a specific type of programs (e.g. a sports program) (step 27717). Under the third option of FIG. 25p, the user can display the directory of a particular tape volume (step 27723).

When option 1 of FIG. 25p is selected, the microprocessor controller 31 prompts the user for the search parameters by displaying the following message on the screen:

"PLEASE ENTER THE SEARCH TITLE/CHARACTERS"

Upon receiving the input, the microprocessor controller 31 searches through the directories of the library (step 27712). For each entry that matches the search request (step 27713), the microprocessor controller 31 displays the entry's program title and volume number (step 27714). The entry's volume number and program number within the directory are stored in a search buffer. The microprocessor controller 31 retrieves the next entry (step 27715) until it finishes (step 27716)

When option 2 of FIG. 25p is selected, the microprocessor controller 31 prompts the user for search parameters by displaying the following message on the screen:

"PLEASE ENTER THE TYPE OF PROGRAMS FOR THE SEARCH"

Advantageously, if the user does not remember the type classification, he can press a HELP key and all the available types are listed on the screen. When the user enters the type, the microprocessor controller 31 searches through the directories of the library. For each entry which matches the search request (step 27719), the microprocessor controller 31 displays the entry's program title and volume number (step 27720). The entry's volume number and program number are stored in a search buffer. The microprocessor controller 31 retrieves the next entry (step 27721) until it finishes (step 27722).

Option I and option 2 can be combined. When an option is finished, the user can press the "C" key before he selects the next option. The microprocessor controller 31, in response to such key sequence, performs the search using the content in the search buffer, removing from the search buffer those entries that do not match the parameters of the second search. For example, if the first search is for spore programs and results in filling the search buffer with address of entries that have a program type of "sports". If the user then press the "C" key and then selects option (1) to search of the word "YANKEE" in the program titles, the entries stored in the search buffer that do not have the word "Yankee" in the program title field are deleted. The user can continue the search for several times. When the second search is completed, the entries that remain in the search buffer are displayed.

When option 3 of FIG. 60p is selected, the microprocessor controller 31 prompts the user for the volume number by displaying the following message on the screen:

"PLEASE ENTER THE VOLUME NUMBER"

When the volume number is entered, the microprocessor controller 31 uses the volume number as index to retrieve the corresponding directory (step 27724). When the directory is retrieved, its entries are displayed on the screen (step 27725).

Specific Implementation

FIGs. 27a-271' are schematic views of displays according to a specific implementation of the invention.

A new blank tape is prepared for indexing by inserting the blank tape into the VCR and pressing the index button 9712 on the remote controller 9700. By using the cursor buttons 9725, the user highlights "Blank Tape" on the screen shown in FIG. 27k' and presses the enter button 9709 and selects new tape from the menu (FIG. 27a). The microprocessor controller 31 displays the display shown in FIG. 27b and prompts the user to enter the length of the tape. Using the keypad 9708 the user enters the length of the tape, e.g. 120 is entered for a 2 hour tape. The user presses the enter button 9709 if he has entered the correct time in minutes or the cancel button 9706 if he has made an error and then reenters the correct number. When the tape is ejected, the microprocessor controller 31 displays the tape number and requests the user mark the housing as shown in FIG. 27c-d.

When recording either in conjunction with VCR Plus+™, on-screen time programming or instant programming using the indexing VCR, the VCR reads the program identification from the VBI. If no program title is being broadcasted, the microprocessor uses the date, time, and channel of the program as the title. When recording a program, the indexing VCR informs the user whether sufficient space is available on time for the recording. The user first inserts the tape into the VCR and programs the VCR to record a program. The user then presses the review button 9714 and reads the display shown in FIG. 27e as to whether the tape has sufficient capacity. If the user is recording using instant recording (i.e. recording at that moment by pressing the record button 9718), he first presses the index button 9712 to get a program directory as shown in FIG. 27g. The current location on the tape is marked by an arrow. If the user wants to move to a different location on the tape, he uses the cursor keys 9725 and the record button 9718 to change the location. The user is prompted to enter the length of the program to be recorded (FIG. 27f). If sufficient blank space is available at the location on the tape, the VCR begins to record for the specified time. Otherwise, a warning is displayed (FIG. 27i). Pressing the enter button 9709 overrides the warning. Pressing the cancel button 9706 cancels the recording request.

An indexed tape is viewed by inserting the tape into the VCR and pressing the index button 9712. A directory is displayed (FIG. 27i) and the user makes a selection by highlighting the desired program using the cursor keys 9725 and pressing the play button 9717. The VCR then fast forwards or rewinds to the highlighted program. Alternatively, an arrow in reverse video pointing to the destination program may be displayed on the directory during the search. The arrow on the directory moves according to the location on the tape and the selected program is played automatically.

During play, the directory can be viewed by pressing the index button 9712.

A program may be erased from tape by pressing the index button 9712 and using the cursor to highlight the program to be erased (FIG. 27i). The erase button 9715 is pressed, and, as shown in FIG. 27i, the user presses the enter button 9709 to confirm the erasure or the cancel button 9706 to cancel the request. Once enter is pressed, the title in the directory is replaced with "BLANK." If two consecutive blank periods occur after the erasure, the microprocessor controller 31 combines them into one entry in the directory. The program is not actually erased from the tape, but only removed from the directory.

A program title is edited by pressing the index button 9712 and highlighting the title of the program to be changed (FIG. 27k). The edit button 9713 is pressed and using the cursor keys 9725 the title is changed (FIG. 27l) and the new title entered by pressing the enter button 9709. Pressing the cancel button 9706 cancels the new title.

A program is searched in the library with or without a tape in the VCR by pressing the library button 9710 and selecting search using the cursor keys 9725 and the enter button 9709 (FIG. 27m). Highlighting program list and pressing the enter button 9709 allows a search by program title (FIG. 27n). Using the cursor keys 9725 and the enter button 9709 to select the first letter of the program title, a list of program titles starting with the letter selected is displayed. (FIG. 27o) The page up button 9704 and the page down button 9705 are used to review the list of program titles (FIG. 27p). Highlighting tape list and pressing the enter button 9709 allows the user to search by tape number (FIG. 27q). The keypad 9708 and the enter button 9709 are used to select the tape number to be searched (FIG. 27r) and displayed (FIG. 27s). Highlighting category and pressing the enter key 9709 allows searches by category (FIG. 27o). The cursor keys 9725 are used to select the category (FIG. 27u-v) and the page up button 9704 and the page down button 9705 are used to review the list of program titles in the selected category (FIG. 27w).

A tape may be deleted from the library or the RAM 33 by pressing the library button 9710 and selecting using the cursor keys 9725 and the enter button 9709 registration from the menu of FIG. 27x and delete from the subsequent menu of FIG. 27y. The user then enters the tape number assigned to the tape to be deleted (FIG. 27z). The user may review the program before erasing it from the directory. By pressing the enter button 9709, the microprocessor controller 31 erases the tape number from the RAM 33 (FIG. 27a'). In the preferred embodiment, the program is not erased from the tape, but only the index of it is erased from the RAM 33.

When a tape is loaned to a friend, the directory is downloaded from the VBI at the end of the tape into the RAM 33 by pressing the library button 9710 and selecting, using the cursor keys 9725 and the enter button 9709, download from the menu on the screen shown in FIGs. 27b', c', d'.

A person may adopt a tape indexed in another's VCR by adding the contents of the new tape to the RAM 33 of their VCR. The tape is inserted into the VCR and the library button 9710 is pressed. Using the cursor keys 9725 and the enter button 9709, the user selects registration from the screen shown in FIG. 27e' and selects add from the subsequent screen shown in FIG. 27f'. The VCR reads the directory from the VBI at the end of the tape. The microprocessor controller 31 assigns a new tape number which is displayed on the screen. This adopt feature may also be used to add the directory from a PR tape to the RAM 33.

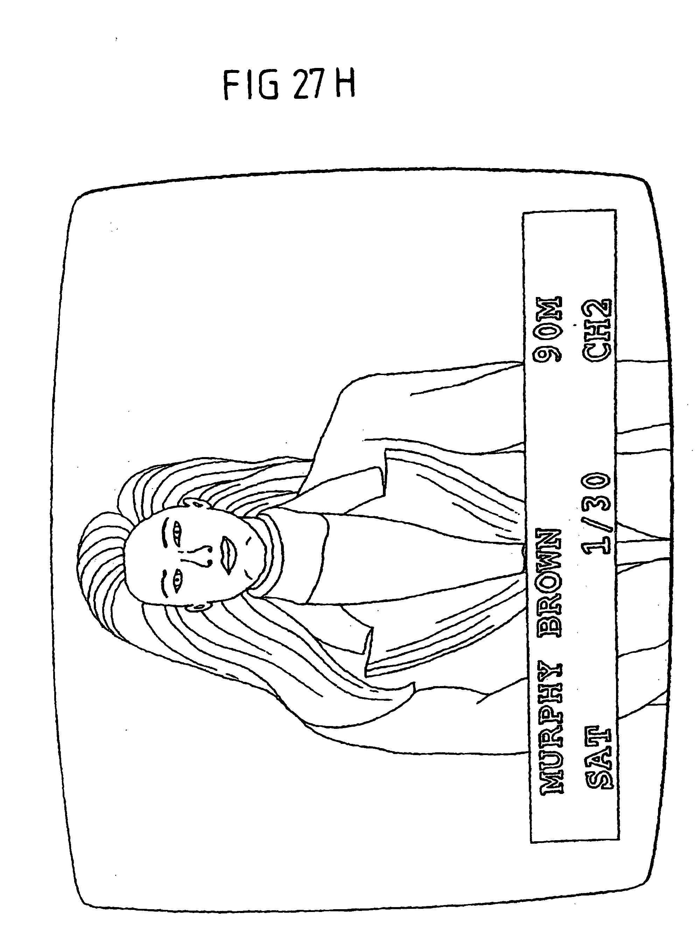

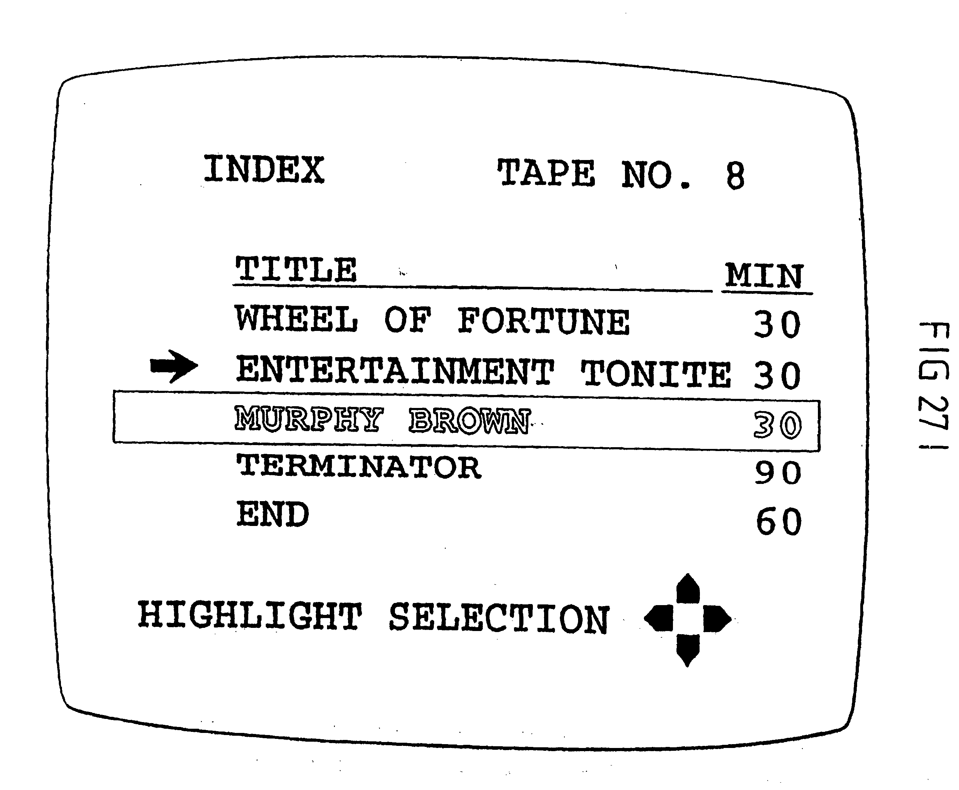

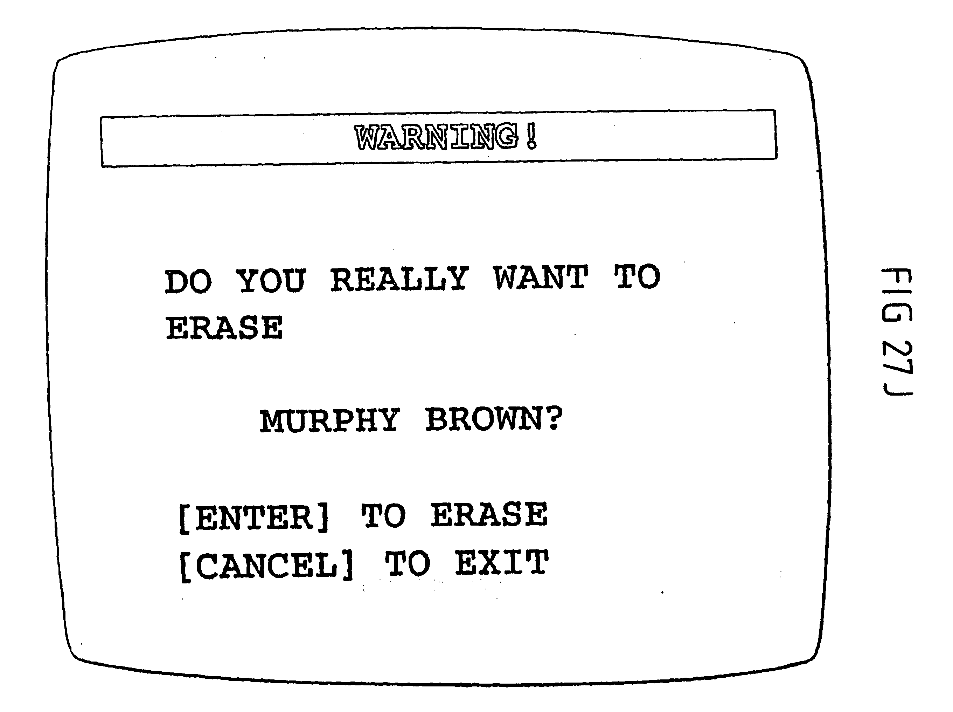

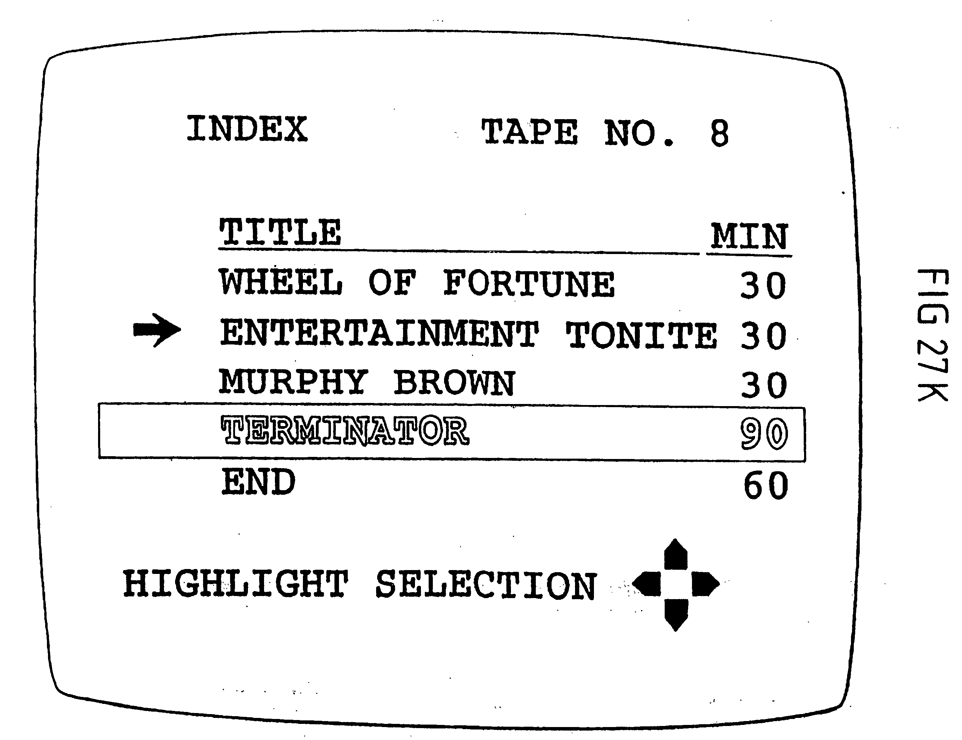

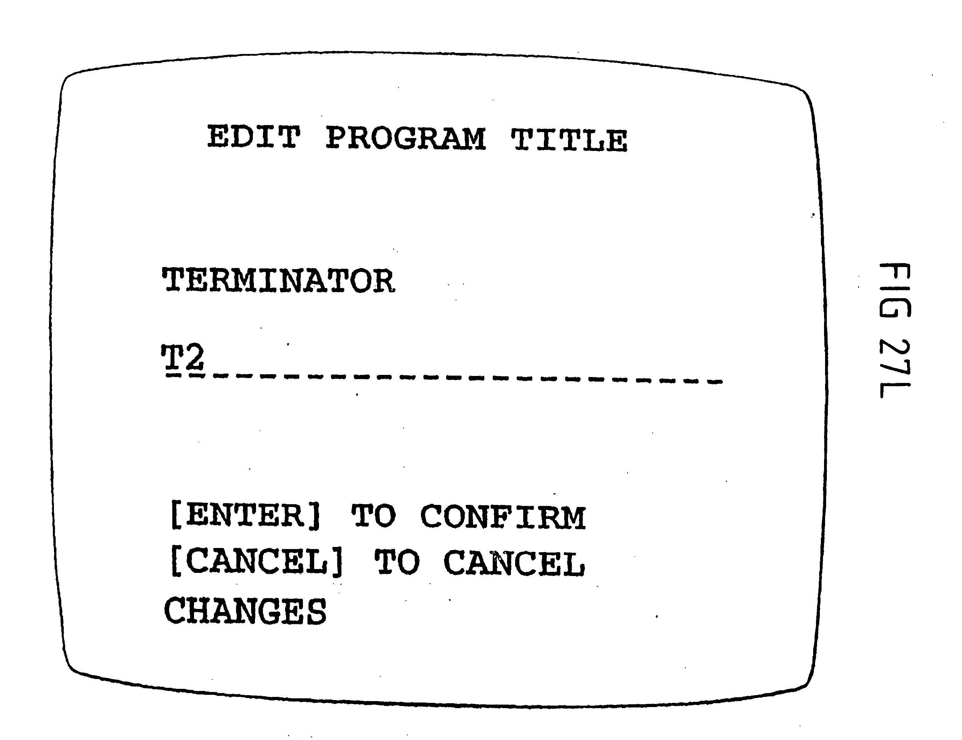

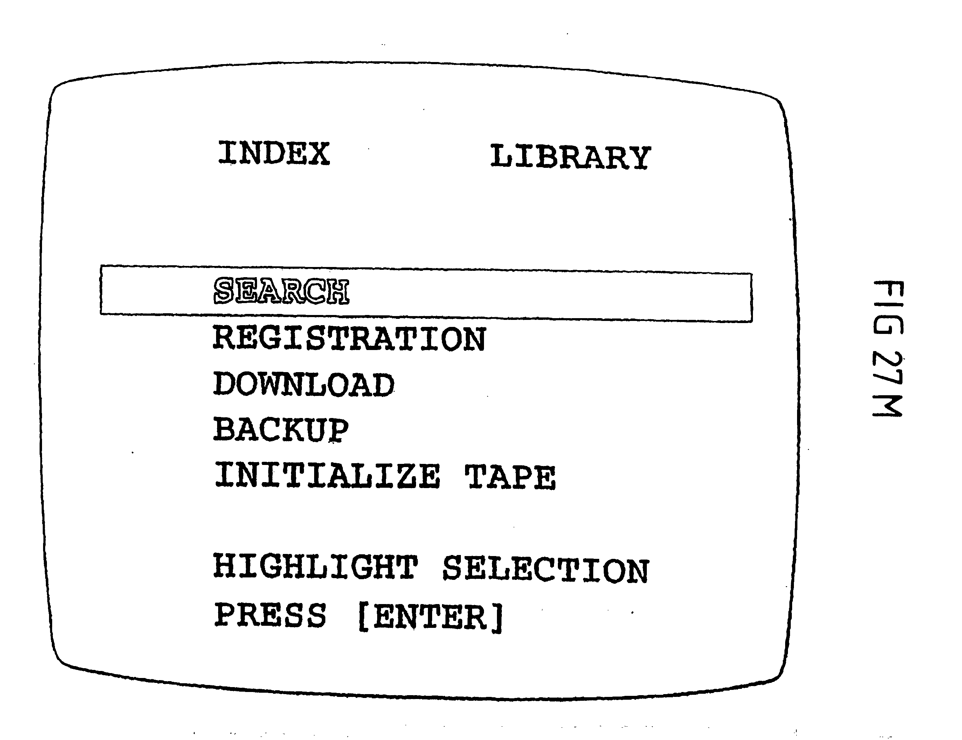

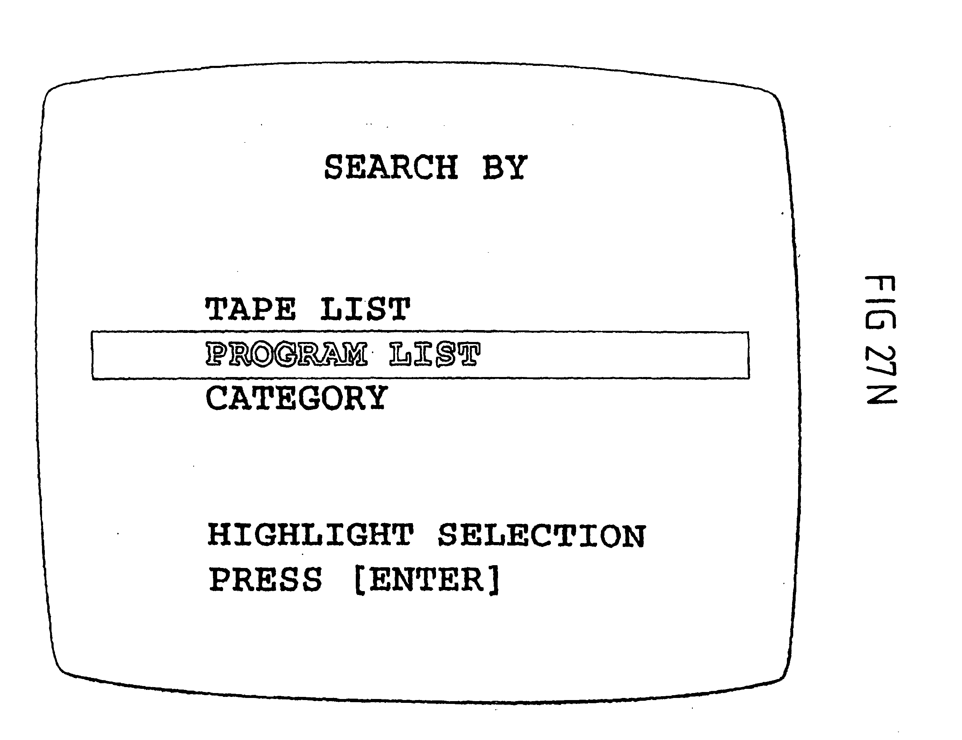

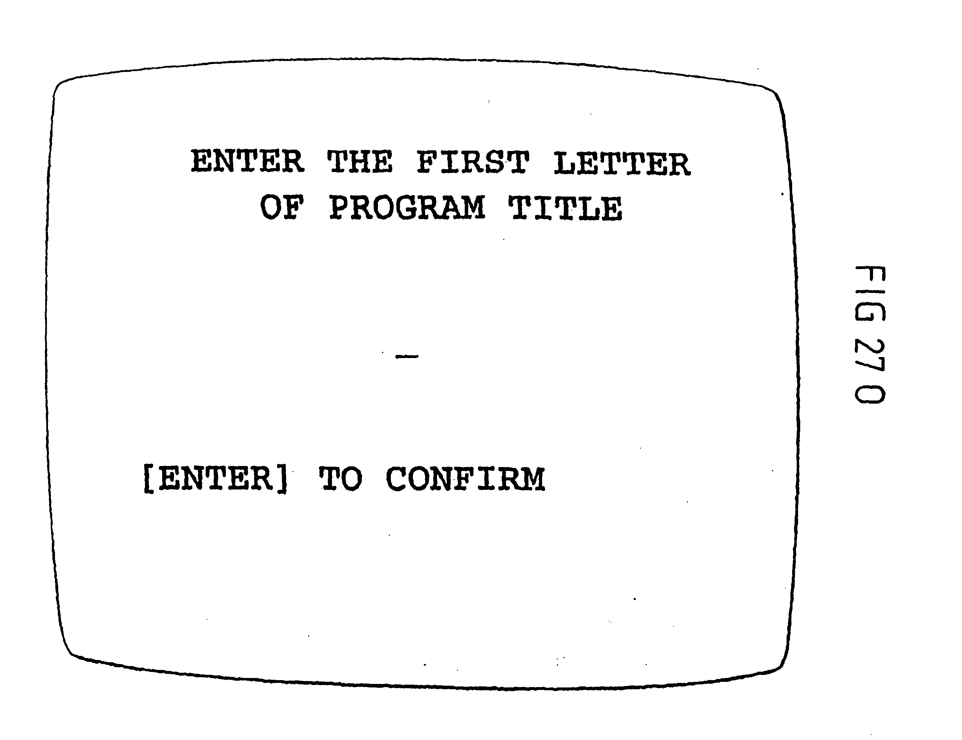

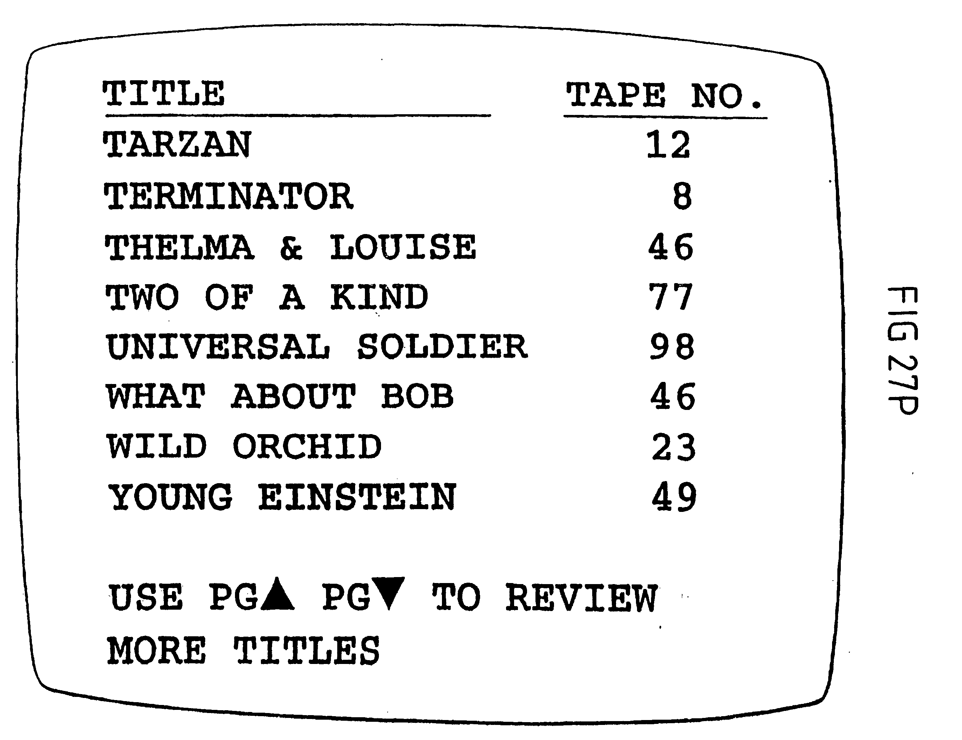

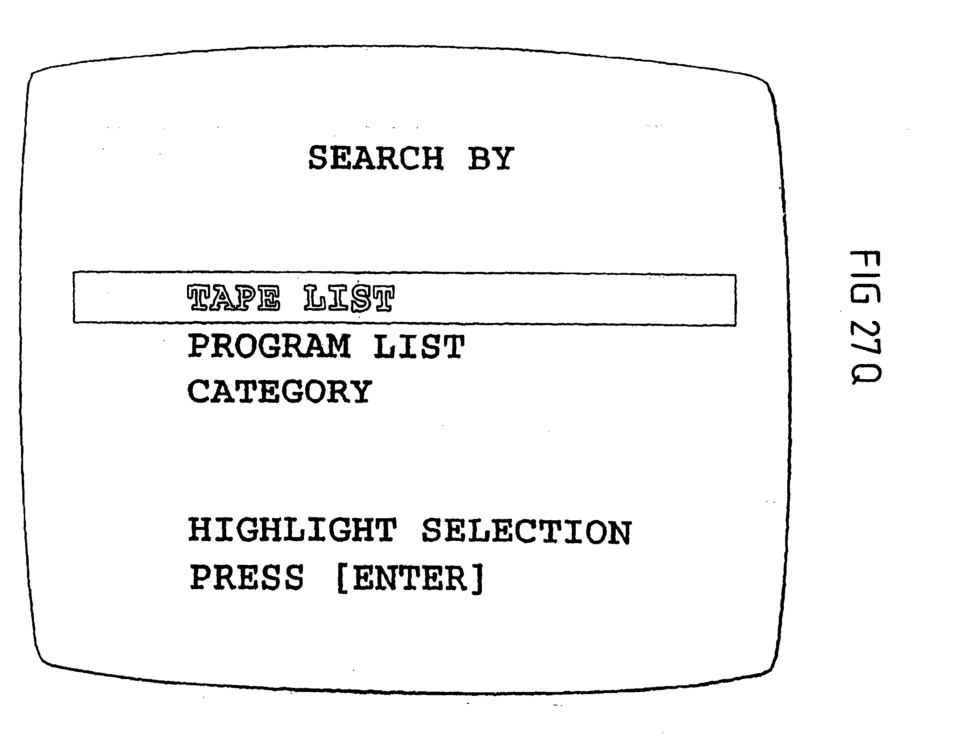

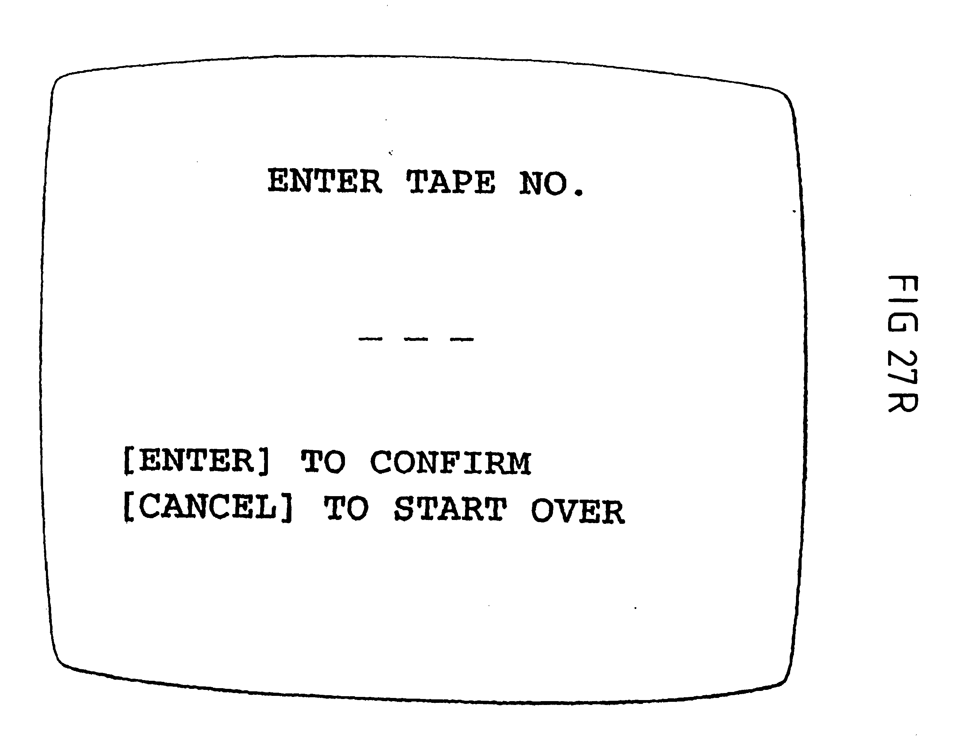

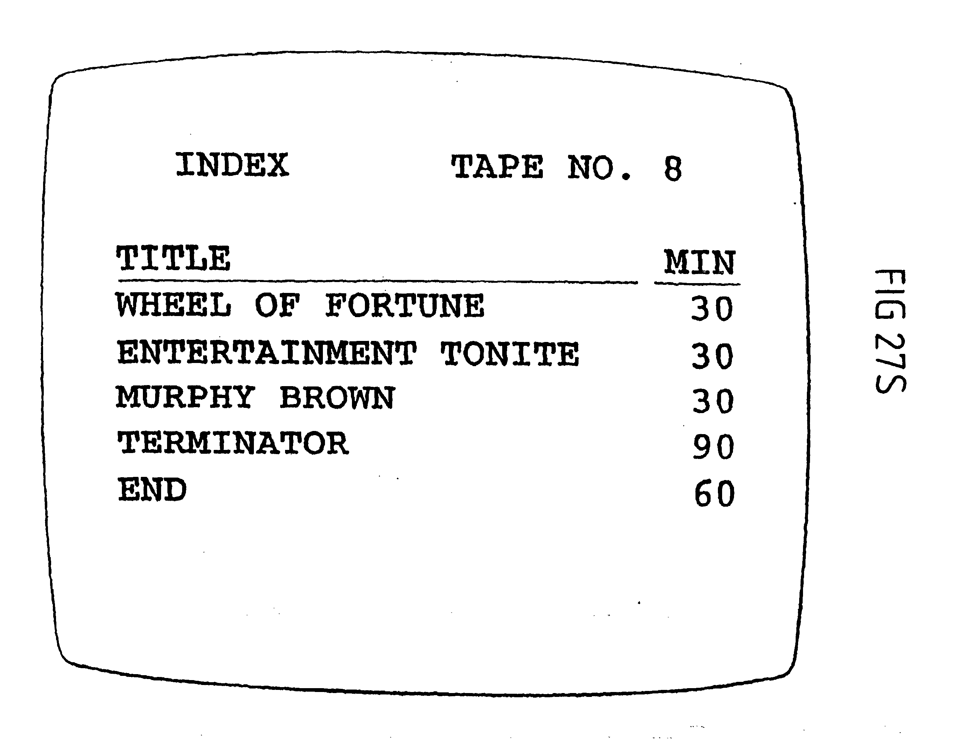

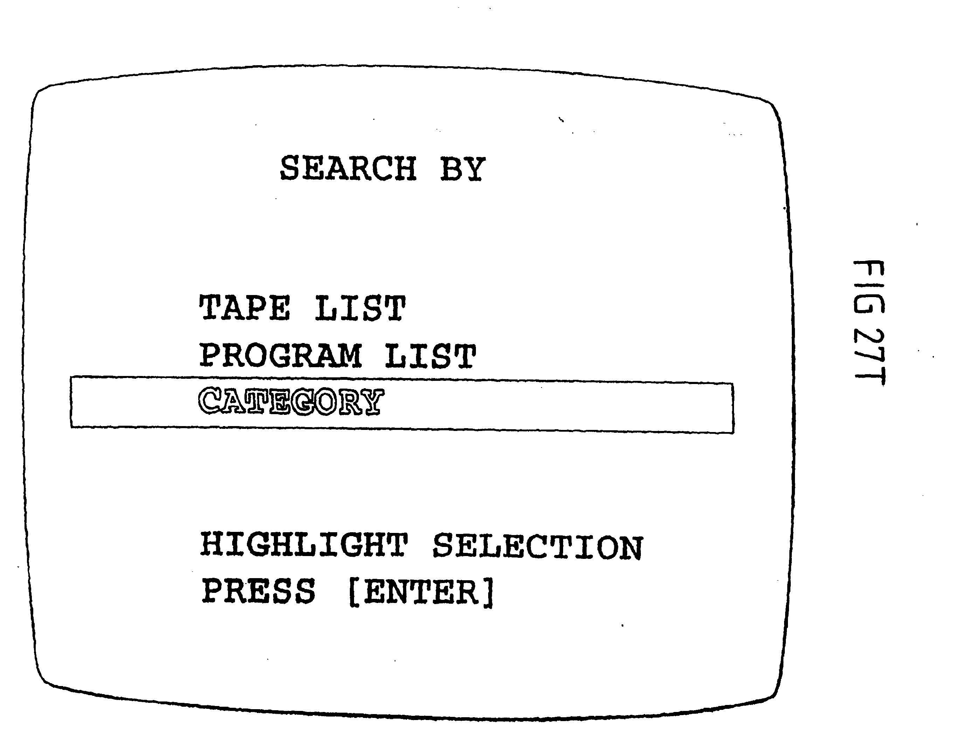

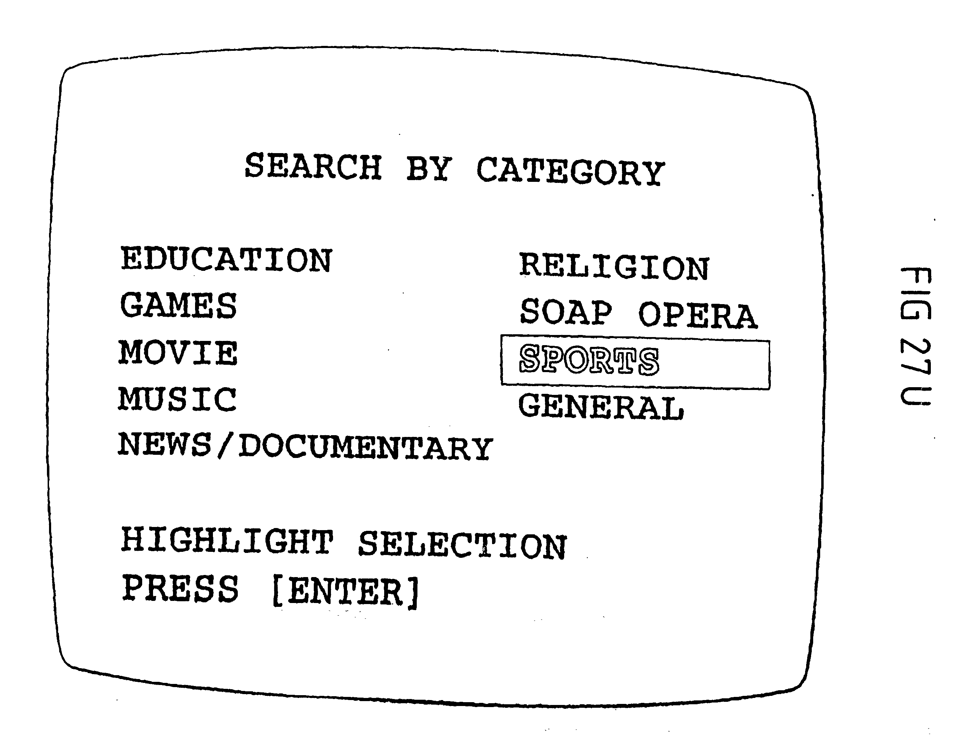

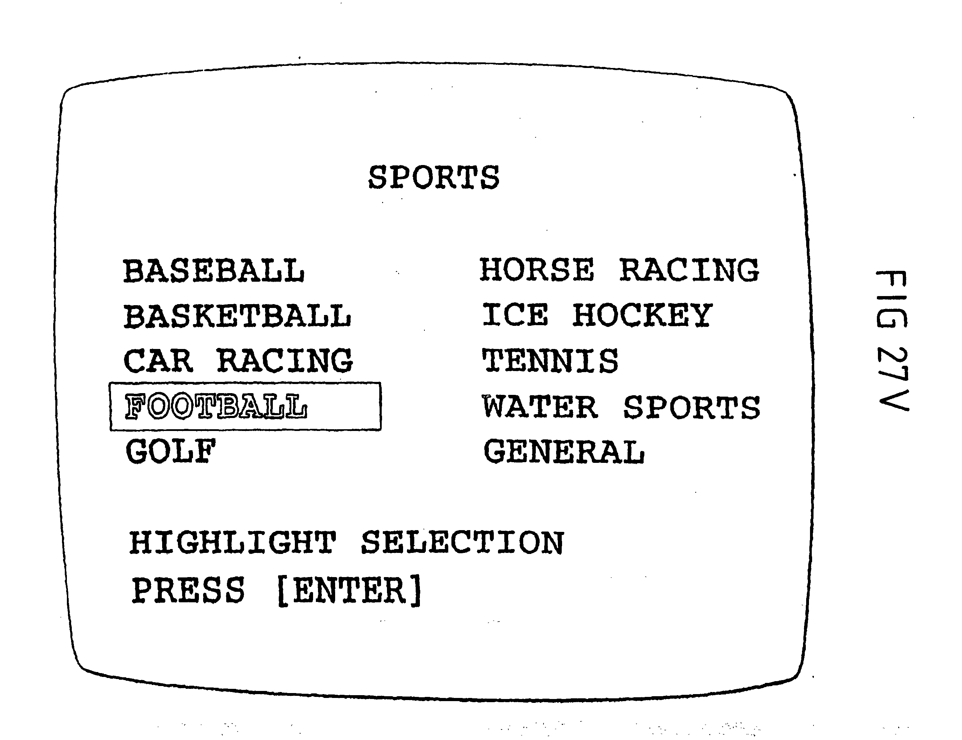

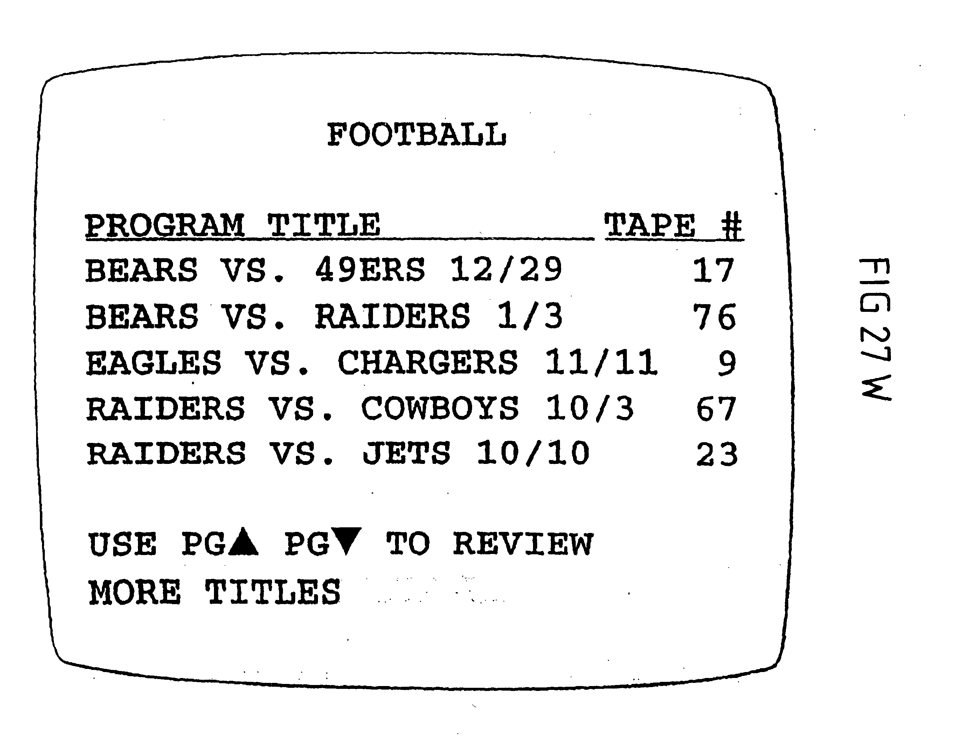

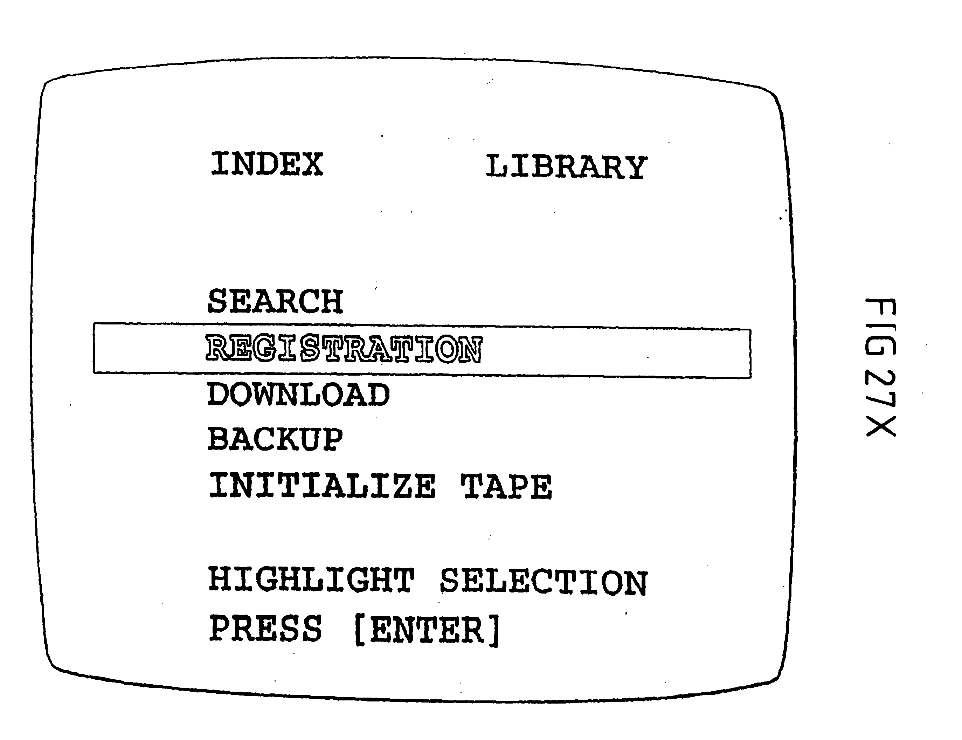

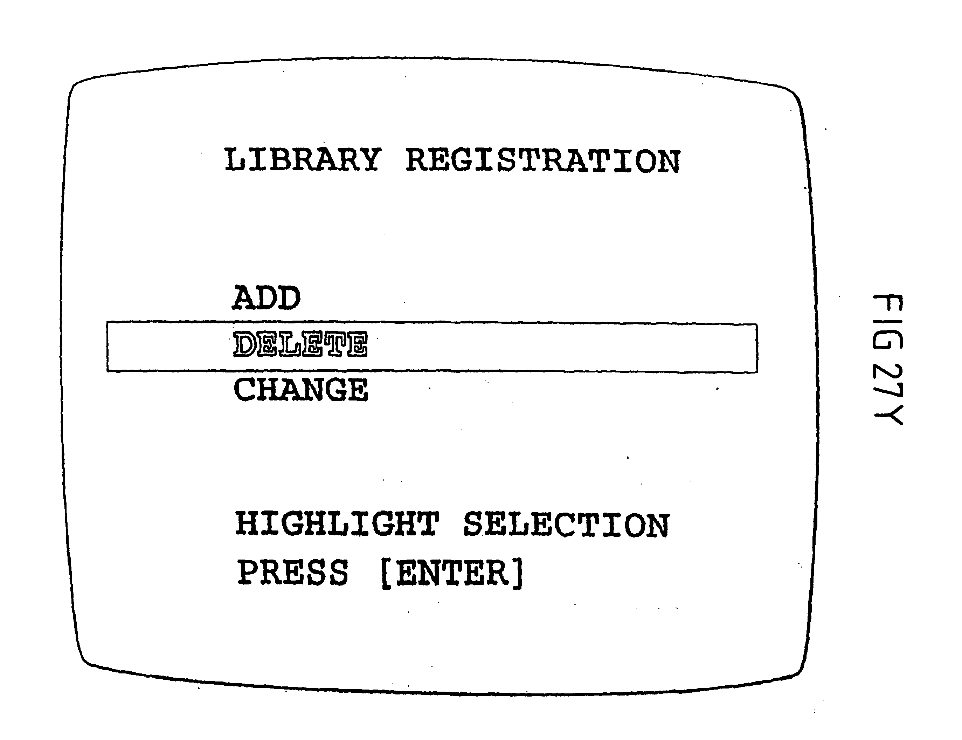

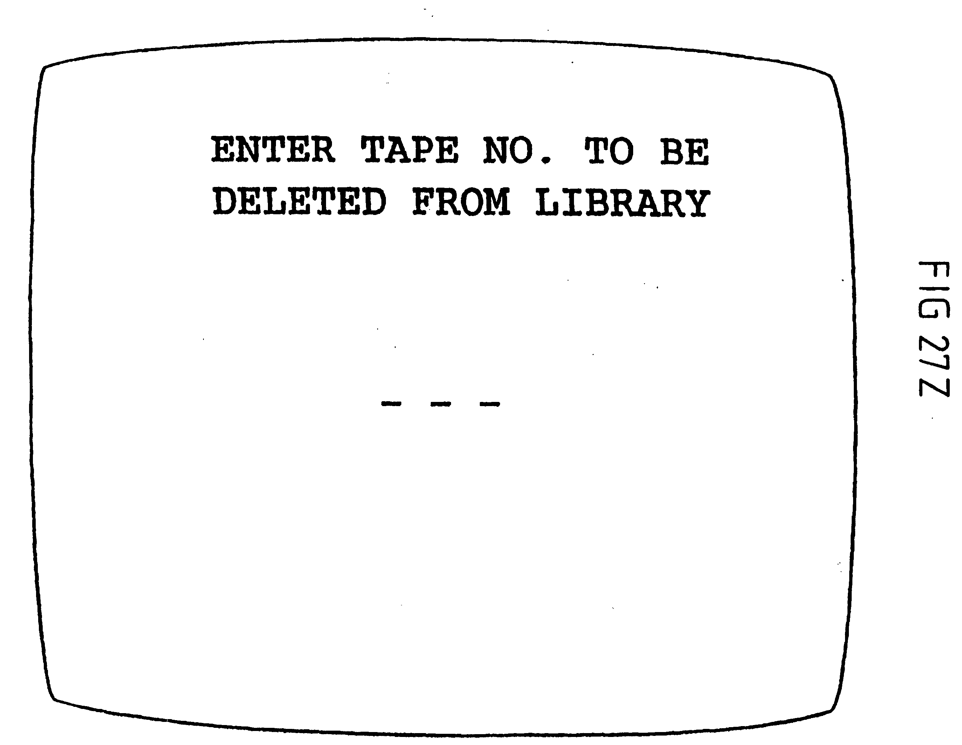

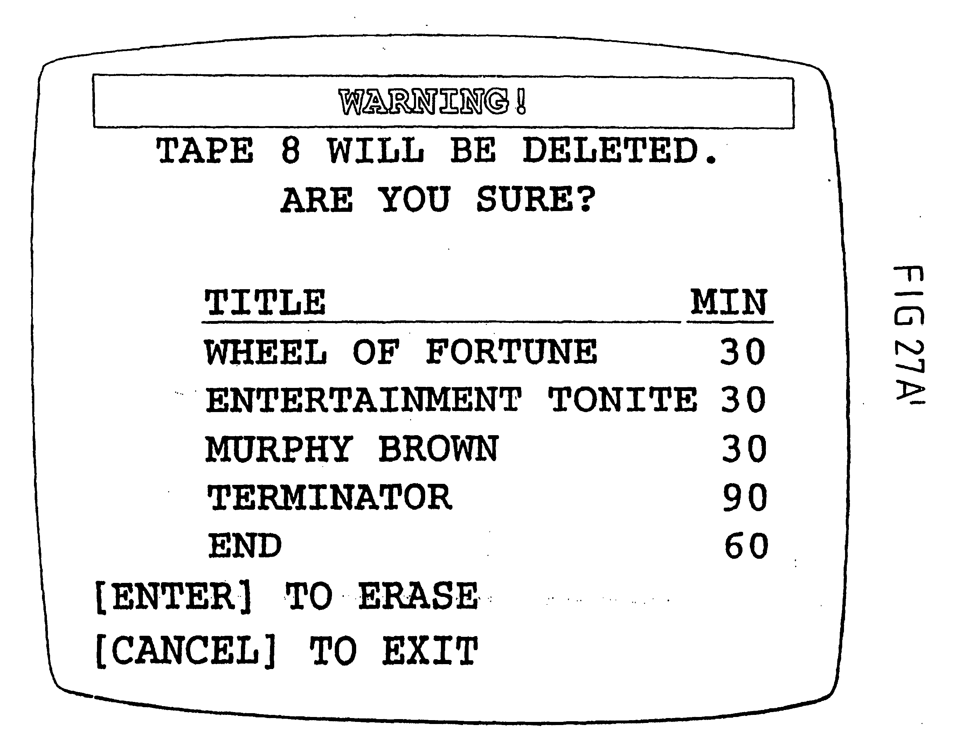

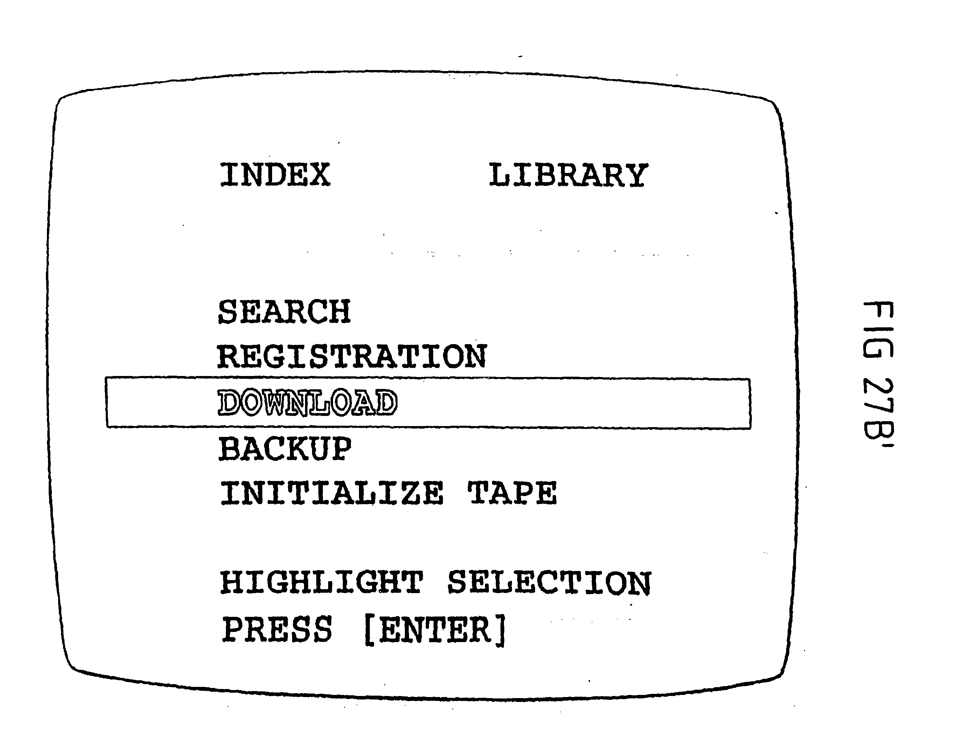

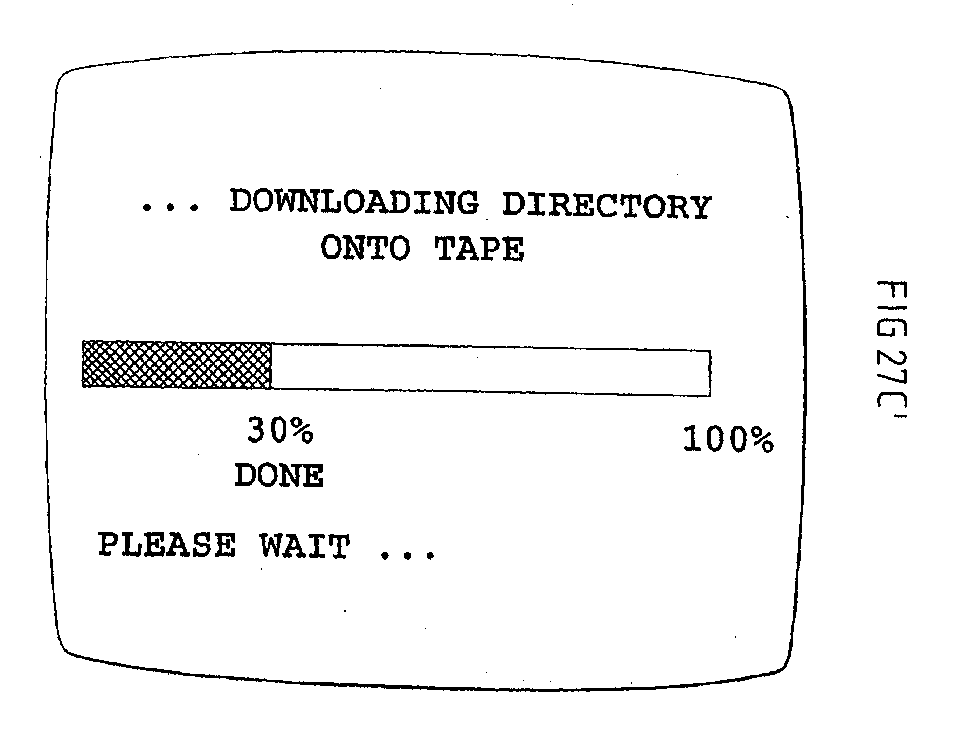

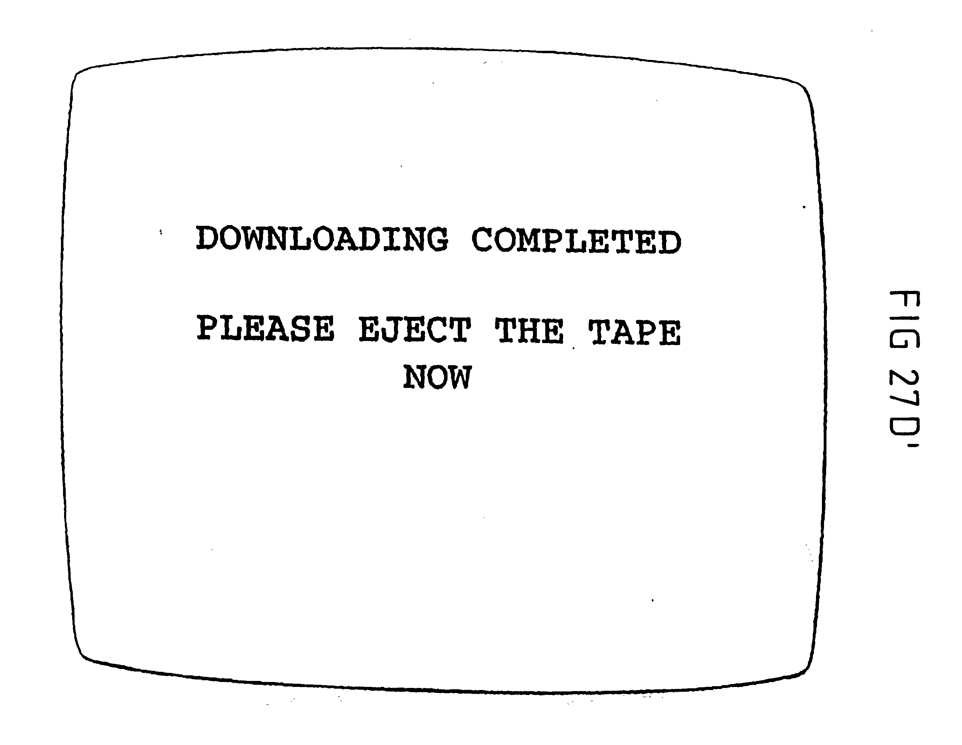

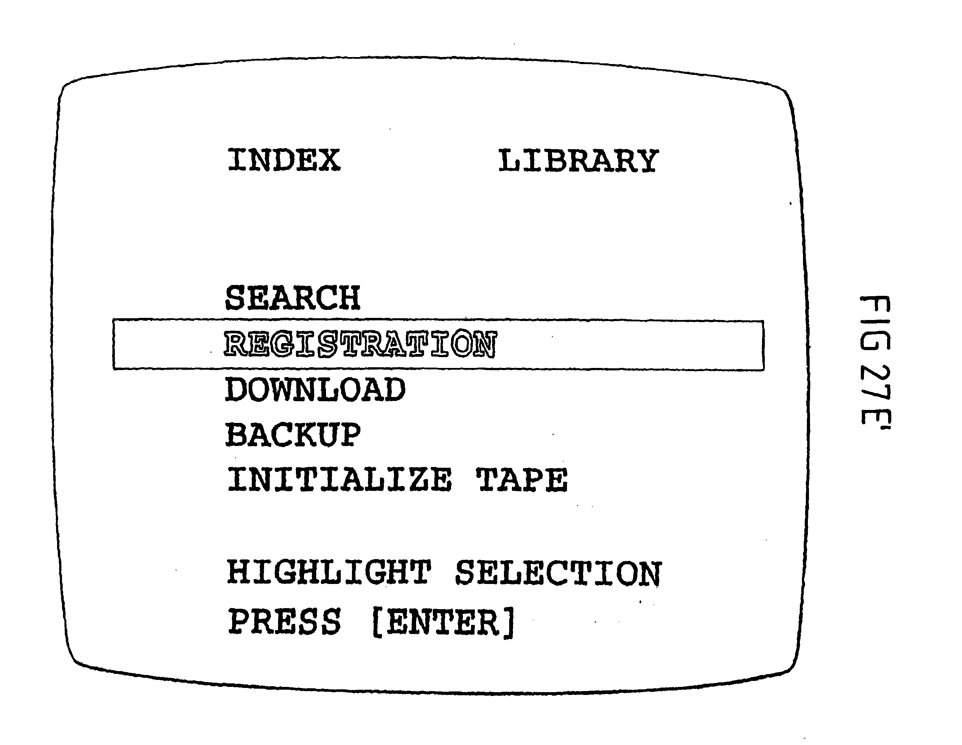

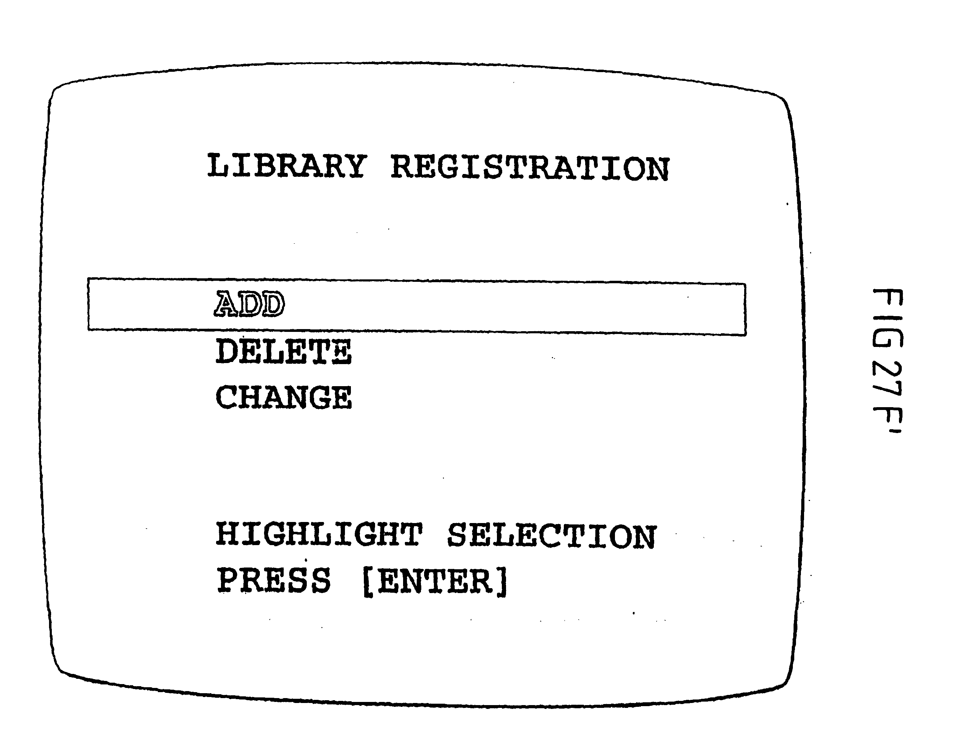

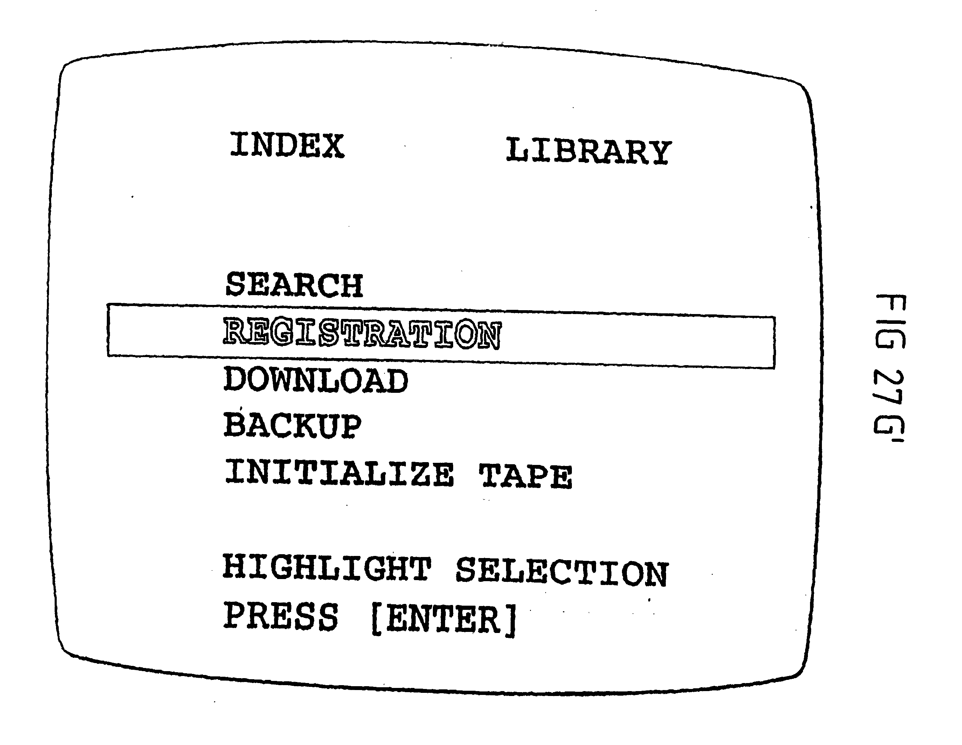

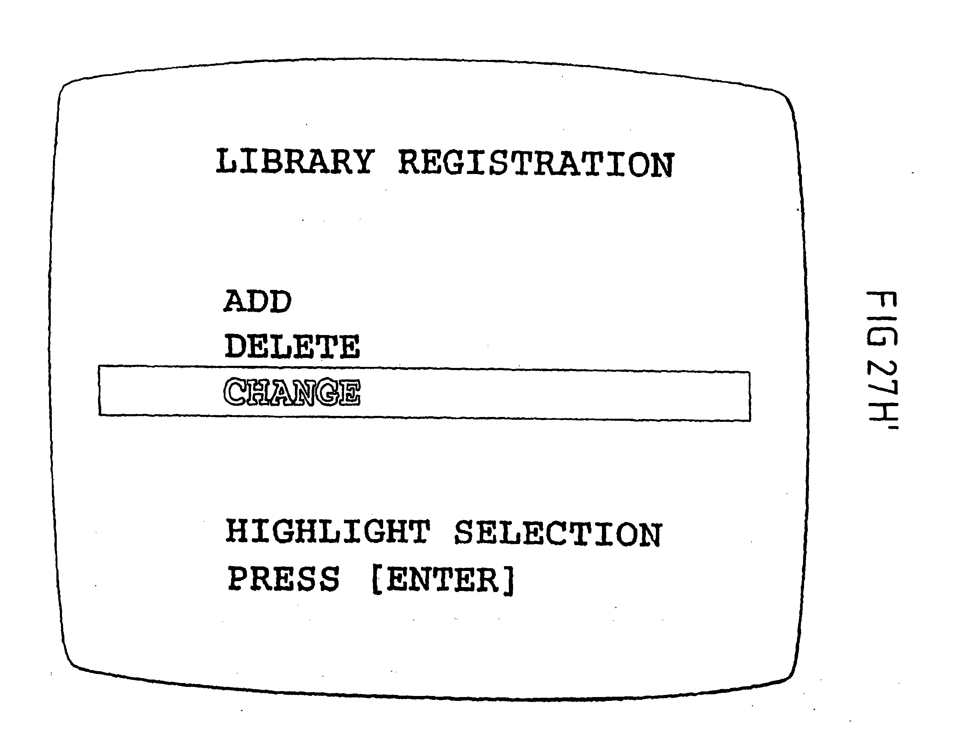

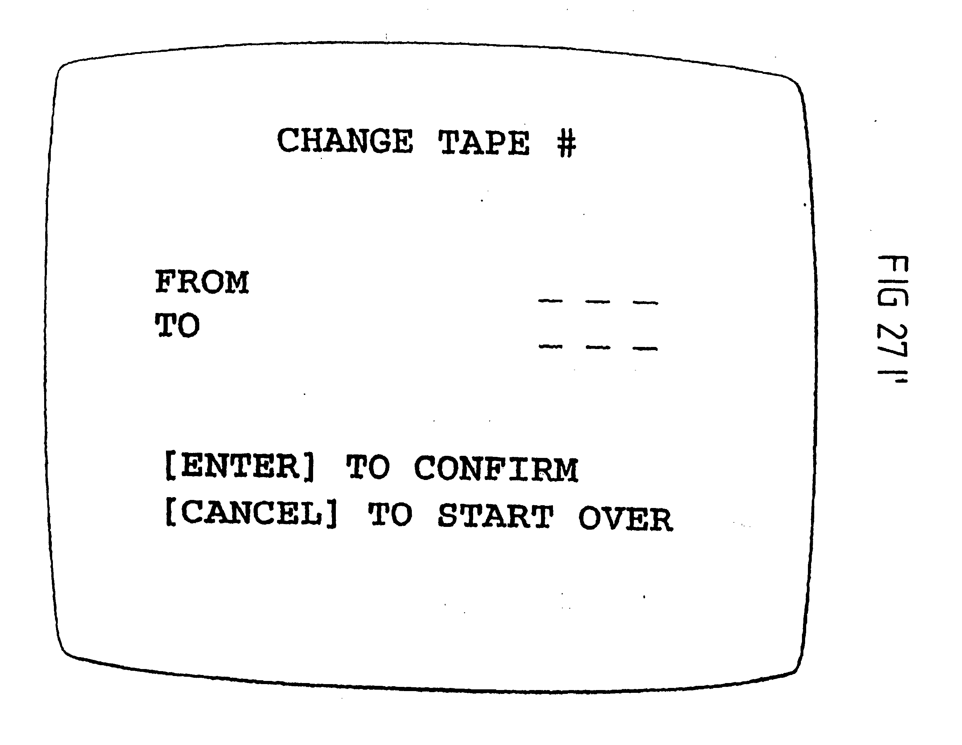

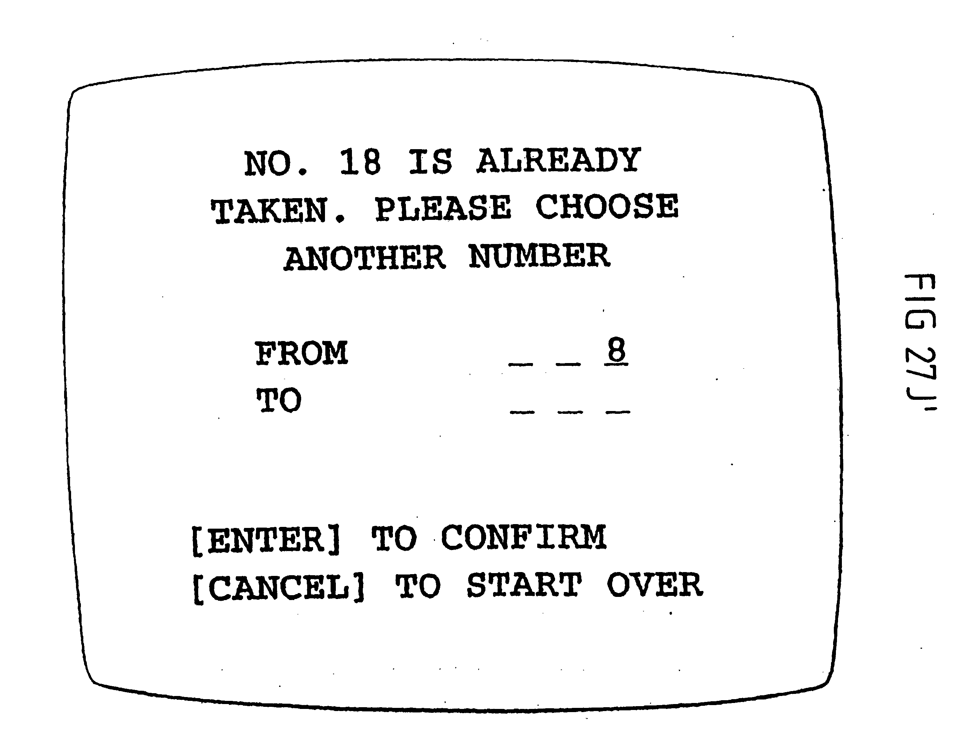

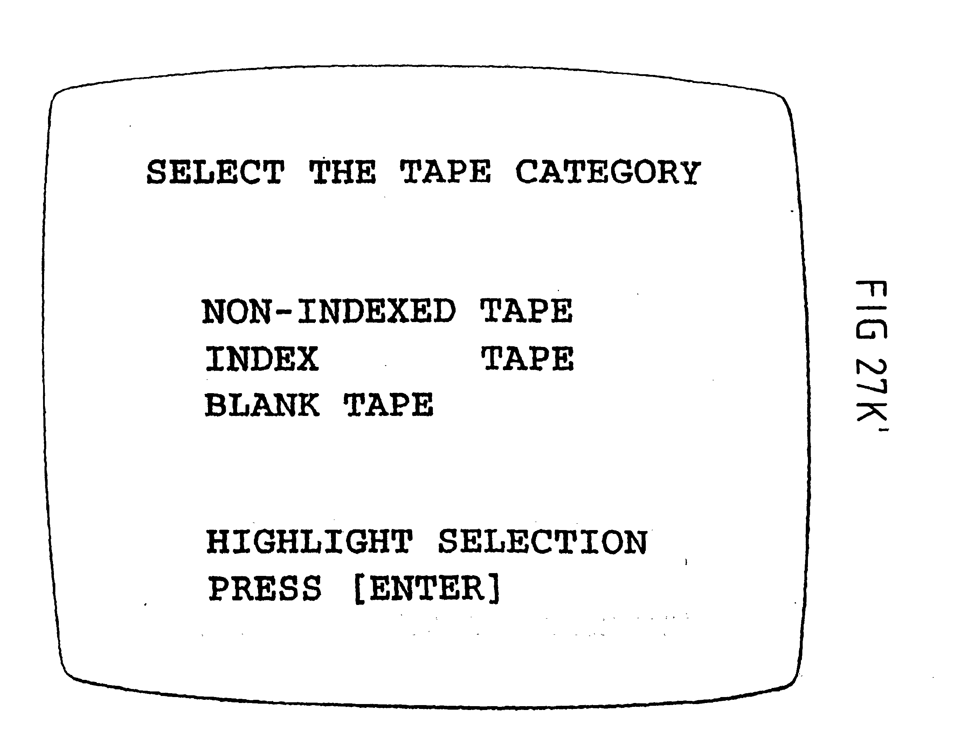

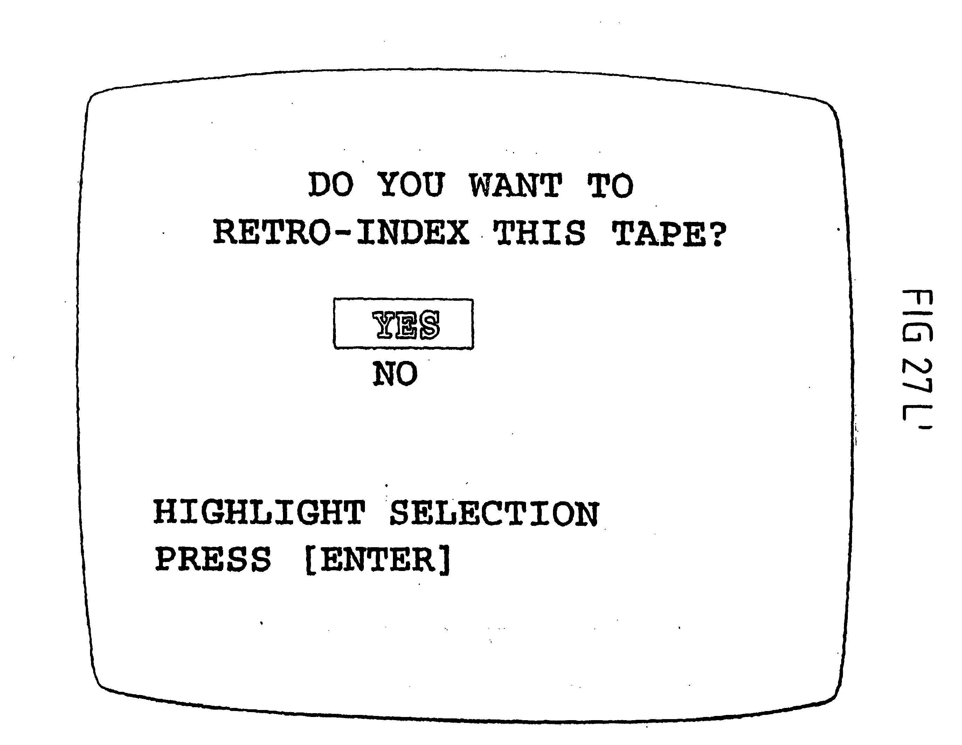

Tape identification numbers may be changed by pressing the library button 9710 and using the cursor keys 9725 to highlight registration as shown in FIG. 27g'. The cursor keys are then used to select Change from the display shown in FIG. 27h'. Using the keypad 9708 the user can change the tape number (FIG. 27i'). Overwriting of numbers previously used is avoided (FIG. 27j'). This number is preferably changed before recording the program. This feature is useful when multiple tapes are required for a single show, such as a 3 part mini-series that is recorded on different tapes.

Tapes may be retroactively indexed by selecting retroindex in FIG. 27l'. By pressing the "i" button 9721 in response to a flashing icon on the TV screen such as a flashing "i," the user is able to obtain additional information on products or services offered in TV commercials or on regular programs. This additional information may be detailed weather, traffic, sport scores, or financial information. Pressing the 'T' button 9721 automatically programs the VCR using the "PLUSCODE™" numbers by transferring the numbers from temporary RAM to non-volatile RAM. By pressing the "R" button, the user can later review and manipulate a directory of the text information stored. The cursor buttons 9725 and the enter button 9709 are used to select information.

The user may identify the program while he is viewing a current broadcast or a recorded program by pressing the PGM ID button 9724 which then displays the program title, its length, the day and date of the broadcast (or recording) and the station name or call letters as shown in FIG. 27h. If a program is being recorded that overruns its scheduled time (e.g. a sporting event), the VCR automatically extends the recording time of the preprogrammed recordings for programs broadcasted by a TV station that participates in broadcasting program identification. The TV station broadcasts changes in programming which are detected by the VCR.

When a printer is connected to the VCR, the user can press the "R" button 9722 to recall the particular information text, such as a coupon, onto the TV screen. The user then presses the print button 9702 to print the information on the printer.

Various methods of combining steps of key strokes may be used. For example, pressing the "i" button twice in rapid succession may be used to review information stored. Pressing the "i" button three times in rapid succession may be used to cancel a selection.

**Claims**

1. A method for creating a library of index information about programs recorded on cassette video tape, the method comprising the steps:

    assigning a tape identification (TID) to a video tape if one has not yet been assigned;
    receiving a broadcast television program;
    recording the received program on the video tape;
    simultaneously recording (9204, 9204') the assigned TID on the tape so the assigned TID is repeated throughout the recorded program;
    recovering (9202) from a broadcast television signal index information about the broadcast program;
    storing the index information and the TID for the recorded program in a RAM (33) to create a directory of programs recorded on the tape;
    repeating the recited steps with respect to other cassette video tapes to create a library of directories

    **characterized in**

    the additional step of backing up the library onto the tape each time a program is recorded thereon.

2. The method of claim 1, in which the TID is recorded on selected lines of the program during the step of recording the program.

3. The method of claim 1, in which the TID is recorded in the vertical blanking interval of the program during the step of recording the program.

4. The method of claim 1, in which the recovering step recovers the title of the broadcast program from the vertical blanking interval of the broadcast signal simultaneously with the recording the program.

5. The method of claim 1, in which the recovering step recovers the index information about the broadcast program from the vertical blanking interval of the broadcast signal prior to the step of recording the program and stores the index information until the step of recording the program.

6. The method of claim 5, additionally comprising the step of determining if the index information about the broadcast program being recorded is present in the vertical blanking interval of broadcast signal at the time of recording, the recovering step recovers the index information about the broadcast program from the vertical blanking interval of the broadcast signal simultaneously with the step of recording the program if such information is present, the step of storing the index information stores simultaneously recovered index information if present in the vertical blanking interval, and the step of storing the index information stores prior recovered index information if simultaneously recovered index information is absent from the vertical blanking interval.

7. The method of claim 1, additionally comprising the steps of inserting in the VCR a prerecorded tape on which a directory is stored and transferring the directory thereof to the library in the RAM.

8. The method of claim 1, additionally comprising the steps of inserting into the VCR either a prerecorded tape on which a directory is stored or a recording tape on which no directory is stored, determining whether the tape is a prerecorded tape, accessing the inserted tape to retrieve the directory of the inserted tape from the tape if the inserted tape is a prerecorded tape, accessing the RAM to retrieve the directory of the inserted tape from the RAM if the inserted tape is a recording tape, and displaying the directory of the inserted tape.

9. The method of claim 1, in which the directories include program identifiers, the method additionally comprising the steps of selecting a particular program identifier, searching the library stored in the RAM for directories that contain the selected program identifier, and displaying the directories that contain the selected program identifier.

10. The method of claim 9, in which the particular program identifier is the TID.

**11.** The method of claim 9, in which the particular program identifier is the title.

**12.** The method of claim 9, in which the particular program identifier is the theme.

**13.** The method of claim 1, additionally comprising storing the TID of the last tape onto which the library is backed up in a permanent memory so the tape can be identified and the backed up library can be recovered.

**14.** The method of claim 8, in which prerecorded tapes have a TID stored in the control track, recording tapes have a TID stored in the vertical blanking interval, and the determining step comprises reading the vertical blanking interval to determine if a TID is present.

**15.** The method of claim 8, in which prerecorded tapes have a TID stored in the control track, recording tapes have a TID stored in the vertical blanking interval, and the determinging step comprises reading the vertical blanking interval to determine if a TID is present.


**Patentansprüche**

**1.** Verfahren für das Erzeugen einer Bibliothek von Indexdaten über Sendungen, die auf Videokassette aufgezeichnet werden, wobei das Verfahren folgende Schritte umfaßt:

Zuweisen einer Bandkennzeichnung (TID) für ein Videoband, falls eine solche noch nicht zugewiesen worden ist;

Empfangen einer Fernsehsendung;

Aufzeichnen der empfangenen Sendung auf dem Videoband;

simultanes Aufzeichnen (9204, 9204') der zugewiesenen TID auf dem Band, so dass die zugewiesene TID über die gesamte aufgezeichnete Sendung hinweg wiederholt wird;

Wiederherstellen (9202) von Indexdaten der Sendung aus einem gesendeten Fernsehsignal;

Speichern der Indexdaten und der TID der aufgezeichneten Sendung in einem RAM (33), um ein Verzeichnis der auf dem Band aufgezeichneten Sendungen zu erzeugen;

Wiederholen der aufgeführten Schritte für weitere Videokassetten, um eine Bibliothek von Verzeichnissen zu erzeugen,

 **gekennzeichnet durch**

den zusätzlichen Schritt des Sicherns der Bibliothek auf dem Band bei jeder Aufzeichnung einer Sendung darauf.

**2.** Verfahren nach Anspruch 1, bei dem die TID während des Schrittes des Aufzeichnens der Sendung in ausgewählten Zeilen der Sendung aufgezeichnet wird.

**3.** Verfahren nach Anspruch 1, bei dem die TID während des Schrittes des Aufzeichnens der Sendung in der Vertikalaustastlücke der Sendung aufgezeichnet wird.

**4.** Verfahren nach Anspruch 1, bei dem in dem Schritt des Wiederherstellens der Titel der gesendeten Sendung aus der Vertikalaustastlücke des gesendeten Signals gleichzeitig mit dem Aufzeichnen der Sendung wiedergewonnen wird.

**5.** Verfahren nach Anspruch 1, bei dem in dem Schritt des Wiederherstellens die Indexdaten über die gesendete Sendung aus der Vertikalaustastlücke des Sendesignals vor dem Schritt des Aufzeichnens der Sendung wiedergewonnen werden und die Indexdaten bis zu dem Schritt des Aufzeichnens der Sendung gespeichert werden.

6. Verfahren nach Anspruch 5, welches ferner den Schritt des Ermittelns umfaßt, ob die Indexdaten über die gesendete Sendung, die gerade aufgezeichnet wird, zum Zeitpunkt der Aufnahme in der Vertikalaustastlücke des Sendesignals vorhanden sind, wobei in dem Schritt des Wiederherstellens die Indexdaten über die gesendete Sendung aus der Vertikalaustastlücke des Sendesignals simultan mit dem Schritt des Aufzeichnens der Sendung wiedergewonnen werden, falls derartige Daten vorhanden sind, in dem Schritt des Speicherns der Indexdaten simultan wiederhergestellte Indexdaten gespeichert werden, falls solche in der Vertikalaustastlücke vorhanden sind, und in dem Schritt des Speicherns der Indexdaten die zuvor wiederhergestellten Indexdaten gespeichert werden, falls keine simultan wiederhergestellten Indexdaten in der Vertikalaustastlücke vorhanden sind.

7. Verfahren nach Anspruch 1, weiterhin mit dem Schritt des Einlegens eines zuvor bespielten Bandes mit einem darauf gespeicherten Verzeichnis in den Videorekorder und dem Schritt des Übertragens des Verzeichnisses des Bandes in die Bibliothek in dem RAM.

8. Verfahren nach Anspruch 1, weiterhin mit folgenden Schritten: Einlegen entweder eines zuvor bespielten Bandes, auf dem ein Verzeichnis gespeichert ist, oder eines zu bespielenden Bandes, auf dem kein Verzeichnis gespeichert ist, in den Videorekorder, Ermitteln, ob das Band ein zuvor bespieltes Band ist, Zugreifen auf das eingeführte Band, um das Verzeichnis des eingeführten Bandes von dem Band wiederzugeben, falls das eingeführte Band ein zuvor bespieltes Band ist, Zugreifen auf den RAM, um das Verzeichnis des eingeführten Bandes aus dem RAM auszulesen, falls das eingeführte Band ein zu bespielendes Band ist, und Anzeigen des Verzeichnisses des eingeführten Bandes.

9. Verfahren nach Anspruch 1, bei dem die Verzeichnisse Sendungskennungen enthalten und das Verfahren weiterhin folgende Schritte umfaßt: Auswählen einer speziellen Sendungskennung, Durchsuchen der in dem RAM gespeicherten Bibliothek nach Verzeichnissen, die die ausgewählte Sendungskennung enthalten, und Anzeigen der Verzeichnisse, die die ausgewählte Sendungskennung enthalten.

10. Verfahren nach Anspruch 9, bei dem die spezielle Sendungskennung die TID ist.

11. Verfahren nach Anspruch 9, bei dem die spezielle Sendungskennung der Titel ist.

12. Verfahren nach Anspruch 9, bei dem die spezielle Sendungskennung das Thema ist.

13. Verfahren nach Anspruch 1, weiterhin mit dem Speichern der TID des letzten Bandes, auf dem die Bibliothek gesichert ist, in einem Permanentspeicher, so dass eine Identifizierung des Bandes möglich ist und die gesicherte Bibliothek wiederhergestellt werden kann.

14. Verfahren nach Anspruch 8, bei dem die zuvor bespielten Bänder eine auf der Steuerspur gespeicherte TID aufweisen, die zu bespielenden Bänder eine in der Vertikalaustastlücke gespeicherte TID aufweisen und der Schritt des Ermittelns das Lesen der Vertikalaustastlücke umfaßt um zu ermitteln, ob eine TID vorhanden ist.

15. Verfahren nach Anspruch 8, bei dem die zuvor bespielten Bänder eine auf der Steuerspur gespeicherte TID aufweisen, die zu bespielenden Bänder eine in der Vertikalaustastlücke gespeicherte TID aufweisen und der Schritt des Ermittelns das Lesen der Vertikalaustastlücke umfaßt, um zu ermitteln, ob eine TID vorhanden ist.

**Revendications**

1. Un procédé pour créer une bibliothèque d'information d'index concernant des programmes enregistrés sur une bande vidéo en cassette, le procédé comprenant les étapes suivantes :

on attribue une identification de bande (TID) à une bande vidéo si une identification n'a pas déjà été attribuée;
on reçoit un programme de télévision diffusé;
on enregistre le programme reçu sur la bande vidéo;
on enregistre simultanément (9204, 9204') sur la bande la TID attribuée, de façon que la TID attribuée soit répétée dans toute l'étendue du programme enregistré;
on récupère (9202) à partir d'un signal de télévision diffusé une information d'index concernant le programme diffusé;
on stocke dans une mémoire vive ou RAM (33) l'information d'index et la TID pour le programme enregistré, pour créer un répertoire de programmes enregistrés sur la bande;

on répète les étapes énumérées pour d'autres bandes vidéo en cassette, pour créer une bibliothèque de répertoires,

**caractérisé par**

l'étape supplémentaire consistant à sauvegarder la bibliothèque sur la bande chaque fois qu'un programme est enregistré sur elle.

2. Le procédé selon la revendication 1, dans lequel la TID est enregistrée sur des lignes sélectionnées du programme pendant l'étape d'enregistrement du programme.

3. Le procédé de la revendication 1, dans lequel la TID est enregistrée dans l'intervalle d'effacement vertical du programme pendant l'étape d'enregistrement du programme.

4. Le procédé de la revendication 1, dans lequel l'étape de récupération récupère le titre du programme diffusé, à partir de l'intervalle d'effacement vertical du signal diffusé, simultanément à l'enregistrement du programme.

5. Le procédé de la revendication 1, dans lequel l'étape de récupération récupère l'information d'index concernant le programme diffusé, à partir de l'intervalle d'effacement vertical du signal diffusé, avant l'étape d'enregistrement du programme, et elle stocke l'information d'index jusqu'à l'étape d'enregistrement du programme.

6. Le procédé de la revendication 5, comprenant en outre l'étape consistant à déterminer si l'information d'index concernant le programme diffusé en cours d'enregistrement est présente dans l'intervalle d'effacement vertical du signal diffusé, au moment de l'enregistrement, l'étape de récupération récupère l'information d'index concernant le programme diffusé, à partir de l'intervalle d'effacement vertical du signal diffusé, simultanément à l'étape d'enregistrement du programme, si une telle information est présente, l'étape de stockage de l'information d'index stocke simultanément l'information d'index récupérée, si elle est présente dans l'intervalle d'effacement vertical, et l'étape de stockage de l'information d'index stocke l'information d'index récupérée antérieure si l'information d'index récupérée simultanément est absente de l'intervalle d'effacement vertical.

7. Le procédé de la revendication 1, comprenant en outre les étapes consistant à introduire dans le magnétoscope une bande pré-enregistrée sur laquelle un répertoire est stocké, et à transférer son répertoire vers la bibliothèque dans la mémoire vive.

8. Le procédé de la revendication 1, comprenant en outre les étapes consistant à introduire dans le magnétoscope soit une bande pré-enregistrée sur laquelle un répertoire est stocké, soit une bande d'enregistrement sur laquelle aucun répertoire n'est stocké, à déterminer si la bande est une bande pré-enregistrée, à accéder à la bande introduite pour récupérer à partir de la bande le répertoire de la bande introduite, si la bande introduite est une bande pré-enregistrée, à accéder à la mémoire vive pour récupérer dans la mémoire vive le répertoire de la bande introduite, si la bande introduite est une bande d'enregistrement, et à visualiser le répertoire de la bande introduite.

9. Le procédé de la revendication 1, dans lequel les répertoires comprennent des identificateurs de programmes, le procédé comprenant en outre les étapes consistant à sélectionner un identificateur de programme particulier, à rechercher dans la bibliothèque stockée dans la mémoire vive des répertoires qui contiennent l'identificateur de programme sélectionné, et à visualiser les répertoires qui contiennent l'identificateur de programme sélectionné.

10. Le procédé selon la revendication 9, dans lequel l'identificateur de programme particulier est la TID.

11. Le procédé selon la revendication 9, dans lequel l'identificateur de programme particulier est le titre.

12. Le procédé selon la revendication 9, dans lequel l'identificateur de programme particulier est le thème.

13. Le procédé selon la revendication 1, comprenant en outre le stockage dans une mémoire permanente de la TID de la dernière bande sur laquelle le répertoire est sauvegardé, de façon que la bande puisse être identifiée et que le répertoire sauvegardé puisse être récupéré.

14. Le procédé selon la revendication 8, dans lequel des bandes pré-enregistrées ont une TID stockée dans la piste de commande, des bandes d'enregistrement ont une TID stockée dans l'intervalle d'effacement vertical, et l'étape de détermination comprend la lecture de l'intervalle d'effacement vertical pour déterminer si une TID est présente.

15. Le procédé selon la revendication 8, dans lequel des bandes pré-enregistrées ont une TID stockée dans la piste de commande, des bandes d'enregistrement ont une TID stockée dans l'intervalle d'effacement vertical, et l'étape de détermination comprend la lecture de l'intervalle d'effacement vertical pour déterminer si une TID est présente.

# FIG 1

FIG 2

EP 0 746 851 B1

1023 ⌇ LIBRARY

VOLUME 1   2   3

DIRECTORY

1010

| OPERATION FLAGS |        |
|-----------------|--------|
| VCR SPEED       | –1011  |
| TAPE LENGTH     | –1012  |
| FEATURE CONTROL | –1013  |
| RECORDING DENSITY | –1014 |
| LIBRARY ADDRESS | –1015  |
| VOLUME NUMBER   | –1016  |
| MESSAGE AREA    | –1017  |
| CURRENT DIRECTORY | –1018 |
| PLUS CODE LIST  | –1019  |
| CURRENT COUNTER VALUE | –1020 |

1024

CDTL BUFFER

CDTL 1

CDTL 2

1021
IN-USE
DIRECTORY

PROGRAM 1

PROGRAM 3

PROGRAM 2

1022

MESSAGES

# FIG 3

1021

| VOLUME NO. | 1050 |
| ADDRESS OF 1ST. ENTRY | 1051 |

| | 1041 |
| 1042 | PROGRAM NAME |
| 1043 | PROGRAM ADDRESS |
| 1044 | PROGRAM LENGTH |
| 1045 | PROGRAM TYPE | PROGRAM 1 |
| 1046 | PROGRAM AUDIENCE |
| 1047 | RECORDING SPEED |
| 1048 | NEXT ENTRY ADDRESS |

PROGRAM 2

| 1049 | CURRENT LOC |

# FIG 4

# FIG 5

FIG 6

# FIG 7

33

SRAM

21

VCR
CONTROL
LOGIC

INTERUPT

DATA I

DATA I/O

CLOCK FROM
MAIN CHIP

702

2/3 PIN MODE

EXTERNAL
LINK ENABLE
MSB/LSB
SELECT
I-LINK
(OPEN COLLECTOR)

701

FIG 8

# FIG 9

FIG 10A

4402 4401 4403     4402 4401 4403

FIG 10B

"0"       "1"

FIG 10C

FIG 10D

FIG 10E

EP 0 746 851 B1

# FIG 10F

# FIG 10G

EP 0 746 851 B1

FIG 10H

TO FIG.10G

+5V

10P    12MHz   10P

10K

47UF

4413

ASTB

ASC
[0..9]

μP

P3

+15V
-15V
+5V
GND

1
2
3
4

AVDD
AVREF1
AVREF2
AVREF3

SOUF
SCLR
SIN

CTL PULSE

P3
1
2
3
4
5
6

+5V

0.1UF

78P238L0

FIG 101

EP 0 746 851 B1

# FIG 11

DIRECTORY FORMAT

9100

| 9101 | 9102 | 9103 | 9104 | 9105 | | 9106 | 9107 | 9108 |
|---|---|---|---|---|---|---|---|---|
| START CODE | TYPE CODE | NUMBER OF TITLES | 1ST. PROGRAM ENTRY | 2ND. PROGRAM ENTRY | | NTH. PROGRAM ENTRY | END CODE | CHECKSUM |
| NUMBER OF BYTES | | | | | | | | |
| 1 | 1 | 2 | 37 | 37 | | 37 | 1 | 1 |

# FIG 12

9120 TID

| 9121 | 9122 | 9123 | 9124 | 9125 |
|---|---|---|---|---|
| START CODE | TYPE CODE | TAPE ID | END CODE | CHECKSUM |
| NUMBER OF BYTES | | | | |
| 1 | 1 | 8 | 1 | 1 |

EP 0 746 851 B1

# FIG 13

D(N) PACKET ON THE VBI

2601

| START CODE | TYPE | N | START ADDRESS | STOP ADDRESS | RECORD SPEED | PC | PC EXTENSION | VERSION | LANGUAGE | TITLE TEXT | EXPAND | STOP CODE | CHECKSUM |
|------------|------|---|---------------|--------------|--------------|----|----|----|----|----|----|----|----|

NUMBER OF BYTES: 1 · 1 · 2 · 3 · 3 · 1 · 1 · 1 · · · m · n · 1 · 2

# FIG 14

D(0) PACKET FOR TAPE TITLE

2602

| START CODE | TYPE | N | LENGTH | RESERVE | REEL DIAMETER | RESERVED | VERSION | LANGUAGE | TITLE TEXT | EXPAND | STOP CODE | CHECKSUM |
|------------|------|---|--------|---------|---------------|----------|---------|----------|------------|--------|-----------|----------|

NUMBER OF BYTES: 1 · 1 · 2 · 3 · 3 · 2 · 1 · 1 · 1 · m · n · 1 · 2

EP 0 746 851 B1

## FIG 15

TP PACKET ON VBI

2603

| START CODE | TYPE | TID | RESERVED | N | STOP CODE | CHECKSUM |
|---|---|---|---|---|---|---|

NUMBER OF BYTES

| 1 | 1 | 10 | 1 | 2 | 1 | 1 |

## FIG 16

HR TAPE

2604

| 0 | 0 | 0 | 0 | MACHINE ID | TAPE NUMBER |
|---|---|---|---|---|---|

BIT 39 38 37 31 30 15 0

## FIG 17

PR TAPE

2605

| 1 | UPC |
|---|---|

39 38 0

EP 0 746 851 B1

# FIG 18

# FIG 19

READY — 9200

RECORD — 9201
NO
YES

READ PID FROM VBI L21 P2 — 9202

WRITE PN, TITLE, TAPE SPEED, LENGTH, PROGRAM CATEGORY IN SRAM FOR THIS RECORDING. (IF NO TITLE, PUT IN CHANNEL-DATE-TIME STAMP) WRITE VISS ON CT — 9203'

WRITE, PN AS TP PACKET ON VBI L19 — 9204'

STOP ? — 9206
YES
NO

EJECT ? — 9207
NO
YES

NEW TAPE ? — 9209
YES
NO

DISPLAY TAPE # ON SCREEN — 9211

EJECT — 9212

47

# FIG 20

USER INSERTS TAPE REWIND TO BOT — 9220

↓

USER PRESSES INDEX BUTTON AND SELECT RETRO-INDEXING — 9221

↓

TID, ADD WRITTEN ON CT — 9222

↓

SCREEN PROMPTS USER TO ENTER TITLE OF SHOW AND PUSH ENTER OR PUSH BUTTON X TO INDICATE EOT — 9223

↓

ENTER PUSHED ? — 9224

YES → SCREEN PROMPTS USER TO OFF TO BEGINNING OF NEXT PROGRAM AND PUSH BUTTON X — 9226

↑ TAPE DISTANCE TRAVELLED MEASURED BY COUNTING CT PULSES AND TAKE-UP SPOOL SPINDLE COUNTS — 9227

NO ↓

BUTTON X PUSHED ? — 9228

NO →

VCR STORES ALL TITLES INTO SRAM, PROVIDES USER WITH TAPE NO. — 9229

→ USER EJECTS TAPE AND WRITES NO. ONTO CASSETTE — 9231

48

# FIG 21A

TAPE INSERTED — 9240

[A] PLAY N SEC. & READ CT FOR TID, ADD — 9241

STOP — 9242

INDEX PRESSED ? — 9243 → NO

YES

TID, ADD READ IN [A]? — 9244 → NO → TO FIG. 21B

YES

DETERMINE FROM TID IF IT IS (1),(2) OR (3)? — 9246

1 — 9247
2 — 9252
3 — 9256

RECOVER DIR FROM SRAM — 9248

IS TID IN SRAM ? — 9253 → YES

FF TO EOT — 9257

DISPLAY ON SCREEN — 9249

READ DIR FROM VBI — 9254 (NO)

READY — 9251

TYPES OF TAPES
1. HR
2 PR
3 HR LOANER
4 RI
5 RI LOANER
6 NI (NON-INDEXED)
7 BT (BLANK TAPE)

# FIG 21B

# FIG 22A

TAPE INSERTED —9240

[A'] → PLAY N SEC. & READ VBI FOR TID, PN ~9241'

STOP ~9242

INDEX PRESSED ? 9243

YES

TID, PN READ, IN [A']? 9244'

NO → TO FIG. 22 B

DETERMINE FROM TID IF IT IS HR OR PR 9246'

HR 9247

PR 9252

RECOVER DIR FROM SCRAM 9248

IS TID IN SRAM ? 9253

YES

NO

DISPLAY ON SCREEN 9249

READ DIR FROM VBI 9254

READY 9251

TYPES OF TAPES

HR
PR
RI
NI (NON-INDEXED)
BT (BLANK TAPE)

# FIG 22B

FIG 23

TAPE INSERTED

READ VOLUME LABEL — 4601

FOUND ?

NO → SEARCH TAPE FOR VOLUME LABEL — 4603

YES → USE VOLUME LABEL TO RETRIEVE DIRECTORY FROM LIBRARY — 4603

FOUND ?

NO → CREATE DIRECTORY IN LIBRARY — 4604

YES → NOTE TAPE POSITION WHERE LABEL IS FOUND — 4606

DISPLAY VOLUME LABEL ON SCREEN — 4605

EXIT

EXIT

USE LABEL TO RETRIEVE DIRECTORY — 4607

READ WHERE VOLUME LABEL SHOULD BE — 4608

EQUAL ? — 4611

NO → USE TEMPORARY DIRECTORY — 4609

YES → USE THIS DIRECTORY — 4610

EXIT

# FIG 24A

POWER ON

"NUMBER" KEY — 2720

NO := NO + KEYED VALUE DISPLAY NO. — 2721

INPUT ? — 2722

INPUT IS ANOTHER # KEY ? — 2723

YES

NO

MOVE TAPE TO PROGRAM WITH ENTERED NO. — 2724

PERFORMED ENTERED FUNCTION — 2725

EXIT

# FIG 24B

POWER ON

PLAY — 2731

TAPE MOVING? — 2732

YES

NO

RETRIEVE DIRECTORY INFORMATION — 2793

DISPLAY PROGRAM TITLE FOR n SECONDS — 2734

PLAY TAPE DISPLAY "PLAYING" FOR m SECONDS — 2735

EXIT

# FIG 24C

POWER ON

RECORD — 2741

REQUEST LENGTH OF RECORDING — 2742

INPUT ?

2743

"NUMBER"

ADD NUMBER

2744

"ENTER"

ENTERED NUMBER = φ

YES

"CANCEL"

2745

RETRIEVE PREVIOUS SCREEN

CHECK CURRENT TAPE POSITION AGAINST DIRECTORY

27410

EXIT

2746

27411

TAPE POSITIONED AT BLANK AND BLANKS LENGTH ≥ ENTERED LENGTH

27412

TAPE POSITIONED AT NON-BLANK SEGMENT

27413

TAPE POSITIONED AT BLANK BUT BLANKS LENGTH < ENTERED LENGTH

TO FIG. 24D

EP 0 746 851 B1

# FIG 24D

FROM FIG. 24C

27414
INITIATE
RECORDING
PROCEDURE

27415
DISPLAY
RECORDING
ON SCREEN

27416
READ PROGRAM
TITLE FROM VB,
AND DISPLAY
ON SCREEN

EXIT

FIND ALTERNATIVE
TAPE SEGMENT;
DISPLAY WARNING
SCREEN
27417

INPUT 27418

27419 RECORD

27422 NUMBER

27420 CANCEL

27423
MOVE TAPE
TO
RECORD

27421
DISPLAY
PREVIOUS
SCREEN

EXIT

57

# FIG 24E

POWER ON

2751

VCR PLUS+

2751G

CODE BUFFER FULL ?

YES

NO

2752

DISPLAY MESSAGE SCREEN

27517

DISPLAY WARNING SCREEN

EXIT

2753

INPUT

2754A

NUMBER

2756

ERASE

2755

ADD NUMBER

2757

ERASE INPUTED DIGITS

2755B

ENTER

2754

CANCEL

27515

DISPLAY PREVIOUS SCREEN

2759

INPUT A VALID PLUS CODE ?

NO

YES

EXIT

27510

DISPLAY PROMPT SCREEN

27516

CONFLICTING PLUS CODE ?

YES

NO

TO FIG 24F

# FIG 24 F

FROM FIG. 24E

NO PLUS CODE CONFLICT — 27511 → DISPLAY PROMPT SCREEN → 27512 INPUT = 1, 2, OR 3 → 27513 DISPLAY CONFIRMATION SCREEN → CANCEL → EXIT / ENTER → SAVE SETTING → EXIT

PLUS CODE CONFLICT — 27517 → DISPLAY WARNING SCREEN → 27518 INPUT → 27519 CANCEL → ERASE INPUT → STEP 2753

# FIG 24G

POWER ON

LIBRARY — 2771

DISPLAY LIBRARY SCREEN — 2772

OPTION 1    OPTION 3    OPTION 2

ADD VOLUME TO LIBRARY — 2773

2774 — ACCESS LIBRARY

EXIT    EXIT    EXIT

# FIG 24H

# FIG 241

# FIG 24J

```
                    ┌─────────┐
                    │ POWER   │
                    │  ON     │
                    └────┬────┘
                         ▼
              ┌─────────────────┐
              │    REVIEW       │────── 2761
              └────────┬────────┘
                       ▼
              ┌─────────────────┐
              │  READ PLUS      │────── 2762
              │  CODE BUFFER    │
              └────────┬────────┘
                       │
   ┌──────────┐        ▼
   │  27611   │──▶┌─────────────────┐
   └──────────┘   │    DISPLAY      │────── 2763
                  │   PLUSCODE      │
                  │   SETTINGS      │
                  └────────┬────────┘
                           ▼
                         ◇ ENHANCED ◇────── 2764
            NO    ◇  TAPE INSERTED  ◇
       ◀──────────◇        ?        ◇
       │           ◇                ◇
   ┌───▼────┐            YES
   │  EXIT  │             ▼
   └────────┘   ┌─────────────────────┐
               │ SEARCH DIRECTORY     │────── 2765
               │ THERE IS A BLANK     │
               │ SPACE FOR EACH       │
               │ PLUSCODE SETTING     │
               └────────┬────────────┘
                        ▼
               ┌─────────────────────┐
               │ UPDATE  SCREEN      │────── 2766
               │ BASED  UPON         │
               │ THE  SEARCH         │
               └────────┬────────────┘
                        ▼
   ┌────────────────────┤
   │            NO    ◇ INPUT ◇────── 2767
   └──────────────────◇   ?   ◇
                       ◇       ◇
                          YES
                           ▼
       ┌───────────────────┼───────────────────┐
       ▼                   ▼                    ▼
```

TO FIG. 24K

# FIG 24K

FROM FIG. 24J

NUMBER — 2768

SELECT NUMBERED ENTRY — 2769

ERASE — 27610

ERASE ENTRY — 27611

2763

REVIEW — 27612

EXIT

# FIG 24L

POWER ON

I ~2781

INITIATE VBI DECODING SET "I" FLAG ~2782

EXIT

VBI DECODER INTERRUPT ~2783

RECEIVE VBI DECODER OUTPUT DATA ~2784

SINCE "I" FLAG = "1"

CONTROL CODE = 01 ? TYPE CODE = OC — 2785

NO → EXIT

YES

CONVERT DATA INTO CDTL AND STORE IN CDTL BUFFER ~2786

EXIT

# FIG 24 M

```
      ┌──────────┐
      │ POWER ON │
      └────┬─────┘
           ↓
     ╱──────────╲
    │      E      │ ~2787
     ╲──────────╱
           ↓
  ┌───────────────────┐
  │ INITIATE  VBI     │ ~2788
  │ DECODING SET "E" FLAG│
  └─────────┬─────────┘
            ↓
        ┌───────┐
        │ EXIT  │
        └───────┘


  ┌───────────────────┐
  │   VBI DECODER     │ ~2789
  │   INTERRUPT       │
  └─────────┬─────────┘
            ↓
  ┌───────────────────┐
  │  RECEIVE  VBI     │ ~27810
  │ DECODER OUTPUT    │
  │     DATA          │
  └─────────┬─────────┘
        SINCE "E"FLAG = "1"
            ↓
                    27811
         ╱◇╲
        ╱CONTROL╲
   NO  ◇CODE = 01 ?◇
  ┌────╱TYPE CODE =╲
  ↓    ╲    0C    ╱
┌────┐   ╲◇╱
│EXIT│    ↓
└────┘  ┌───────────────┐
        │ STORE  DATA   │ ~27812
        │ INTO   RAM    │
        └───────┬───────┘
                ↓
            ┌───────┐
            │ EXIT  │
            └───────┘
```

66

# FIG 25A

1101

INDEX PLUS +

|  |  | MIN | MODE |
|---|---|---|---|
| 1 | STAR TREK PART 2 | 30 | SP |
| 2 | (BLANK) | 19 |  |
| 3 | JOHN'S GRADUATION | 36 | SP |
| 4 | 8:30 PM, DEC. 12, 1992 | 18 | LP |
| 5 | (END) | 24 |  |

SPEED: SP
COMMAND:

# FIG 25B

```
INDEX PLUS +

                                          MIN

1  STAR TREK                               30
2  RODEO                                   17
3  BEYOND  2000                            26
4  CHIP AND DALE                           18
5  (END)                                   24

MOVING TO 4

COMMAND: 4 RECORD
```

# FIG 25C

INDEX PLUS +

|  |  | MIN |
|---|---|---|
| →1 | STAR TREK | 30 |
| 2 | RODEO | 17 |
| 3 | BEYOND 2000 | 26 |
| 4 | CHIP AND DALE | 18 |
| 5 | (END) | 24 |

→ → → PROGRAM 03

COMMAND : 3 PLAY

# FIG 25D

ENTER LENGTH IN MINUTES

PRESS [ENTER] TO RECORD
OR [CANCEL] TO QUIT

# FIG 25E

WARNING !!!

RECORDING WILL OVERWRITE THE
FOLLOWING PROGRAMS:
         CHIP AND DALE



PRESS [5] TO RECORD AS PROGRAM#5
OR [CANCEL] TO EXIT
OR [RECORD] TO OVERWRITE

## FIG 25 F

INDEX PLUS +

MIN

| 1 | STAR TREK PART 2 | 30 |
| 2 | (BLANK) | 19 |
| 3 | BEYOND 2000 | 26 |
| 4 | (BLANK) | 120 |
| 5 | CHIP AND DALE | 18 |
| 6 | (END) | 24 |

## FIG 25 G

INDEX PLUS +

PLEASE ENTER PLUS CODE[TM] NUMBER
OF DESIRED PROGRAM

- - - - - - - - - - - - - - - - -

PRESS [CANCEL] TO EXIT
[ENTER] TO SAVE
[ERASE] TO ERASE INPUT

# FIG 25H

INDEX PLUS +

INPUT IS AN INVALID PLUS CODE $^{TM}$ NUMBER
PLEASE CHECK LISTING AND RE-ENTER
— — — — — — — — — — — — — — — — — —

PRESS [CANCEL] TO EXIT
[ENTER] TO SAVE
[ERASE] TO ERASE INPUT

# FIG 25 I

INDEX PLUS +

PLUS CODE $^{TM}$ NUMBER SAVED

PRESS [1] FOR RECORDING ONCE ONLY
[2] FOR RECORDING WEEKLY
[3] FOR RECORDING EVERY WEEKDAY

EP 0 746 851 B1

## FIG 25 J

INDEX

PLUS CODE™ NUMBER BUFFER FULL
CANNOT PERFORM VCR PLUS+™
PROGRAMMING

PRESS [CANCEL] TO EXIT
    [REVIEW] TO REVIEW PLUS CODE
        BUFFER

## FIG 25K

PROGRAM TO RECORD

| # | CH | DATE | TIME | LEN | ST |
|---|----|------|------|-----|----|
| 1 | 3 | 12-01 | 3:00 | 5 | OK |
| 2 | 2 | 12-03D | 2:00 | 10 | OK |
| 3 | 5 | 12-04 | 19:00 | 15 | OK |
| 4 | 3 | 12-05 | 18:00 | 20 | OK |

TO ERASE A PROGRAM:
PRESS PROG # AND [ERASE]

# FIG 25 M

INDEX

MIN

→ 1    STAR TREK                30

2    RODEO                    17

3    BEYOND 2000              26

4    CHIP AND DALE            18

5    (END)                    24

COMMAND : 2 ERASE

# FIG 25 N

WARNING !!!

DO YOU REALLY WANT TO

ERASE PROGRAM # 02 ?

PRESS [ENTER] TO ERASE
OR [CANCEL] TO EXIT

# FIG 25L

INDEX

WARNING: THE PROGRAM YOU JUST SET
CONFLICTS WITH PREVIOUSLY SET
PROGRAM

|  | CH | DATE | START | STOP |
|---|---|---|---|---|
| PREVIOUS | 4 | 12-01 | 12:00 | 14:00 |
| NEW | 5 | 12-01 | 13:00 | 15:30 |

PRESS [CANCEL] TO CANCEL
[REVIEW] TO REVIEW PLUS CODES

# FIG 25O

INDEX

LIBRARY OPTIONS

1. ADD TAPE VOLUME TO LIBRARY

2. ACCESS LIBRARY

3. CANCEL

PRESS SELECTION AND [ENTER]

# FIG 25P

INDEX

ACCESS LIBRARY OPTIONS

1. SEARCH PROGRAMS BY PROGRAM TITLES
2. SEARCH PROGRAMS BY PROGRAM TYPES
3. DISPLAY A TAPE DIRECTORY

PRESS NUMBER OF OPTIONS AND
[ENTER] TO CONTINUE A PREVIOUS SEARCH
PRESS "C" BEFORE SELECTING AN
OPTION.

FIG 26 A

RECORDING PROCEDURE

NOTE TAPE ADDRESS — 3000

INITIATE VBI DECODER TO DECODE LINE 21, FIELD 2 — 3001

SET VCR TO RECORD — 3002

RECEIVE OUTPUT FROM VBI DECODER — 3003

VBI CONTROL CODE TYPE CODE =? — 3004

CONTROL CODE=01 TYPE CODE=03

CONTROL CODE=01 TYPE CODE=04

CONTROL CODE=07 TYPE CODE=01

CONTROL CODE=01 ----TYPE CODE=5

PUT VBI OUTPUT INTO "PROGRAM TITLE" OF DIRECTORY — 3005

PUT VBI OUTPUT INTO "PROGRAM TYPE OF DIRECTORY — 3006

SAVE TIME OF DAY — 3007

PUT VBI OUTPUT INTO PROGRAM AUDIENCE OF DIRECTORY — 3008

"PROGRAM TITLE"=BLANK ? — 3009

NO

YES

STORE TIME OF DAY INTO "PROGRAM TITLE" — 3010

EXIT

# FIG 26B

VBI DECODE PROCEDURE
LINE #, FIELD #,
CONTROL #, TYPE #

SET VBI DECODER
AT LINE #,
FIELD # — 3101

EXIT

VBI
DECODER
INTERCEPT — 3102

READ DECODER
VALUE — 3103

EXIT

# FIG 26C

END OF RECORDING INTERRUPT — 30011

NOTE CURRENT TAPE COUNTER VALUE CALCULATE RECORDING LENGTH — 30012

UPDATE DIRECTORY — 30013

UPDATE LIBRARY — 30014

EXIT

FIG 27A

```
        INDEX


    ┌────────────────────────┐
    │     NEW TAPE           │
    └────────────────────────┘
       RETRO-INDEXING



HIGHLIGHT SELECTION
PRESS [ENTER]
```

THIS IS A NEW BLANK TAPE
ENTER LENGTH OF TAPE

_ _ _ MINS

[ENTER] TO CONFIRM
[CANCEL] TO START OVER

FIG 27B

## FIG 27C

THE CURRENT TAPE INDEX
INFORMATION HAS BEEN
ADDED TO THE LIBRARY


PLEASE EJECT THE TAPE
NOW AND LABEL THIS TAPE
AS NUMBER 8

# FIG 27 D

## PROGRAM TO RECORD

| CH | DATE | TIME | MIN | ST |
|---|---|---|---|---|
| 4 | 2/13 | 9:00 | 60 | OK |
| 2 | 2/17 | 18:00 | 30 | OK |
| 5 | 2/20 | 20:00 | 60 | NO |
| 11 | 2/20 | 19:30 | 30 | |

TO ERASE:

HIGHLIGHT SELECTION

PRESS [ERASE]

FIG 27E

EP 0 746 851 B1

# FIG 27 F

ENTER LENGTH OF PROGRAM
TO RECORD

— — — MINS

[ENTER] TO CONFIRM
[CANCEL] TO START OVER

# FIG 27 G

INDEX          TAPE NO. 8

TITLE                          MIN

WHEEL OF FORTUNE                30

ENTERTAINMENT TONITE            30

MURPHY BROWN                    30

TERMINATOR                      90

END                             60

HIGHLIGHT SELECTION

MURPHY BROWN 90M
SAT 1/30 CH2

FIG 27 H

EP 0 746 851 B1

INDEX          TAPE NO. 8

TITLE                          MIN

WHEEL OF FORTUNE                30

→ ENTERTAINMENT TONITE         30

MURPHY BROWN                    30

TERMINATOR                      90

END                            60

HIGHLIGHT SELECTION ✦

FIG 27I

# FIG 27 J

WARNING !

DO YOU REALLY WANT TO
ERASE

MURPHY BROWN?

[ENTER] TO ERASE
[CANCEL] TO EXIT

INDEX          TAPE NO. 8

| TITLE | MIN |
|---|---|
| WHEEL OF FORTUNE | 30 |
| → ENTERTAINMENT TONITE | 30 |
| MURPHY BROWN | 30 |
| TERMINATOR | 90 |
| END | 60 |

HIGHLIGHT SELECTION

FIG 27K

EP 0 746 851 B1

## FIG 27L

EDIT PROGRAM TITLE

TERMINATOR

T2 - - - - - - - - - - - - - - - -

[ENTER] TO CONFIRM
[CANCEL] TO CANCEL
CHANGES

# FIG 27 M

INDEX    LIBRARY

SEARCH
REGISTRATION
DOWNLOAD
BACKUP
INITIALIZE TAPE

HIGHLIGHT SELECTION
PRESS [ENTER]

# FIG 27 N

SEARCH BY

TAPE LIST

PROGRAM LIST

CATEGORY

HIGHLIGHT SELECTION

PRESS [ENTER]

ENTER THE FIRST LETTER
OF PROGRAM TITLE

—

[ENTER] TO CONFIRM

FIG 270

| TITLE | TAPE NO. |
|---|---|
| TARZAN | 12 |
| TERMINATOR | 8 |
| THELMA & LOUISE | 46 |
| TWO OF A KIND | 77 |
| UNIVERSAL SOLDIER | 98 |
| WHAT ABOUT BOB | 46 |
| WILD ORCHID | 23 |
| YOUNG EINSTEIN | 49 |

USE PG▲ PG▼ TO REVIEW
MORE TITLES

FIG 27P

EP 0 746 851 B1

# FIG 27Q

SEARCH BY

TAPE LIST

PROGRAM LIST

CATEGORY

HIGHLIGHT SELECTION

PRESS [ENTER]

# FIG 27R

ENTER TAPE NO.

 — —

[ENTER] TO CONFIRM
[CANCEL] TO START OVER

INDEX         TAPE NO. 8

| TITLE | MIN |
|-------|-----|
| WHEEL OF FORTUNE | 30 |
| ENTERTAINMENT TONITE | 30 |
| MURPHY BROWN | 30 |
| TERMINATOR | 90 |
| END | 60 |

FIG 27S

EP 0 746 851 B1

**FIG 27T**

SEARCH BY

TAPE LIST
PROGRAM LIST
CATEGORY

HIGHLIGHT SELECTION
PRESS [ENTER]

# FIG 27 U

SEARCH BY CATEGORY

EDUCATION
GAMES
MOVIE
MUSIC
NEWS/DOCUMENTARY

RELIGION
SOAP OPERA
SPORTS
GENERAL

HIGHLIGHT SELECTION
PRESS [ENTER]

# FIG 27 V

## FOOTBALL

| PROGRAM TITLE | TAPE # |
|---|---|
| BEARS VS. 49ERS 12/29 | 17 |
| BEARS VS. RAIDERS 1/3 | 76 |
| EAGLES VS. CHARGERS 11/11 | 9 |
| RAIDERS VS. COWBOYS 10/3 | 67 |
| RAIDERS VS. JETS 10/10 | 23 |

USE PG▲ PG▼ TO REVIEW
MORE TITLES

FIG 27 W

EP 0 746 851 B1

FIG 27X

```
 INDEX          LIBRARY



 SEARCH
┌──────────────────────────────────┐
│ REGISTRATION                     │
└──────────────────────────────────┘
 DOWNLOAD
 BACKUP
 INITIALIZE TAPE


 HIGHLIGHT SELECTION
 PRESS [ENTER]
```

# FIG 27 Y

LIBRARY REGISTRATION

ADD

DELETE

CHANGE

HIGHLIGHT SELECTION

PRESS [ENTER]

EP 0 746 851 B1

ENTER TAPE NO. TO BE
DELETED FROM LIBRARY

- - -

FIG 27Z

FIG 27A'

```
┌─────────────────────────────────────────┐
│  ┌─────────────────────────────────────┐ │
│  │            WARNING !                │ │
│  └─────────────────────────────────────┘ │
│       TAPE 8 WILL BE DELETED.            │
│          ARE YOU SURE?                   │
│                                          │
│                                          │
│      TITLE                    MIN        │
│      ─────────────────────    ───        │
│      WHEEL OF FORTUNE          30        │
│      ENTERTAINMENT TONITE      30        │
│      MURPHY BROWN              30        │
│      TERMINATOR                90        │
│      END                       60        │
│   [ENTER] TO ERASE                       │
│                                          │
│   [CANCEL] TO EXIT                       │
└─────────────────────────────────────────┘
```

EP 0 746 851 B1

INDEX          LIBRARY


SEARCH

REGISTRATION

DOWNLOAD

BACKUP

INITIALIZE TAPE


HIGHLIGHT SELECTION

PRESS [ENTER]

FIG 27B'

# FIG 27C'

... DOWNLOADING DIRECTORY
ONTO TAPE

100%

30%
DONE

PLEASE WAIT ...

DOWNLOADING COMPLETED

PLEASE EJECT THE TAPE
NOW

FIG 27D'

## FIG 27 E'

INDEX          LIBRARY

SEARCH
REGISTRATION
DOWNLOAD
BACKUP
INITIALIZE TAPE

HIGHLIGHT SELECTION
PRESS [ENTER]

FIG 27 F'

LIBRARY REGISTRATION

ADD

DELETE

CHANGE


HIGHLIGHT SELECTION

PRESS [ENTER]

## FIG 27 G'

LIBRARY

INDEX

SEARCH
REGISTRATION
DOWNLOAD
BACKUP
INITIALIZE TAPE

HIGHLIGHT SELECTION
PRESS [ENTER]

# FIG 27H'

LIBRARY REGISTRATION

ADD

DELETE

CHANGE

HIGHLIGHT SELECTION

PRESS [ENTER]

CHANGE TAPE #

FROM                    _ _ _
TO                      _ _ _


[ENTER] TO CONFIRM
[CANCEL] TO START OVER

EP 0 746 851 B1

FIG 27 I'

EP 0 746 851 B1

FIG 27J'

NO. 18 IS ALREADY
TAKEN. PLEASE CHOOSE
ANOTHER NUMBER

FROM          _ _ <u>8</u>
TO            _ _ _

[ENTER] TO CONFIRM
[CANCEL] TO START OVER

EP 0 746 851 B1

FIG 27K'

SELECT THE TAPE CATEGORY


NON-INDEXED TAPE
INDEX            TAPE
BLANK TAPE


HIGHLIGHT SELECTION
PRESS [ENTER]

# FIG 27 L'

FIG 28 A

FIG 28B

FIG 28C

FIG 28D

EP 0 746 851 B1

FIG 29